# EUROPEAN PATENT APPLICATION

(11) **EP 4 422 236 A1**
(43) Date of publication of application: **28.08.2024**
(21) Application number: 23746133.0
(22) Date of filing: 17.01.2023
(51) Int. Cl.: H04W 12/041

(54) **COMMUNICATION METHOD AND APPARATUS**

(30) Priority: 30.01.2022 CN 202210114688
(71) Applicant: Huawei Technologies Co., Ltd., Shenzhen, Guangdong 518129 (CN)
(72) Inventor: WU, Yizhuang, Shenzhen, Guangdong 518129 (CN); LEI, Ao, Shenzhen, Guangdong 518129 (CN); LI, He, Shenzhen, Guangdong 518129 (CN)
(74) Representative: Körber, Martin Hans
(86) International application number: PCT/CN2023/072627
(87) International publication number: WO 2023/143251

(57) **Abstract**

This application provides a communication method and apparatus, and relates to the communication field, to ensure proximity based service relay communication security. In the method, proximity based service authentication information #1 provided by a data management network element is used, so that a remote terminal and a network may authenticate each other and generate a proximity based service key used for communication between the remote terminal and a relay terminal. Further, the remote terminal device and the relay terminal device derive a communication protection key for a PC5 connection (namely, a connection between the remote terminal and the relay terminal) based on the proximity based service key, which may include at least one of an encryption key and an integrity protection key, so that proximity based service relay communication security is ensured, and a case such as user information leakage caused by an attack is avoided.

## Description

This application claims priority to Chinese Patent Application No. 202210114688.0, filed with the China National Intellectual Property Administration on January 30, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a communication system, if user equipment (user equipment, UE) 1 is located outside network coverage, or has a poor communication signal with an access network (radio access network, RAN) device, or requires another UE to assist in data transmission, the UE 1 may obtain a service from a network side with assistance of another UE (for example, UE 2). For example, a proximity based service communication 5 (ProSe communication 5, PC5) interface connection is established between the UE 1 and the UE 2 on an air interface, to implement communication with the network side through the PC5 connection. In this case, the UE 1 may be considered as proximity based service (proximity based service, ProSe) remote (remote) UE, or briefly referred to as remote UE. The UE 2 may be considered as a proximity based service UE-to-network relay (ProSe UE-to-network relay), or briefly referred to as relay LTE. Communication between the remote UE and the network side via the relay UE may be considered as ProSe relay communication.

However, the ProSe relay communication has a security risk, and is vulnerable to an attack, resulting in user information leakage.

### SUMMARY

Embodiments of this application provide a communication method and apparatus, to ensure ProSe relay communication security, and avoid a case such as user information leakage caused by an attack.

To achieve the foregoing objective, the following technical solutions are used in this application.

According to a first aspect, a communication method is provided. The communication method includes: An authentication service network element sends an authentication request message #1 to a data management network element, and receives an authentication response message #1 from the data management network element. The authentication request message #1 is used to request to authenticate a remote terminal, the authentication response message #1 includes proximity based service ProSe authentication information #1, and the ProSe authentication information #1 includes at least one of the following: information used by the remote terminal to authenticate a network or information used to authenticate the remote terminal. The authentication service network element receives an authentication request message #2 from an access and mobility management network element when the remote terminal successfully authenticates the network, where the authentication request message #2 is used to request to authenticate the remote terminal. In this way, when the remote terminal is successfully authenticated, for example, the authentication service network element successfully authenticates the remote terminal, or both the authentication service network element and the access and mobility management network element successfully authenticate the remote terminal, the authentication service network element sends the authentication response message #2 to the access and mobility management network element. The authentication request message #2 is used to request to authenticate the remote terminal; and the authentication response message #2 includes a ProSe key, and the ProSe key is used for communication between the relay terminal and the remote terminal.

It can be learned from the method according to the first aspect that the remote terminal and the network may authenticate each other by using the ProSe authentication information #1 provided by the data management network element. When successfully authenticating each other, the two may generate the ProSe key used for the communication between the remote UE and the relay UE, to derive a communication protection key for a PC5 connection (namely, a connection between the remote UE and the relay UE) based on the ProSe key, which, for example, includes an encryption key and an integrity protection key, so that ProSe relay communication security is ensured, and a case such as user information leakage caused by an attack is avoided.

Optionally, the remote terminal and the relay terminal may derive the communication protection key for the PC5 connection based on the ProSe key. For example, the remote terminal and the relay terminal may derive a session key based on the ProSe key, and the remote terminal and the relay terminal then further derive the communication protection key (for example, including the encryption key and the integrity protection key) based on the session key. This is not limited in this application.

In a possible design solution, the ProSe authentication information #1 may be at least one of the following: a ProSe authentication vector #1 for authentication and key agreement AKA or a ProSe authentication vector for extensible authentication protocol EAP-AKA'. In other words, the authentication between the remote UE and the network may be implemented based on an existing authentication method, for example, enhanced 5G AKA or EAP-AKA', to ensure ProSe relay communication security without introducing a new authentication method.

Optionally, the ProSe authentication vector #1 for AKA or the ProSe authentication vector for EAP-AKA' may include at least one of the following: the information used by the remote terminal to authenticate the network, information used by the authentication service network element to authenticate the remote terminal, or information used to determine the ProSe key. It can be learned that the authentication vector may be used not only for the authentication between the remote UE and the network, but also for determining the ProSe key. In this way, when determining that the authentication succeeds, an AUSF network element may derive the ProSe key based on the authentication vector without additional obtaining, to improve authentication efficiency and key derivation efficiency.

Optionally, before that an authentication service network element sends an authentication request message #1 to a data management network element, the method according to the first aspect may further include: The authentication service network element receives an authentication request message #3 from the access and mobility management network element. Correspondingly, after that the authentication service network element receives an authentication response message #1 from the data management network element, and before that the authentication service network element receives an authentication request message #2 from an access and mobility management network element, the method according to the first aspect may further include: The authentication service network element sends an authentication response message #3 to the access and mobility management network element. The authentication response message #3 may include ProSe authentication information #2, and the ProSe authentication information #2 includes the information used by the remote terminal to authenticate the network. Optionally, the ProSe authentication information #2 may further include information used by the network to authenticate the remote terminal. In other words, ProSe relay communication authentication may be triggered by the access and mobility management network element, for example, may be triggered when a service has a requirement, so that the authentication service network element can targetedly perform authentication, to ensure authentication validity.

Further, the ProSe authentication information #2 may be determined based on the ProSe authentication information #1. The ProSe authentication information #2 may be at least one of the following: a ProSe authentication vector #2 for AKA, or an EAP-request message or an AKA'-challenge message. For example, if an enhanced AKA authentication mechanism is used, the ProSe authentication vector #2 for AKA may be determined based on the ProSe authentication vector #1 for AKA, and no new function needs to be introduced, so that complexity of the network element is reduced. If an enhanced EAP-AKA' authentication mechanism is used, the EAP-request message or the AKA'-challenge message may be determined based on the ProSe authentication vector for EAP-AKA', and no new function needs to be introduced, so that complexity of the network element is reduced.

Further, the ProSe authentication vector #2 for AKA may include information used by the access and mobility management network element to authenticate the remote terminal. In this way, the ProSe authentication vector #2 for AKA may be further used by the access and mobility management network element to authenticate the remote terminal from a perspective of a serving network, so that authentication comprehensiveness can be improved, and ProSe relay communication security can be further ensured.

Optionally, the authentication request message #3 may be used to request to authenticate the remote terminal. For example, the authentication service network element is requested to authenticate the remote terminal, to trigger the authentication service network element to perform a ProSe communication authentication procedure, so that authentication reliability is ensured.

Further, the authentication request message #3 may include at least one of the following: a subscription concealed identifier SUCI of the remote terminal, a service network name, a relay service code RSC, a random value #1, or ProSe relay communication indication information. Any one of the service network name, the RSC, or the ProSe relay communication indication information may indicate that the authentication is the ProSe relay communication authentication, to trigger the authentication service network element to perform the ProSe communication authentication procedure, so that authentication correctness and reliability are ensured, and impact on an existing procedure is avoided. Any one of the service network name, the RSC, or the random value #1 may be used to determine a ProSe key, so that when determining that the authentication succeeds, the AUSF network element may directly derive the ProSe key based on these parameters without additional obtaining, thereby improving key derivation efficiency.

Further, before that the authentication service network element sends an authentication response message #2 to the access and mobility management network element, the method according to the first aspect may further include: If the authentication request message #3 includes the RSC and the random value #1, the authentication service network element stores the RSC and the random value #1, so that the RSC and the random value #1 can be directly used during subsequent key derivation, and do not need to be obtained again, thereby further improving key derivation efficiency.

Further, the information used to determine the ProSe key includes an intermediate key. Before that the authentication service network element sends an authentication response message #2 to the access and mobility management network element, the method according to the first aspect may further include: When the remote terminal is successfully authenticated, the authentication service network element determines the ProSe key based on at least one of the following: the service network name, the RSC, the random value #1, a random value #2, and the intermediate key. In other words, the authentication service network element may select an appropriate parameter based on requirements such as a service scenario and key isolation, to determine the ProSe key, so that more service scenarios are applicable. For example, the ProSe key is determined based on the RSC, the random value #1, the random value #2, and the intermediate key. Alternatively, the ProSe key is determined based on the service network name, the random value #1, the random value #2, and the intermediate key. The intermediate key may alternatively be determined based on the ProSe authentication vector.

In a possible design solution, the authentication request message #2 may include at least one of the following: authentication response information determined by the remote terminal, an RSC used to determine the ProSe key, or a random value #1 used to determine the ProSe key. The authentication response information is used to authenticate the remote terminal. In other words, only when determining that the remote terminal is successfully authenticated, the access and mobility management network element may send, to the authentication service network element, a parameter used to derive the ProSe key, for example, the RSC and/or the random value #1, so that the necessary parameter is provided as required, and information does not need to be prestored, thereby avoiding a waste of resources.

Optionally, the authentication response message #2 may include a random value #2. The random value #2 is used to determine the ProSe key, so that when determining that the authentication succeeds, the remote terminal may directly derive the ProSe key based on the random value #2, to ensure that different keys are derived for different ProSe communication of the remote UE, and implement key isolation.

Further, the authentication response message #2 may further include at least one of the following: a subscription concealed identifier SUPI of the remote terminal or an EAP success message. The EAP success message may indicate that the network successfully authenticates the remote terminal. The SUPI of the remote terminal may indicate that the relay terminal needs to report information about the remote UE to the network.

In a possible design solution, the authentication service network element skips deriving a key used for communication between the remote terminal and the network, to avoid generation of redundant information and a waste of resources.

Optionally, the authentication request message #1 may include at least one of the following: an SUCI of the remote terminal or ProSe relay communication indication information. The ProSe relay communication indication information indicates that the authentication is the ProSe relay communication authentication, to trigger the data management network element to select an authentication vector corresponding to ProSe relay communication, so that ProSe relay communication authentication reliability is ensured.

According to a second aspect, a communication method is provided. The communication method includes: An access and mobility management network element sends an authentication request message #3 to an authentication service network element, and receives an authentication response message #3 from the authentication service network element. The authentication response message #3 includes ProSe authentication information #2, and the ProSe authentication information #2 includes information used by a remote terminal to authenticate a network. Optionally, the ProSe authentication information #2 may further include information used by the network to authenticate the remote terminal. In this way, when the remote terminal successfully authenticates the network, the access and mobility management network element sends the authentication request message #2 to the authentication service network element, and when the remote terminal is successfully authenticated, receives the authentication response message #2 from the authentication service network element, to send the ProSe key to the relay terminal. The authentication request message #2 is used to request to authenticate the remote terminal. The authentication response message #2 includes a ProSe key, and the ProSe key is used for communication between the relay terminal and the remote terminal.

In a possible design solution, the ProSe authentication information #2 may be at least one of the following: a ProSe authentication vector #2 for AKA, or an EAP-request message or an AKA'-challenge message.

Optionally, the ProSe authentication vector #2 for AKA may include at least one of the following: the information used by the remote terminal to authenticate the network, or information used by the access and mobility management network element to authenticate the remote terminal.

Optionally, the EAP-request message or the AKA'-challenge message may include the information used by the remote terminal to authenticate the network.

In a possible design solution, after that an access and mobility management network element receives an authentication response message #3 from the authentication service network element, and before that the access and mobility management network element sends an authentication request message #2 to the authentication service network element, the method according to the second aspect may further include: The access and mobility management network element sends, to the relay terminal, the information used by the remote terminal to authenticate the network, and receives, from the relay terminal, authentication response information determined by the remote terminal, where the authentication response information is used to authenticate the remote terminal. The information used by the remote terminal to authenticate the network may indicate the relay terminal to forward authentication data for ProSe relay communication to the remote terminal, namely, the information used by the remote terminal to authenticate the network. This prevents the relay terminal from performing another operation, for example, autonomous authentication, and ensures ProSe relay communication authentication reliability.

In a possible design solution, before sending, to the relay terminal, the information used by the remote terminal to authenticate the network, the access and mobility management network element skips obtaining a key set identifier and an anti-degradation parameter. Alternatively, the access and mobility management network element skips generating a key set identifier and an anti-degrade parameter.

Optionally, the ProSe authentication information #2 may include the information used by the access and mobility management network element to authenticate the remote terminal, after that the access and mobility management network element receives a remote terminal authentication response message from the relay terminal, and before that the access and mobility management network element sends an authentication request message #2 to the authentication service network element, the method according to the second aspect may further include: The access and mobility management network element determines, based on the authentication response infomation determined by the remote terminal and the information used by the access and mobility management network element to authenticate the remote terminal, that the remote terminal is successfully authenticated.

Optionally, the information used by the remote terminal to authenticate the network and the authentication response information determined by the remote terminal are information protected by using a communication key, and the communication key is used for communication between the relay terminal and the network, to ensure communication security between the relay terminal and the network. For example, the communication key is a non-access stratum security key established between the relay terminal and the access and mobility management network element, and the non-access stratum security key may include an encryption key and an integrity protection key.

Optionally, the authentication request message #2 may include at least one of the following: authentication response information determined by the remote terminal, an RSC used to determine the ProSe key, or a random value #1 used to determine the ProSe key. The authentication response information is used to authenticate the remote terminal.

Optionally, the authentication response message #2 may include a random value #2, and the random value #2 is used to determine the ProSe key.

Further, the authentication response message #2 may further include at least one of the following: an SUPI of the remote terminal or an EAP success message.

Further, after that the access and mobility management network element receives an authentication response message #2 from the authentication service network element, the method according to the second aspect may further include: The access and mobility management network element sends the random value #2 to the relay terminal. In other words, only after the network successfully authenticates the remote terminal, the access and mobility management network element may send, to the remote terminal, a parameter used to derive the ProSe key, namely, the random value #2, so that the necessary parameter is provided as required, information does not need to be prestored, and a waste of resources is avoided.

In a possible design solution, before that an access and mobility management network element sends an authentication request message #3 to an authentication service network element, the method according to the second aspect may further include: The access and mobility management network element determines that the remote terminal has not been authenticated or there is no key (for example, K_{AUSF}) used to derive the ProSe key. In other words, a ProSe relay communication authentication procedure is performed only when the remote terminal has not performed authentication or there is no key used to derive the ProSe key, so that a waste of resources caused by repeatedly performing the authentication procedure is avoided. Certainly, when the remote terminal has not been authenticated, the ProSe key may be derived by using an existing key (for example, K_{AUSF}) on the authentication service network element, and ProSe relay communication authentication does not need to be performed again.

Optionally, that the access and mobility management network element determines that the remote terminal has not been authenticated or there is no key used to derive the ProSe key may include: The access and mobility management network element receives remote terminal indication information from the relay terminal, where the remote terminal indication information indicates that the remote terminal has not performed authentication or there is no key used to derive the ProSe key. The access and mobility management network element determines, based on the remote terminal indication information, that ProSe relay communication authentication has not been performed on the remote terminal.

Optionally, that the access and mobility management network element determines that the remote terminal has not been authenticated or there is no key used to derive the ProSe key may include: The access and mobility management network element sends an authentication service network element get request message to the data management network element, and receives an authentication service network element get response message from the data management network element. The authentication service network element get request message is used to request an identifier of the authentication service network element, and the authentication service network element is used for ProSe relay communication authentication performed on the remote terminal. If the authentication service network element get response message does not carry the identifier of the authentication service network element, it indicates that the remote terminal has not been authenticated or there is no key used to derive the ProSe key. The access and mobility management network element determines, based on the authentication service network element get response message, that the remote terminal has not been authenticated or there is no key used to derive the ProSe key.

It can be learned that when the remote terminal indicates whether the remote terminal has performed authentication or there is no key used to derive the ProSe key, the access and mobility management network element may determine, based on the remote terminal indication information without interacting with another network element, whether ProSe relay communication authentication is performed. Alternatively, the remote terminal may not indicate whether the remote terminal has performed ProSe relay communication authentication, and this is determined by the access and mobility management network element based on the information fed back by the data management network element. In this way, communication overheads between the remote terminal and the access and mobility management network element can be reduced, and communication efficiency can be improved.

In addition, for other technical effects in the method according to the second aspect, refer to technical effects in the method according to the first aspect. Details are not described again.

According to a third aspect, a communication method is provided. The communication method includes: A data management network element receives an authentication request message #1 from an authentication service network element, and sends an authentication response message #1 to the authentication service network element. The authentication response message #1 includes ProSe authentication information #1. The ProSe authentication information #1 includes at least one of the following: information used by the remote terminal to authenticate a network, or information used to authenticate the remote terminal.

In a possible design solution, the ProSe authentication information #1 may be at least one of the following: a ProSe authentication vector #1 for AKA or a ProSe authentication vector for EAP-AKA'.

Optionally, the ProSe authentication vector #1 for AKA or the ProSe authentication vector for EAP-AKA' may include at least one of the following: the information used by the remote terminal to authenticate the network, information used by the authentication service network element to authenticate the remote terminal, or information used to determine a ProSe key.

Optionally, before that a data management network element receives an authentication request message #1 from an authentication service network element, the method according to the third aspect may further include: The data management network element receives an authentication service network element get request message from an access and mobility management network element, and sends an authentication service network element get response message to the access and mobility management network element. The authentication service network element get request message is used to request an identifier of the authentication service network element, and the authentication service network element is used for ProSe relay communication authentication performed on the remote terminal. If the authentication service network element get response message does not carry the identifier of the authentication service network element, it indicates that ProSe relay communication authentication has not been performed on the remote terminal.

In a possible design solution, before that a data management network element sends an authentication response message #1 to the authentication service network element, the method according to the third aspect may further include: The data management network element determines that the remote terminal is authorized to obtain a relay service. In other words, ProSe relay communication authentication is performed on the remote terminal only when it is determined that the remote terminal has a permission to perform relay communication. This avoids invalid authentication.

In a possible design solution, before that a data management network element sends an authentication response message #1 to the authentication service network element, the method according to the third aspect may further include: The data management network element determines ProSe authentication information #1 based on the authentication request message #1.

In a possible design solution, before that a data management network element sends an authentication response message #1 to the authentication service network element, the method according to the third aspect may further include: The data management network element determines that the remote terminal has not been authenticated, or determines that there is no key used to derive the ProSe key, or determines that there is no AUSF network element serving the remote terminal. In other words, a ProSe relay communication authentication procedure is performed only when the remote terminal has not performed authentication, or there is no key used to derive the ProSe key, or there is no AUSF network element serving the remote terminal. This avoids a waste of resources caused by repeatedly performing the authentication procedure. Certainly, when the remote terminal has been authenticated, the data management network element may request the authentication service network element to use an existing key (for example, K_{AUSF}) to derive the ProSe key, and ProSe relay communication authentication does not need to be performed again.

In addition, for other technical effects in the method according to the third aspect, refer to the technical effects in the method according to the first aspect or the second aspect. Details are not described herein again.

According to a fourth aspect, a communication method is provided. The communication method includes: A relay terminal receives, from an access and mobility management network element, information used by a remote terminal to authenticate a network, and sends, to the access and mobility management network element, an authentication response information determined by the remote terminal. The authentication response information determined by the remote terminal is used to authenticate the remote terminal. In this way, the relay terminal receives a ProSe key from the access and mobility management network element, where the ProSe key is used for communication between the relay terminal and the remote terminal.

In a possible design solution, the information used by the remote terminal to authenticate the network and the authentication response information determined by the remote terminal are information protected by using a communication key, and the communication key is used for communication between the relay terminal and the network. For example, the communication key is a non-access stratum security key established between the relay terminal and the access and mobility management network element, and the non-access stratum security key may include an encryption key and an integrity protection key.

In a possible design solution, after that a relay terminal receives, from an access and mobility management network element, information used by a remote terminal to authenticate a network, and before that a relay terminal sends, to the access and mobility management network element, authentication response information determined by the remote terminal, the method according to the fourth aspect may further include: The relay terminal sends, to the remote terminal, the information used by the remote terminal to authenticate the network, and receives, from the remote terminal, the authentication response information determined by the remote terminal. In other words, the relay terminal may actively interact with the remote terminal, to ensure that the remote terminal can authenticate the network, and feed back the authentication response information from the remote terminal to the network, to ensure that the network can also authenticate the remote terminal.

Optionally, the information used by the remote terminal to authenticate the network is carried in a message, and a name of the message or carried indication information may indicate that the remote terminal needs to perform a ProSe relay communication authentication procedure or indicate to request to authenticate the remote LTE. In this way, that the relay terminal sends, to the remote terminal, the information used by the remote terminal to authenticate the network may include: The relay terminal sends, to the remote terminal based on the message, the information used by the remote terminal to authenticate the network, to ensure ProSe relay communication authentication reliability. For example, the relay terminal sends, to the remote terminal based on the name of the message or the indication information included in the message, the information used by the remote terminal to authenticate the network.

In a possible design solution, after that the relay terminal sends a ProSe communication authentication response message to the access and mobility management network element, the method according to the fourth aspect may further include: The relay terminal receives a random value #2 from the access and mobility management network element, and sends the random value #2 to the remote terminal. The random value #2 is used to determine the ProSe key.

In addition, for other technical effects in the method according to the fourth aspect, refer to the technical effects in the method according to the first aspect or the second aspect. Details are not described herein again.

According to a fifth aspect, a communication method is provided. The communication method includes: A remote terminal receives, from a relay terminal, information used by the remote terminal to authenticate a network. In this way, when determining that the network is successfully authenticated, the remote terminal sends, to the relay terminal, authentication response information determined by the remote terminal, where the authentication response information is used to authenticate the remote terminal.

In a possible design solution, after that the remote terminal sends, to the relay terminal, authentication response information determined by the remote terminal, the method further includes: The remote terminal receives a random value #2 from the relay terminal, to determine a ProSe key based on at least one of the following: a service network name, an RSC, a random value #1, the random value #2, and an intermediate key, where the ProSe key is used for communication between the relay terminal and the remote terminal.

In a possible design solution, after that the remote terminal sends, to the relay terminal, authentication response information determined by the remote terminal, the method further includes: The remote terminal skips deriving a key used for communication between the remote terminal and the network, for example, skips deriving K_{SEAF}.

In addition, for other technical effects in the method according to the fifth aspect, refer to the technical effects in the method according to the first aspect or the second aspect. Details are not described herein again.

According to a sixth aspect, a communication apparatus is provided. The communication apparatus includes modules configured to perform the communication method according to the first aspect, for example, a receiving module and a sending module.

Optionally, the sending module and the receiving module may alternatively be integrated into one module, for example, a transceiver module. The transceiver module is configured to implement a sending function and a receiving function of the communication apparatus according to the sixth aspect.

Optionally, the communication apparatus according to the sixth aspect may further include a processing module. The processing module is configured to implement a processing function of the communication apparatus.

Optionally, the communication apparatus according to the sixth aspect may further include a storage module. The storage module stores a program or instructions. When the processing module executes the program or the instructions, the communication apparatus is enabled to perform the communication method according to the first aspect.

It should be noted that the communication apparatus according to the sixth aspect may be a network device, for example, an authentication service network element, or may be a chip (system) or another component or assembly that may be disposed in a network device, or may be an apparatus including a network device. This is not limited in this application.

In addition, for technical effects of the communication apparatus according to the sixth aspect, refer to the technical effects of the communication method according to the first aspect. Details are not described herein again.

According to a seventh aspect, a communication apparatus is provided. The communication apparatus includes modules configured to perform the communication method according to the second aspect, for example, a receiving module and a sending module.

Optionally, the sending module and the receiving module may alternatively be integrated into one module, for example, a transceiver module. The transceiver module is configured to implement a sending function and a receiving function of the communication apparatus according to the seventh aspect.

Optionally, the communication apparatus according to the seventh aspect may further include a processing module. The processing module is configured to implement a processing function of the communication apparatus.

Optionally, the communication apparatus according to the seventh aspect may further include a storage module. The storage module stores a program or instructions. When the processing module executes the program or the instructions, the communication apparatus is enabled to perform the communication method according to the second aspect.

It should be noted that the communication apparatus according to the seventh aspect may be a network device, for example, an access and mobility management network element, or may be a chip (system) or another component or assembly that may be disposed in a network device, or may be an apparatus including a network device. This is not limited in this application.

In addition, for technical effects of the communication apparatus according to the seventh aspect, refer to the technical effects of the communication method according to the second aspect. Details are not described herein again.

According to an eighth aspect, a communication apparatus is provided. The communication apparatus includes modules configured to perform the communication method according to the third aspect, for example, a receiving module and a sending module.

Optionally, the sending module and the receiving module may alternatively be integrated into one module, for example, a transceiver module. The transceiver module is configured to implement a sending function and a receiving function of the communication apparatus according to the eighth aspect.

Optionally, the communication apparatus according to the eighth aspect may further include a processing module. The processing module is configured to implement a processing function of the communication apparatus.

Optionally, the communication apparatus according to the eighth aspect may further include a storage module. The storage module stores a program or instructions. When the processing module executes the program or the instructions, the communication apparatus is enabled to perform the communication method according to the third aspect.

It should be noted that the communication apparatus according to the eighth aspect may be a network device, for example, a data management network element, or may be a chip (system) or another component or assembly that may be disposed in a network device, or may be an apparatus including a network device. This is not limited in this application.

In addition, for technical effects of the communication apparatus according to the eighth aspect, refer to the technical effects of the communication method according to the third aspect. Details are not described herein again.

According to a ninth aspect, a communication apparatus is provided. The communication apparatus includes modules configured to perform the communication method according to the fourth aspect, for example, a receiving module and a sending module.

Optionally, the sending module and the receiving module may alternatively be integrated into one module, for example, a transceiver module. The transceiver module is configured to implement a sending function and a receiving function of the communication apparatus according to the ninth aspect.

Optionally, the communication apparatus according to the ninth aspect may further include a processing module. The processing module is configured to implement a processing function of the communication apparatus.

Optionally, the communication apparatus according to the ninth aspect may further include a storage module. The storage module stores a program or instructions. When the processing module executes the program or the instructions, the communication apparatus is enabled to perform the communication method according to the fourth aspect.

It should be noted that the communication apparatus according to the ninth aspect may be a terminal, for example, a relay terminal, or may be a chip (system) or another component or assembly that may be disposed in a terminal, or may be an apparatus including a terminal. This is not limited in this application.

In addition, for technical effects of the communication apparatus according to the ninth aspect, refer to the technical effects of the communication method according to the fourth aspect. Details are not described herein again.

According to a tenth aspect, a communication apparatus is provided. The communication apparatus includes modules configured to perform the communication method according to the fifth aspect, for example, a receiving module and a sending module.

Optionally, the sending module and the receiving module may alternatively be integrated into one module, for example, a transceiver module. The transceiver module is configured to implement a sending function and a receiving function of the communication apparatus according to the tenth aspect.

Optionally, the communication apparatus according to the tenth aspect may further include a processing module. The processing module is configured to implement a processing function of the communication apparatus.

Optionally, the communication apparatus according to the tenth aspect may further include a storage module. The storage module stores a program or instructions. When the processing module executes the program or the instructions, the communication apparatus is enabled to perform the communication method according to the fifth aspect.

It should be noted that the communication apparatus according to the tenth aspect may be a terminal, for example, a remote terminal, or may be a chip (system) or another component or assembly that may be disposed in a terminal, or may be an apparatus including a terminal. This is not limited in this application.

In addition, for technical effects of the communication apparatus according to the tenth aspect, refer to the technical effects of the communication method according to the fifth aspect. Details are not described herein again.

According to an eleventh aspect, a communication apparatus is provided. The communication apparatus includes a processor, and the processor is configured to perform the communication method according to any one of the possible implementations of the first aspect to the fifth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In a possible design solution, the communication apparatus according to the eleventh aspect may further include a memory. The memory and the processor may be integrated together, or may be disposed separately. The memory may be configured to store a computer program and/or data related to the communication method according to any one of the first aspect to the fifth aspect.

In this application, the communication apparatus according to the eleventh aspect may be the network device in the first aspect, the second aspect, or the third aspect, or the terminal in the fourth aspect or the fifth aspect, or a chip (system) or another component or assembly that may be disposed in the terminal or the network device, or an apparatus including the terminal or the network device.

In addition, for technical effects of the communication apparatus according to the eleventh aspect, refer to the technical effects of the communication method according to any one of the implementations of the first aspect to the fifth aspect. Details are not described herein again.

According to a twelfth aspect, a communication apparatus is provided. The communication apparatus includes a processor. The processor is coupled to a memory, and the processor is configured to execute a computer program stored in the memory, to enable the communication apparatus to perform the communication method according to any one of the possible implementations of the first aspect to the fifth aspect.

In a possible design solution, the communication apparatus according to the twelfth aspect may further include a transceiver. The transceiver may be a transceiver circuit or an interface circuit. The transceiver may be used by the communication apparatus according to the eighth aspect to communicate with another communication apparatus.

In this application, the communication apparatus according to the twelfth aspect may be the network device in the first aspect, the second aspect, or the third aspect, or the terminal in the fourth aspect or the fifth aspect, or a chip (system) or another component or assembly that may be disposed in the terminal or the network device, or an apparatus including the terminal or the network device.

In addition, for technical effects of the communication apparatus according to the twelfth aspect, refer to the technical effects of the communication method according to any one of the implementations of the first aspect to the fifth aspect. Details are not described herein again.

According to a thirteenth aspect, a communication apparatus is provided, including a processor and a memory, where the memory is configured to store a computer program, and when the processor executes the computer program, the communication apparatus is enabled to perform the communication method according to any one of the implementations of the first aspect to the fifth aspect.

In a possible design solution, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In this application, the communication apparatus according to the thirteenth aspect may be the network device in the first aspect, the second aspect, or the third aspect, or the terminal in the fourth aspect or the fifth aspect, or a chip (system) or another component or assembly that may be disposed in the terminal or the network device, or an apparatus including the terminal or the network device.

In addition, for technical effects of the communication apparatus according to the thirteenth aspect, refer to the technical effects of the communication method according to any one of the implementations of the first aspect to the fifth aspect. Details are not described herein again.

According to a fourteenth aspect, a communication apparatus is provided, including a processor. The processor is configured to: be coupled to a memory, and after reading a computer program in the memory, perform the communication method according to any one of the implementations of the first aspect to the fifth aspect based on the computer program.

In a possible design solution, the communication apparatus according to the fourteenth aspect may further include a transceiver. The transceiver may be a transceiver circuit or an interface circuit. The transceiver may be used by the communication apparatus according to the fourteenth aspect to communicate with another communication apparatus.

In this application, the communication apparatus according to the fourteenth aspect may be the network device in the first aspect, the second aspect, or the third aspect, or the terminal in the fourth aspect or the fifth aspect, or a chip (system) or another component or assembly that may be disposed in the terminal or the network device, or an apparatus including the terminal or the network device.

In addition, for technical effects of the communication apparatus according to the fourteenth aspect, refer to the technical effects of the communication method according to any one of the implementations of the first aspect to the fifth aspect. Details are not described herein again.

According to a fifteenth aspect, a communication system is provided. The communication system includes one or more terminal devices according to the fourth aspect or the fifth aspect, for example, a relay terminal and a remote terminal, and one or more network devices according to the first aspect, the second aspect, or the third aspect, for example, an authentication service network element, an access and mobility management network element, and a data management network element.

According to a sixteenth aspect, a computer-readable storage medium is provided, including a computer program or instructions. When the computer program or the instructions are run on a computer, the computer is enabled to perform the communication method according to any one of the possible implementations of the first aspect to the fifth aspect.

According to a seventeenth aspect, a computer program product is provided, including a computer program or instructions. When the computer program or the instructions are run on a computer, the computer is enabled to perform the communication method according to any one of the possible implementations of the first aspect to the fifth aspect.

### BRIEF DESCRIPTION OF DRAWINGS

FIG. 1 is a schematic diagram of a 5G architecture;
FIG. 2 is a schematic diagram of an architecture of a layer-3 relay architecture;
FIG. 3 is a schematic diagram of an architecture of a layer-2 relay architecture;
FIG. 4 is a schematic flowchart of establishing a secure connection in ProSe communication;
FIG. 5 is a schematic flowchart 1 of a primary authentication procedure;
FIG. 6 is a schematic flowchart 2 of a primary authentication procedure;
FIG. 7 is a schematic diagram of an architecture of a communication system according to an embodiment of this application;
FIG. 8A and FIG. 8B are a schematic flowchart 1 of a communication method according to an embodiment of this application;
FIG. 9A and FIG. 9B are a schematic flowchart 2 of a communication method according to an embodiment of this application;
FIG. 10A and FIG. 10B are a schematic flowchart 3 of a communication method according to an embodiment of this application;
FIG. 11A and FIG. 11B is a schematic flowchart 4 of a communication method according to an embodiment of this application;
FIG. 12 is a schematic flowchart 5 of a communication method according to an embodiment of this application;
FIG. 13A and FIG. 13B are a schematic flowchart 6 of a communication method according to an embodiment of this application;
FIG. 14 is a schematic flowchart 7 of a communication method according to an embodiment of this application;
FIG. 15 is a schematic diagram 1 of a structure of a communication apparatus according to an embodiment of this application; and
FIG. 16 is a schematic diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system

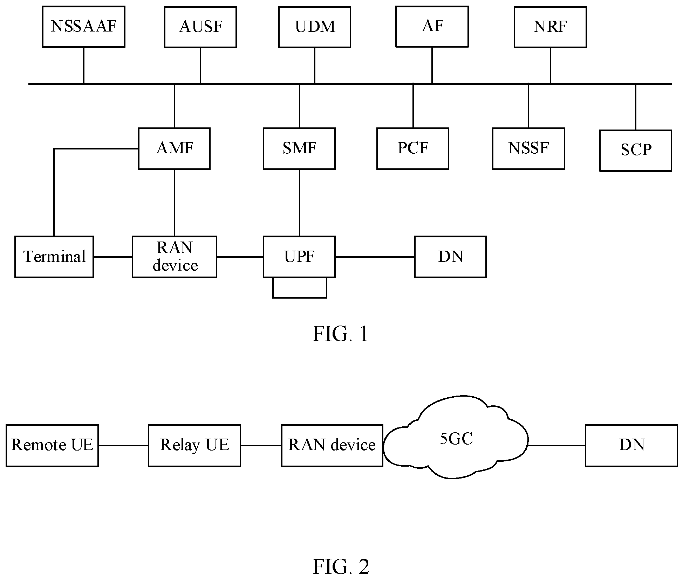

FIG. 1 is a schematic diagram of an architecture of a 5G system. As shown in FIG. 1, the 5G system includes an access network (access network, AN) and a core network (core network, CN), and may further include a terminal.

The terminal may be a terminal with a transceiver function, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation security (transportation safety), a wireless terminal in a smart city (smart city), a wireless terminal in smart home (smart home), a vehicle-mounted terminal, a roadside unit (roadside unit, RSU) with a terminal function, or the like. The terminal in this application may alternatively be a vehicle-mounted module, a vehicle-mounted component, a vehicle-mounted chip, or a vehicle-mounted unit that is built in a vehicle as one or more components or units.

The AN is configured to implement an access-related function, may provide a network access function for an authorized user in a specific area, and can determine transmission links of different quality based on a user level, a service requirement, and the like, to transmit user data. The AN forwards a control signal and user data between the terminal and the CN. The AN may include an access network device, or may be referred to as a radio access network device (radio access network, RAN) device.

The RAN device may be a device that provides access for the terminal, and is mainly responsible for functions on an air interface side, such as radio resource management, quality of service (quality of service, QoS) management, and data compression and encryption. The RAN device may include a gNB in 5G, for example, a new radio (new radio, NR) system, or one or a group of (including a plurality of antenna panels) antenna panels of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), a central unit (central unit, CU) or a distributed unit (distributed unit, DU), or an RSU with a base station function, or a wired access gateway, or a 5G core network element. Alternatively, the RAN device may further include an access point (access point, AP) in a wireless fidelity (wireless fidelity, Wi-Fi) system, a wireless relay node, a wireless backhaul node, macro base stations in various form, a micro base station (also referred to as a small cell), a relay station, an access point, a wearable device, a vehicle-mounted device, and the like. Alternatively, the RAN device may include a next-generation mobile communication system, for example, a 6G access network device, for example, a 6G base station. Alternatively, in the next-generation mobile communication system, the network device may alternatively be named in another manner, and all the naming manners fall within the protection scope of embodiments of this application. This is not limited in this application.

The CN is mainly responsible for maintaining subscription data of a mobile network, and provides functions such as session management, mobility management, policy management, and security authentication for the terminal. The CN mainly includes the following network elements: a user plane function (user plane function, UPF) network element, an authentication service function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management function (unified data management, UDM) network element, an application function (application function, AF) network element, and a network slice-specific and standalone non-public network (standalone non-public network, SNPN) authentication and authorization function (network slice-specific and SNPN authentication and authorization function, NSSAAF) network element.

The UPF network element is mainly responsible for user data processing (forwarding, receiving, charging, and the like). For example, the UPF network element may receive user data from a data network (data network, DN), and forward the user data to the terminal via an access network device. The UPF network element may also receive user data from the terminal via the access network device, and forward the user data to the DN. The DN network element refers to an operator network that provides a data transmission service for a user, for example, internet protocol (internet protocol, IP) multi-media service (IP multi-media service, IMS) or the internet (internet). The DN may be an external network of an operator, or may be a network controlled by an operator, and is configured to provide a service for a terminal device.

The AUSF network element may be configured to perform security authentication on the terminal.

The AMF network element is mainly responsible for mobility management in the mobile network, for example, user location update, registration of a user with a network, and user switching.

The SMF network element is mainly responsible for session management in the mobile network, for example, session establishment, modification, and release. A specific function is, for example, allocating an internet protocol (internet protocol, IP) address to the user, or selecting the UPF that provides a packet forwarding function.

The PCF network element mainly supports providing a unified policy framework to control network behavior, and providing a policy rule for a control layer network function, and is responsible for obtaining policy decision-related subscription information of a user. The PCF network element may provide a policy, for example, a quality of service (quality of service, QoS) policy or a slice selection policy, for the AMF network element and the SMF network element.

The NSSF network element may be configured to select a network slice for the terminal.

The NEF network element may be configured to support capability and event exposure.

The UDM network element may be configured to store user data, for example, subscription data and authentication/authorization data.

The AF network element mainly supports interacting with the CN to provide a service, for example, affecting a data routing decision-making and a policy control function, or providing some third-party services for a network side.

The NSSAAF network element may be configured to: support slice authentication and authorization, and support access to a standalone non-public network by using a credential of a credential holder. The NSSAAF may interwork with an authentication, authorization, and accounting server (authentication, authorization, and accounting server, AAA-S) through an authentication, authorization, and accounting proxy (authentication, authorization, and accounting proxy, AAA-P).

An SCP (Service Communication Proxy, service communication proxy) network element may be configured to implement communication forwarding between network functions, and may be further configured to implement load balancing, network function selection, and the like.

### 2. Short-distance communication

With rapid development of mobile communication, universal use of new service types, for example, data services such as video chat and virtual reality (virtual reality, VR)/augmented reality (augmented AR), increases a bandwidth requirement of a user. For this, short-distance communication, such as device-to-device (D2D) communication, is a solution.

The D2D communication allows direct communication between UE, for example, communication through a PC5 interface, to implement information transmission on a data plane and a control plane. In this way, under control of a cell (cell) network, the user can share spectrum resources with other cell users, so that utilization of the spectrum resources is effectively improved. The D2D communication includes one-to-many communication (one-to-many communication) and one-to-one communication (One-to-one communication). The one-to-many communication usually corresponds to multicast and broadcast communication, and the one-to-one communication usually corresponds to unicast communication. In the one-to-one communication, if being in a short distance range, transmitting UE and receiving UE may directly communicate with each other after mutual discovery.

### 3. Proximity based service (proximity based service, ProSe) communication

ProSe communication is also referred to as short-distance service communication, and is a typical service scenario in the D2D communication. The ProSe communication may include proximity based service direct communication and proximity based service UE-to-network relay communication. For the proximity based service UE-to-network relay communication (which may be briefly referred to as ProSe relay communication), when UE (denoted as UE 1) is located outside network coverage, or has a poor communication signal with a RAN device, or requires another UE (denoted as UE 2) to assist in data transmission, the UE 1 may obtain a service from a network with assistance of the UE 2. In this case, the UE 1 may be referred to as proximity based service remote UE (ProSe remote UE) or 5G proximity based service remote UE (5G ProSe remote UE), or briefly referred to as remote UE (remote UE). The UE 2 may be referred to as a proximity based service UE-to-network relay (ProSe UE-to-network relay), or a 5G proximity based service UE-to-network relay (5G ProSe UE-to-network relay), or briefly referred to as relay UE (relay UE). The relay UE may be configured to provide a ProSe function that supports the remote UE in connecting to the network, so that the remote UE may communicate with the DN based on the ProSe function provided by the relay UE, that is, perform ProSe relay communication.

To support the ProSe function, a layer-3 relay architecture and a layer-2 relay architecture are introduced in the 3rd generation partnership project (3rd generation partnership project, 3GPP). Description is separately provided below.

FIG. 2 is a schematic diagram of an architecture of a layer-3 relay architecture. As shown in FIG. 2, a PC5 connection is established between remote UE and relay UE, and the relay UE accesses a core network (5GC) via a RAN device. In this way, the remote UE obtains a service from a DN through the PC5 connection and the core network accessed by the relay UE, to implement ProSe communication. For example, the relay UE may establish or modify a protocol data unit (protocol data unit, PDU) session for the remote UE, and indicate an SMF network element to store related information of the remote UE in a session management (session management, SM) context. In this way, the remote UE can obtain the service from the DN by using the PDU session of the relay UE, to implement the ProSe communication. Alternatively, the relay UE may establish or modify a PDU session for the remote UE, so that the remote UE may perform a key exchange protocol (internet key exchange, IKE) procedure with a non-3GPP interworking function (non-3GPP interworking function, N3IWF) by using the PDU session, to establish a signaling internet protocol security (internet protocol security, IPsec) tunnel, and perform a non-access stratum (non-access stratum, NAS) registration procedure. In this way, the remote UE can establish the PDU session of the remote UE based on the N3IWF by using the PDU session established by the relay UE, and obtain the service from the DN, to implement ProSe relay communication. In addition, the relay UE may be located in a home public land mobile network (public land mobile network, PLMN), or may be located in a visited PLMN, which is not specifically limited herein.

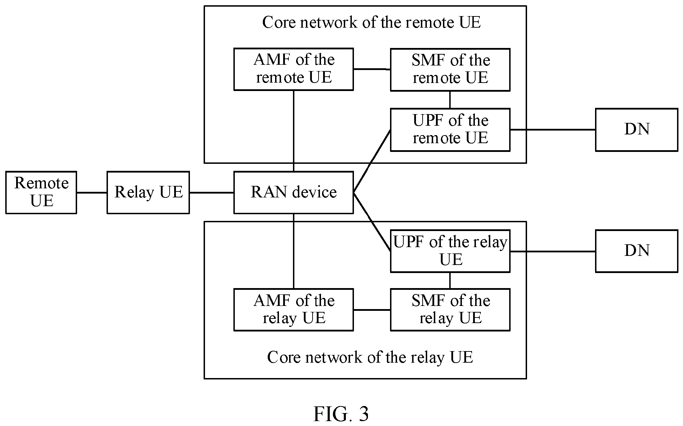

FIG. 3 is a schematic diagram of an architecture of a layer-2 relay architecture. As shown in FIG. 3, a PC5 connection is established between remote UE and relay UE, and a Uu interface connection is established between the relay UE and a RAN device. The RAN device may be connected to a core network accessed by the remote UE, or may be connected to a core network accessed by the relay UE. In this case, after the PC5 connection is established between the remote UE and the relay UE, the remote UE establishes a radio resource connection to the RAN through the established PC5 connection, and further establishes a non-access stratum (non-access stratum, NAS) connection to the core network, so that the remote UE can establish a PDU session, obtain a service from a DN, and implement ProSe relay communication. For example, the remote UE may access the network via the relay UE, and establish or modify the PDU session of the remote UE, to obtain the service from the DN by using the PDU session, and implement the ProSe relay communication. In addition, the core network accessed by the remote UE and the core network accessed by the relay UE may be a same PLMN or different PLMNs. This is not specifically limited.

It should be noted that in the layer-2 relay architecture, the remote UE may be referred to as 5G ProSe layer-2 remote UE, ProSe layer-2 remote UE, or layer-2 remote UE. Similarly, in the layer-3 relay architecture, the remote UE may be referred to as 5G ProSe layer-3 remote UE, ProSe layer-3 remote UE, or layer-3 remote UE. The remote UE mentioned below may be understood as the remote UE in the layer-2 relay architecture or the layer-3 relay architecture, and names of the remote UE may also be replaced correspondingly. Similarly, in the layer-2 relay architecture, the relay UE may be referred to as 5G ProSe layer-2 relay UE, ProSe layer-2 relay UE, or layer-2 relay UE. Similarly, in the layer-3 relay architecture, the relay UE may be referred to as 5G ProSe layer-3 relay UE, ProSe layer-3 relay UE, or layer-3 relay UE. Unless otherwise specified, the relay UE mentioned below may be understood as the relay UE in the layer-2 relay architecture or the relay UE in the layer-3 relay architecture, and names of the relay UE may also be replaced accordingly.

### 4. ProSe relay communication security

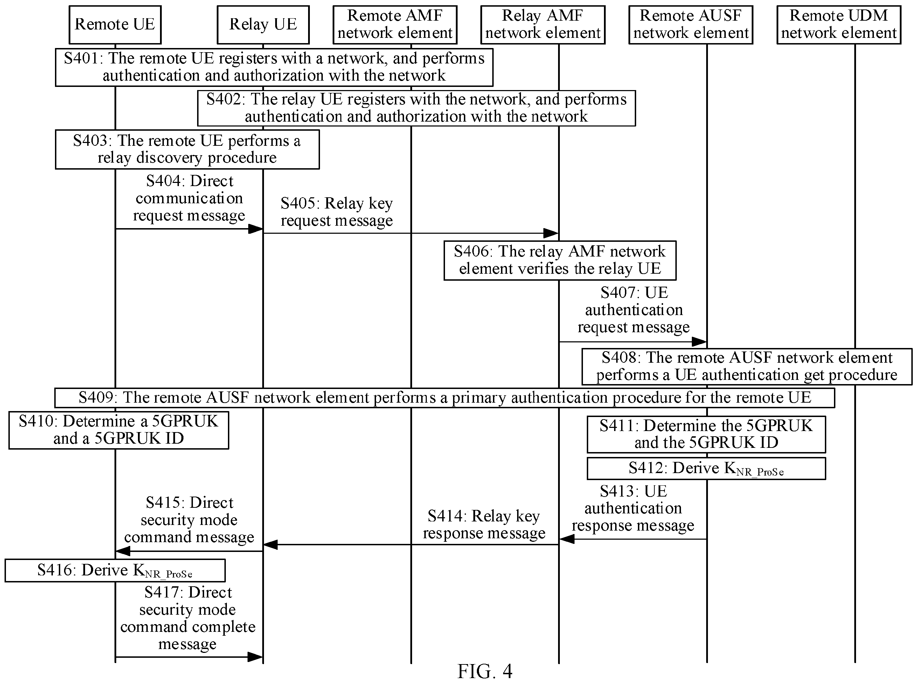

To ensure ProSe relay communication security, a secure PC5 connection needs to be established between remote UE and relay UE. FIG. 4 is a schematic flowchart of establishing secure ProSe relay communication. As shown in FIG. 4, the procedure includes the following steps.

S401: Remote UE registers with a network, and performs authentication and authorization with the network.

S402: Relay UE registers with the network, and performs authentication and authorization with the network.

It should be noted that the remote UE may register with the network via an AMF network element (denoted as a remote AMF network element) that serves the remote UE. The relay UE may register with the network via an AMF network element (denoted as a relay AMF network element) that serves the relay LTE. The remote AMF network element and the relay AMF network element may be a same network element or different network elements. This is not specifically limited.

S403: The remote UE performs a relay discovery procedure.

If the remote UE needs to use ProSe relay communication, the remote UE discovers the relay UE by performing the relay discovery procedure.

S404: The remote UE sends a direct communication request (direct communication request) message to the relay UE. Correspondingly, the relay UE receives the direct communication request message from the remote UE.

The direct communication request message may be used by the remote UE to request to communicate with the relay UE. The direct communication request message may include the following parameters of the remote UE: a security capability, a security policy, a subscription concealed identifier (subscription concealed identifier, SUCI), a relay communication code (relay service code, RSC), and Nonce_1. The security capability indicates an encryption and/or integrity protection algorithm supported by the remote UE. The security policy indicates whether security protection is enabled, and the security protection includes encryption protection and/or integrity protection. For example, the security policy may include encryption as required, recommended, or not required; and/or the integrity protection as required, recommended, or not required. The RSC identifies a connection service that the relay UE may provide for the remote UE. Nonce_1 is a random number generated by the remote UE, and is used to derive a key K_{NR_ProSe} for secure communication between the remote UE and the relay UE. The remote UE and the relay UE generate, based on the K_{NR_ProSe}, a security key used for communication, such as an encryption key and/or an integrity key.

S405: The relay UE sends a relay key request (relay key request) message to the relay AMF network element. Correspondingly, the relay AMF network element receives the relay key request message from the relay UE.

The relay key request message is mainly used by the relay UE to request relay communication, or to request a key for ProSe communication. The relay key request message may include an identifier of the relay UE, and the SUCI, the RSC, and Nonce_1 of the remote UE.

S406: The relay AMF network element verifies the relay UE.

The relay AMF network element verifies the relay UE based on the identifier of the relay UE, to determine that the relay UE is authorized as a relay to provide a service.

S407: The relay AMF network element sends a UE authentication request (Kausf_UEAuthentication_UEAuthentication_Authenticate Request) message to a remote AUSF network element. Correspondingly, the remote AUSF network element receives the UE authentication request message from the relay AMF network element.

The UE authentication request message may include the SUCI, the RSC, and Nonce_1 of the remote UE.

S408: The remote AUSF network element performs a UE authentication get (Nudm_UEAuthentication_Get) procedure.

The remote AUSF network element may perform a UE authentication get procedure based on the UE authentication request message, to obtain an authentication vector from a remote UDM network element. The remote UDM network element may be a UDM network element that serves the remote UE.

S409: The remote AUSF network element performs a primary authentication procedure for the remote UE (Primary authentication of Remote UE).

S410: The remote UE determines a 5GPRUK and a 5GPRUK ID.

After successfully authenticating the network through the primary authentication procedure, the remote UE may determine the 5GPRUK and the 5GPRUK ID. For example, the remote UE may derive the 5GPRUK and the 5GPRUK ID based on a key derived in the primary authentication procedure, for example, K_{AUSF}. The 5GPRUK is used to derive the key for secure communication between the remote UE and the relay UE. The 5GPRUK ID is used to locate the 5 GPRUK.

S411: The remote AUSF network element determines the 5GPRUK and the 5GPRUK ID.

After successfully authenticating the remote UE through the primary authentication procedure, the remote AUSF network element may also determine the 5GPRUK and the 5GPRUK ID. For example, the remote AUSF network element may also derive the 5GPRUK and the 5GPRUK ID based on a key derived in the primary authentication procedure, for example, K_{AUSF}. In addition, an execution sequence of S411 and S410 is not limited.

S412: The remote AUSF network element derives K_{NR_ProSe}.

After successfully authenticating the remote UE through the primary authentication procedure, the remote AUSF network element may derive K_{NR_ProSe} based on the SGPRUK, Nonce_1, and Nonce_2. Nonce_2 is a random number generated by the remote AUSF network element.

S413: The remote AUSF network element sends a UE authentication response (Nausf_UEAuthentication_UEAuthentication_Authenticate response) message to the relay AMF network element. Correspondingly, the relay AMF network element receives the UE authentication response message from the remote AUSF network element.

The UE authentication response message is a response message of the UE authentication request message, and indicates that the ProSe communication is successfully authenticated. The UE authentication response message may include: K_{NR_ProSe}, the 5GPRUK ID, and Nonce_2.

S414: The relay AMF network element sends a relay key response (Relay Key Response) message to the relay UE. Correspondingly, the relay UE receives the relay key response message from the relay AMF network element.

The relay key response message is mainly used to configure K_{NR_ProSe} for the relay UE. The relay key response message may include K_{NR_ProSe}, the 5GPRUK ID, and Nonce_2.

S415: The relay UE sends a direct security mode command (direct security mode command) message to the remote UE. Correspondingly, the remote UE receives the direct security mode command message from the relay UE.

The direct security mode command message indicates the remote UE to determine K_{NR_ProSe}. The direct security mode command message may include the 5GPRUK ID and Nonce_2.

S416: The remote UE derives K_{NR_ProSe}.

After receiving the direct security mode command message, the remote UE may locate, based on the 5GPRUK ID, the 5GPRUK used to establish a PC5 connection, to derive K_{NR_ProSe} based on the 5GPRUK, Nonce_1, and Nonce_2.

S417: The remote UE sends a direct security mode command complete (direct security mode command complete) message to the relay UE. Correspondingly, the remote UE receives the direct security mode command complete message from the relay UE.

It can be learned that the 3GPP roughly defines a security procedure of the ProSe communication. To be specific, the ProSe communication needs to be authenticated through the primary authentication procedure, and K_{NR_ProSe} is derived after the authentication succeeds, to ensure ProSe communication security. For ease of understanding, the following describes the primary authentication procedure.

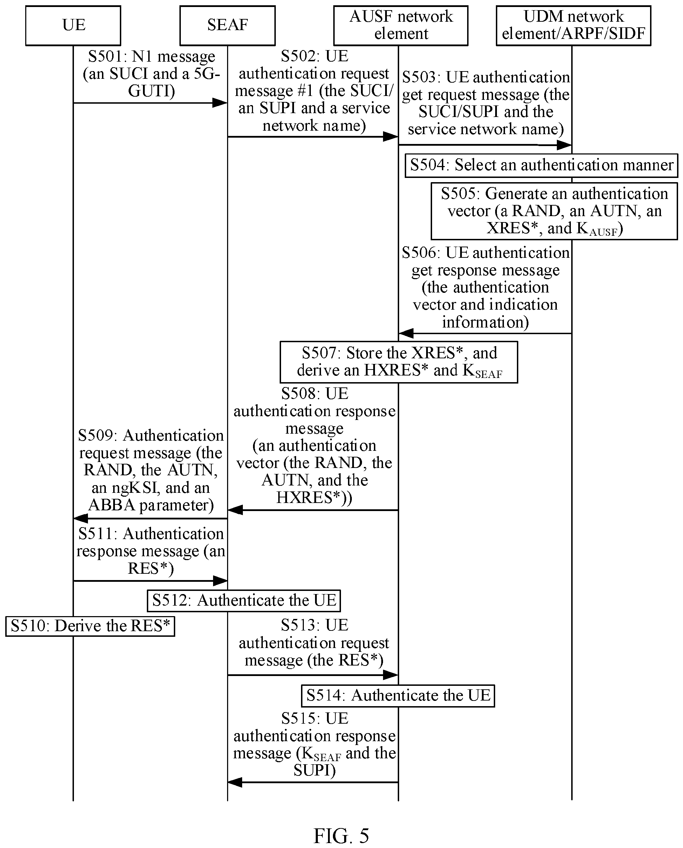

FIG. 5 is a schematic flowchart 1 of a primary authentication procedure in 3GPP. As shown in FIG. 5, the procedure includes the following steps.

S501: UE sends an N1 message to a security anchor function (security anchor function, SEAF). Correspondingly, the SEAF receives the N1 message from the UE.

The SEAF may be deployed on an AMF network element or any other possible network element, or may be independently deployed. This is not specifically limited. The N1 message may be a registration request (register request) message, and is used by the UE to request to register with a network. The N1 message may include an identifier of the UE, for example, an SUCI or a SG-globally unique temporary UE identifier (globally unique temporary UE identity, GUTI).

S502: The SEAF sends a UE authentication request (Nausf_UEAuthentication_Authenticate Request) message to an AUSF network element. Correspondingly, the AUSF network element receives the UE authentication request message from the SEAF.

The UE authentication request message is used to request the AUSF network element to perform an authentication procedure. The UE authentication request message may include the SUCI or subscription permanent identifier (subscription permanent identifier, SUPI), and a service network name (service network name, SN-name).

After receiving the N1 message, the SEAF may determine that the 5G-GUTI is valid, and the UE needs to be re-authenticated. In this case, the SEAF needs to include the SUPI in the UE authentication request message; otherwise, the SEAF needs to include the SUCI.

S503: The AUSF network element sends a UE authentication get request (Nudm_UEAuthentication_Get Request) message to a UDM network element. Correspondingly, the UDM network element receives the UE authentication get request message from the AUSF network element.

The UE authentication get request message is used to request the UDM network element to generate an authentication vector for use in subsequent authentication. The UE authentication get request message may include the SUCI or the SUPI and the service network name.

After receiving the UE authentication request message, the AUSF network element may verify the service network name, for example, compare the service network name carried in the UE authentication request message with an expected service network name. If the service network name carried in the UE authentication request message matches the expected service network name, the AUSF network element determines that the SEAF has a permission to use the service network name, and sends the UE authentication get request message to the UDM network element. If the service network name carried in the UE authentication request message does not match the expected service network name, the AUSF network element determines that the SEAF has no permission to use the service network name, and this procedure ends; and sends a message to the SEAF, for indicating that this serving network is not authorized.

S504: The UDM network element selects an authentication manner.

If the UE authentication get request message carries the SUCI, the UDM can invoke a subscription identifier de-concealing function (subscription identifier de-concealing function, SIDF) to parse the SUCI, to obtain the SUPI. The UDM network element may select, based on the SUPI, an authentication method supported in subscription data, or the UDM network element may invoke an authentication credential repository and processing function (authentication credential repository and processing function, ARPF) to select, based on the SUPI, an authentication method supported in subscription data. In this procedure, the UDM network element/ARPF determines to select a 5G authentication and key agreement (authentication and key agreement, AKA) mechanism.

S505: The UDM network element generates an authentication vector.

The UDM network element/ARPF may generate the authentication vector corresponding to the 5G AKA mechanism, for example, a 5G home environment authentication vector (5G home environment authentication vector, 5G HE AV). The authentication vector may include a random number (RAND), an authentication token (authentication token, AUTN), an XRES*, and K_{AUSF}. The RAND and the AUTN are used by the UE to authenticate the network. The XRES* may be used by the AUSF network element to authenticate the UE. K_{AUSF} may be used to protect information sent to the UE, and may be further used for key derivation, to obtain a key used for subsequent communication, for example, K_{AMF}. The XRES* and K_{AUSF} may be derived from a root key and the RAND.

Specifically, the UDM network element/ARPF may generate some parameters, including: a message authentication code (MAC), an expected response (XRES), an encryption key (CK), an integrity key (IK), and an anonymity key (AK). The MAC is obtained through calculation based on a sequence number (SQN), the RAND, an AMF, and the root key by using an algorithm f1. The XRES is obtained through calculation based on the RAND and the root key by using an algorithm f2. The CK is obtained through calculation based on the root key and the RAND by using an algorithm f3. The IK is obtained through calculation based on the root key and the RAND by using an algorithm f4. The AK is obtained through calculation based on the root key and the RAND by using an algorithm f5. On this basis, the UDM network element/ARPF may obtain the AUTN. The AUTN includes: SQN xor AK (SQN ⊕ AK) ∥ AMF ∥ MAC {AUTN = SQN ⊕ AK ∥ AMF ∥ MAC}. The UDM network element/ARPF may derive the XRES* based on the XRES and the RAND. In a derivation process, the following parameters, for example, a service network name, a length of the service network name, and a length of the RAND are further used. The UDM network element/ARPF may further derive K_{AUSF} based on the IK and the CK. So far, all the parameters included in the authentication vector are derived. In other words, the authentication vector is generated.

S506: The UDM network element sends a UE authentication get response (Nudm_UEAuthentication_Get Response) message to the AUSF network element. Correspondingly, the AUSF network element receives the UE authentication get response message from the UDM network element.

The UE authentication get response message is a response message of the UE authentication get request message. The UE authentication get response message may include the authentication vector and indication information, and the indication information indicates that the authentication vector is used for 5G AKA. Optionally, if the UE authentication get request message carries the SUCI, the UE authentication get response message may further include the SUPI.

S507: The AUSF network element stores the XRES*, and derives an HXRES* and K_{SEAF}.

After receiving the UE authentication get response message, the AUSF network element may store the XRES*, or the XRES* and the SUPI for use in the subsequent authentication. The AUSF network element may derive the HXRES* based on the XRES*, and the HXRES* may be used by the SEAF to authenticate the UE. The AUSF network element may further derive K_{SEAF} based on K_{AUSF}, and K_{SEAF} may be used for key derivation of the SEAF, to obtain K_{AMF}.

S508: The AUSF network element sends a UE authentication response (Nausf_UEAuthentication_UEAuthentication_Authenticate Response) message to the SEAF. Correspondingly, the SEAF receives the UE authentication response message from the AUSF network element.

The UE authentication response message is a response message of the UE authentication request message. The UE authentication response message may include an authentication vector, for example, a 5G serving environment authentication vector (5G serving environment authentication vector, 5G SE AV). The authentication vector may include the RAND, the AUTN, and the HXRES*. In other words, the AUSF network element replaces the XRES* in the authentication vector with the HXRES*, and removes K_{AUSF} from the authentication vector, to obtain the authentication vector.

S509: The SEAF sends an authentication request (authenticate request) message to the UE. Correspondingly, the UE receives the authentication request message from the SEAF.

The authentication request message may be a NAS message, used to request the UE to authenticate the network. The authentication request message may include the RAND, the AUTN, a key set identifier in 5G (key set identifier in 5G, ngKSI), and an anti-bidding down between architectures (anti-bidding down between architectures, ABBA) parameter. The ngKSI may be determined by the SEAF, and is used by the UE and the AMF network element to identify K_{AMF} and some native security contexts. The ABBA parameter may be determined by the SEAF, and is used to derive K_{AMF}.

S510: The UE derives a RES*.

The RES* is used to authenticate the UE.

The UE may include a mobile equipment (mobile equipment, ME) and a universal subscriber identity module (universal subscriber identity module, USIM). After the UE receives the authentication request message, the USIM may verify the AUTN based on the RAND and a root key of the USIM. If the USIM fails to verify the AUTN, it indicates that the UE fails to authenticate the network, and the procedure ends. If the USIM successfully verifies the AUTN, it indicates that the UE successfully authenticates the network. On this basis, the USIM may derive a RES, the CK, and the IK by using the root key and the RAND, and send the RES, the CK, and the IK to an ME. The ME may derive K_{AUSF} based on the CK and the IK, and then derive K_{SEAF} based on K_{AUSF}. The ME may further derive the RES* based on the RES, and then perform S511.

S511: The UE sends an authentication response (authenticate response) message to the SEAF. Correspondingly, the SEAF receives the authentication response message from the UE.

The authentication response message may be a NAS message, used to respond to the authentication request message. The authentication response message may include the RES*.

S512: The SEAF authenticates the UE.

After receiving the authentication response message, the SEAF may derive an HRES* based on the RES*, to compare the HRES* with the previously obtained HXRES*. If the HRES* does not match the HXRES*, it indicates that the UE fails to be authenticated, and the authentication procedure ends. If the HRES* matches the HXRES*, it indicates that the UE is successfully authenticated, or it is considered that the authentication succeeds from a perspective of the serving network, and S513 is then performed.

S513: The SEAF sends a UE authentication request message to the AUSF network element. Correspondingly, the AUSF network element receives the UE authentication request message from the SEAF.

The UE authentication request message is used to request to authenticate the UE. The UE authentication request message may include the RES*.

S514: The AUSF network element authenticates the UE.

After receiving the UE authentication request message, the AUSF network element may compare the RES* with the previously stored XRES*. If the RES* does not match the XRES*, it indicates that the UE fails to be authenticated, and the procedure ends. If the RES* matches the XRES*, it indicates that the UE is successfully authenticated, or it is considered that the authentication succeeds from a perspective of a home network, and S515 is then performed. The AUSF network element may further determine, according to a policy of a local network operator, to store K_{AUSF}.

S515: The AUSF network element sends a UE authentication response message to the SEAF. Correspondingly, the SEAF receives the UE authentication response message from the AUSF network element.

The UE authentication response message is a response message of the UE authentication request message, and indicates that the UE is successfully authenticated. The UE authentication response message may include K_{SEAF}. Optionally, if the UE authentication request message carries the SUCI, the UE authentication response message may further include the SUPI. After receiving the UE authentication response message, the SEAF may derive K_{AMF} based on K_{SEAF}, the ABBA parameter, and the SUPI, and send the ngKSI and K_{AMF} to the AMF network element.

If the UE authentication request message carries the SUCI, that is, the SUCI is used for this authentication, the SEAF needs to provide the ngKSI and K_{AMF} to the AMF network element only after receiving the UE authentication response message, namely, the UE authentication response message including the SUPI, so that before this, the serving network does not provide a communication service for the UE.

In addition, after determining that the authentication succeeds, the UE may alternatively derive K_{AMF} based on K_{SEAF}, the ABBA parameter, and the SUPI autonomously. So far, both the UE and the AMF network element obtain a same key, namely, K_{AMF}. The two parties may further derive an encryption key and/or an integrity protection key by using the key, and perform security protection on information between the UE and the AMF network element by using the derived key, to ensure communication security.

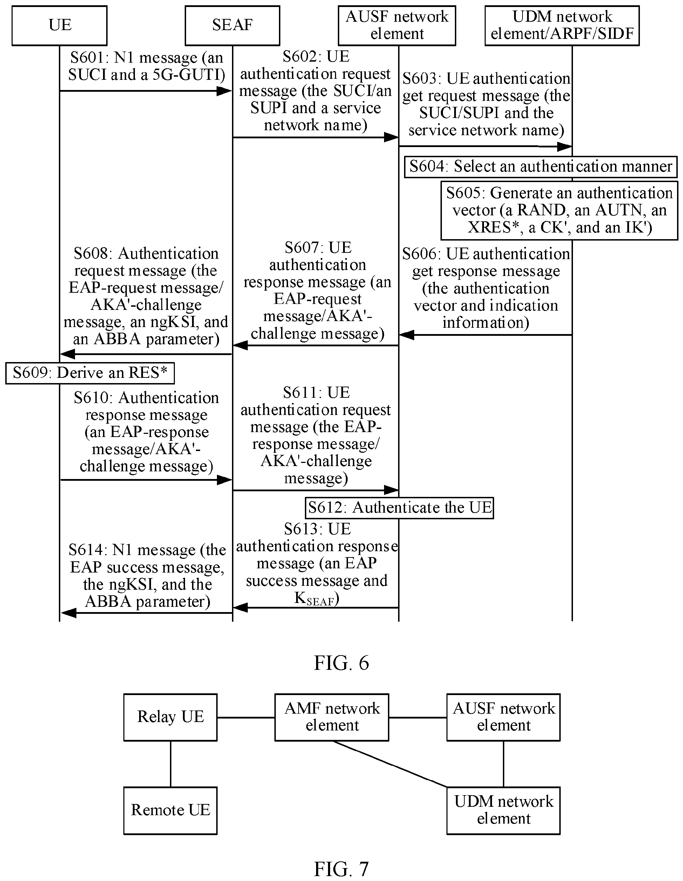

FIG. 6 is a schematic flowchart 2 of a primary authentication procedure in 3GPP. As shown in FIG. 6, the procedure includes the following steps.

S601: UE sends an N1 message to an SEAF. Correspondingly, the SEAF receives the N1 message from the UE.

S602: The SEAF sends a UE authentication request message to an AUSF network element. Correspondingly, the AUSF network element receives the UE authentication request message from the SEAF.

S603: The AUSF network element sends a UE authentication get request message to a UDM network element. Correspondingly, the UDM network element receives the UE authentication get request message from the AUSF network element.

A specific implementation principle of S601 to S603 is similar to that of S501 to S503. For details, refer to each other for understanding. Details are not described again.

S604: The UDM network element selects an authentication manner.

If the UE authentication request message carries an SUCI, the UDM network element may invoke an SIDF to parse the SUCI, to obtain an SUPI. The UDM network element may select, based on the SUPI, an authentication method supported in subscription data, or the UDM network element may invoke an ARPF to select, based on the SUPI, an authentication method supported in subscription data. In this procedure, the UDM network element/ARPF determines to select an extensible authentication protocol (extensible authentication protocol, EAP)-AKA 'mechanism.

S605: The UDM network element generates an authentication vector.

The UDM network element/ARPF may generate an authentication vector corresponding to the EAP-AKA'mechanism, for example, a transformed authentication vector AV' (transformed authentication vector). The authentication vector may include a RAND, an AUTN, an XRES, a CK', and an IK'. For a specific implementation principle of the RAND, the AUTN, and the XRES, refer to related descriptions in S505. Details are not described again. The CK' and the IK' may be derived from a root key and the RAND. For example, the UDM network element/ARPF derives a CK and an IK, and then derives the CK' and the IK' based on the CK and the IK. For a specific implementation principle of the CK and the IK, refer to related descriptions in S505. Details are not described again.

S606: The UDM network element sends a UE authentication get response message to the AUSF network element. Correspondingly, the AUSF network element receives the UE authentication get response message from the UDM network element.

The UE authentication get response message is used to respond to the UE authentication get request message. The UE authentication get response message may include the authentication vector and indication information, and the indication information indicates that the authentication vector is used for EAP-AKA'. Optionally, if the UE authentication get request message carries the SUCI, the UE authentication get response message may further include the SUPI.

S607: The AUSF network element sends a UE authentication response message to the SEAF. Correspondingly, the SEAF receives the UE authentication response message from the AUSF network element.

The UE authentication response message is used to respond to the UE authentication request message. The UE authentication response message may include an EAP-request (EAP-Request) message/AKA'-challenge (AKA'-Challenge) message. The EAP-request message/AKA'-challenge message may be determined based on the UE authentication get response message, and the message includes the RAND and the AUTN.

S608: The SEAF sends an authentication request message to the LTE. Correspondingly, the UE receives the authentication request message from the SEAF.

The authentication request message may be a NAS message, used to request the UE to authenticate a network. The authentication request message may include the EAP-request message/AKA'-challenge message. That is, after receiving the UE authentication response message, the SEAF may continue to encapsulate the EAP-request message/AKA'-challenge message in the UE authentication response message into the authentication request message, to transparently transmit the EAP-request message/AKA'-challenge message to the LTE. In addition, the authentication request message from the SEAF may further include an ngKSI and an ABBA parameter. A specific implementation principle of the ngKSI and the ABBA parameter is similar to that in S509. For details, refer to each other for understanding. Details are not described again. In addition, in an EAP-AKA' authentication process, the ngKSI and the ABBA parameter that are sent by the SEAF to the UE cannot be changed.

S609: The UE derives an RES.

The RES is used to authenticate the UE.

The UE may include an ME and a USIM. After the UE receives the authentication request message, the USIM may verify the AUTN based on the RAND and a root key of the USIM. If the USIM fails to verify the AUTN, it indicates that the UE fails to authenticate the network, and the authentication procedure ends. If the USIM successfully verifies the AUTN, it indicates that the UE successfully authenticates the network. On this basis, the USIM may derive the RES, the CK, and the IK by using the root key and the RAND, and send the RES, the CK, and the IK to the ME. The ME may derive the CK' and the IK' based on the CK and the IK.

S610: The UE sends an authentication response message to the SEAF. Correspondingly, the SEAF receives the authentication response message from the UE.

The authentication response message may be a NAS message, used to respond to the authentication request message. The authentication response message may include an EAP-response (EAP-response) message/AKA'-challenge message. The EAP-response message/AKA'-challenge message may include the RES.

S611: The SEAF sends a UE authentication request message to the AUSF network element. Correspondingly, the AUSF network element receives the UE authentication request message from the SEAF.

The UE authentication request message is used to request to authenticate the UE. The UE authentication request message may include the EAP-response message/AKA'-challenge message. That is, after receiving the authentication response message, the SEAF may continue to encapsulate the EAP-response message/AKA'-challenge message in the authentication response message into the UE authentication request message, to transparently transmit the EAP-response message/AKA'-challenge message to the AUSF network element.

S612: The AUSF network element authenticates the UE.

After receiving the UE authentication request message, the AUSF network element may compare the RES in the EAP-response message/AKA'-challenge message with a locally stored XRES. If the RES does not match the XRES, it indicates that the UE fails to be authenticated, and the authentication procedure ends. If the RES matches the XRES, it indicates that the UE is successfully authenticated, and S614 is then performed.

S613: The AUSF network element sends a UE authentication response message to the SEAF. Correspondingly, the SEAF receives the UE authentication response message from the AUSF network element.

The UE authentication response message is a response message of the UE authentication request message. The UE authentication response message may include an EAP success (EAP success) message, for indicating that the authentication succeeds, and may further include K_{SEAF}. Optionally, if the UE authentication request message carries the SUCI, the UE authentication response message may further include the SUPI. It may be understood that after determining that the authentication succeeds, the AUSF network element may derive an EMSK based on the CK' and the IK', and determine K_{SEAF} based on the EMSK. Specifically, the AUSF network element determines first 256 bits of the EMSK as K_{AUSF}, and then derives K_{SEAF} based on K_{AUSF}. Correspondingly, after receiving the UE authentication response message, the SEAF may derive K_{AMF} based on K_{SEAF}, the ABBA parameter, and the SUPI, and send the ngKSI and K_{AMF} to the AMF network element.

It should be noted that, if the UE authentication request message carries the SUCI, that is, the SUCI is used for this authentication, the SEAF needs to provide the ngKSI and K_{AMF} to the AMF network element only after receiving the UE authentication response message, namely, the UE authentication response message including the SUPI, so that before this, a serving network does not provide a communication service for the UE.

S614: The SEAF sends an N1 message to the UE. Correspondingly, the UE receives the N1 message from the SEAF.

The N1 message may include the EAP success message, the ngKSI, and the ABBA parameter. In this way, after determining that the authentication succeeds, the UE may alternatively derive K_{AMF} based on K_{SEAF}, the ABBA parameter, and the SUPI autonomously. So far, both the UE and the AMF network element obtain a same key, namely, K_{AMF}. The two parties may further derive an encryption key and/or an integrity protection key by using the key, and perform security protection on information between the UE and the AMF network element by using the derived key, to ensure communication security.

As shown in FIG. 5 and FIG. 6, the primary authentication procedures currently defined in the 3GPP are described above. How the UE and the network perform authentication and establish the same key, for example, K_{AMF} is mainly defined in the primary authentication procedures. As shown in FIG. 4, in a ProSe relay communication procedure based on the primary authentication procedure, there are two UEs, including remote UE and relay UE. In this case, the AUSF network element authenticates the remote UE in a ProSe relay communication scenario through the primary authentication procedure. Based on an existing procedure, the AUSF network may store K_{AUSF} for the remote UE in an authentication process, and derive K_{SEAF} used for secure communication between the UE and the network. However, in the relay communication scenario, the remote UE does not establish a non-access stratum connection to a relay AMF network element, and does not register with the network via the relay AMF network element. Therefore, a security context between the UE and the network does not need to be established. In addition, in the relay communication scenario, secure communication between the remote UE and the relay UE needs to be established, that is, a required key needs to be derived for the relay UE. In the existing authentication procedure, this function implemented by the AUSF network element cannot be supported. In addition, in the relay communication scenario, an authentication procedure between the remote UE and the network is performed via the relay UE and the relay AMF. When the relay UE receives an authentication request, based on the existing procedure, the relay UE parses the authentication request, and performs network verification. Because an authentication parameter is determined based on a root key of the remote UE, the relay UE fails to verify the network, and the procedure is terminated. As a result, a communication connection cannot be established.

In conclusion, for the foregoing technical problem, embodiments of this application provide the following technical solutions, to establish secure ProSe relay communication. The following describes the technical solutions of this application with reference to the accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "for example" and "such as" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matched when differences of the terms are not emphasized. The terms "of (of)", "corresponding (corresponding, relevant)", and "corresponding (corresponding)" may be interchangeably used sometimes. It should be noted that meanings expressed by the terms are matched when differences of the terms are not emphasized. In addition, "/" mentioned in this application may be used to represent an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems with evolution of the network architecture and emergence of new service scenarios.

For ease of understanding embodiments of this application, a communication system shown in FIG. 7 is first used as an example to describe in detail a communication system applicable to embodiments of this application. FIG. 7 is a schematic diagram of an architecture of a communication system to which a communication method according to an embodiment of this application is applicable.

As shown in FIG. 7, the communication system may be used in the relay architecture (the layer-2 relay architecture or the layer-3 relay architecture) in the foregoing 5G architecture, and mainly includes remote UE, relay UE, an AMF network element, an AUSF network element, and a UDM network element. For related functions of the remote UE, the relay UE, the AMF network element, the AUSF network element, and the UDM network element, refer to related descriptions in the foregoing 1. 5G mobile communication system, 2. Short-distance communication, and 3. ProSe communication. Details are not described again. In the communication system in this embodiment of this application, after the remote UE performs access via the relay UE, the AUSF network element may be triggered to authenticate the remote UE and establish secure communication.

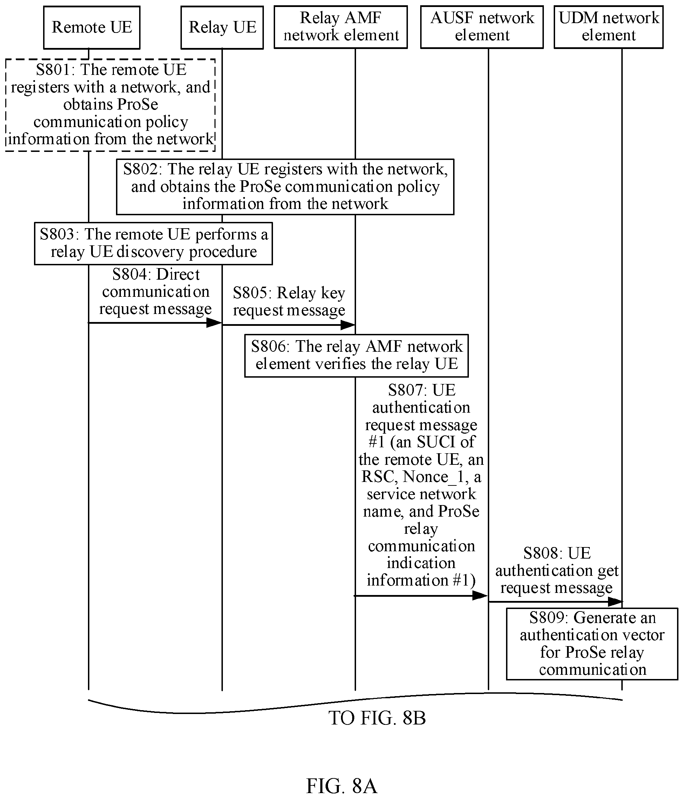

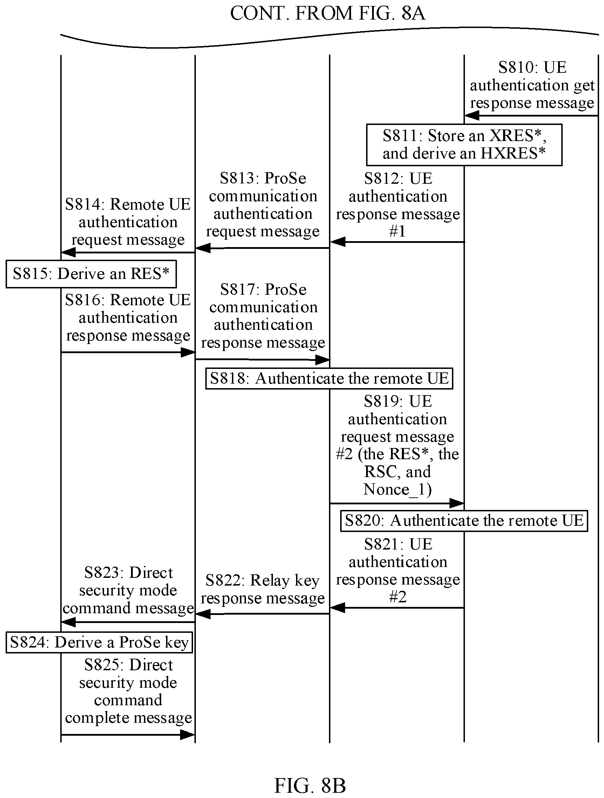

With reference to FIG. 8A and FIG. 8B to FIG. 14, the following specifically describes a procedure of interaction between the remote UE, the relay UE, the AMF network element, the AUSF network element, and the UDM network element by using method embodiments. For ease of understanding, the following first describes some main information elements in embodiments of this application, as shown in Table 1.

**Table 1**

| Information element name | Information element function |
|---|---|
| SUCI of remote UE | It can identify the remote UE and is used to select an AUSF network element. |
| 5G GUTI of relay UE | It can identify the relay UE |
| Nonce_1 | It is a random value determined by the remote UE, may indicate that authentication is ProSe relay communication authentication, and may be further used to derive a ProSe key. |
| RSC | It may indicate that the authentication is the ProSe relay communication authentication, and may be further used to derive the ProSe key. |
| Service network name | It may indicate that the authentication is the ProSe relay communication authentication, and may be further used to derive the ProSe key. |
| Nonce_2 | It is a random value determined by the AUSF network element, and may be used to derive the ProSe key. |
| K_{AUSF} | It is a key determined by the AUSF network element, a UDM network element, or an ARPF, and may be used to derive the ProSe key. |
| IK and CK | They are keys determined by the UDM network element, and may be used to derive the ProSe key. |
| IK' and CK' | They are keys determined by the UDM network element, and may be used to derive the ProSe key. |
| RAND | It is derived by the UDM network element or the ARPF, and may be used by the remote UE to authenticate a network. |
| AUTN | It is derived by the UDM network element or the ARPF, and may be used by the remote UE to authenticate the network. |
| Expected response (expected response, XRES) | It is derived by the UDM network element or the ARPF, and may be used by the AUSF network element to authenticate the remote UE. |
| Response (response, RES) | It is derived by the remote UE, and may be used by the AUSF network element to authenticate the remote UE. |
| XRES* | It is derived by the UDM network element or the ARPF based on the XRES, and may be used by the AUSF network element to authenticate the remote UE. |
| Hash expected response (hash expected response, HXRES)* | It is derived by the AUSF network element based on the XRES*, and may be used by a relay AMF network element to authenticate the remote UE. |
| RES* | It is derived by the remote UE, and may be used by the AUSF network element to authenticate the remote UE. |
| Hash response (hash response, HRES)* | It is derived by the relay AMF network element or an SEAF based on the RES*, and may be used by the relay AMF network element to authenticate the remote UE. |

The following describes various scenarios to which embodiments of this application are applied.

### Scenario 1

FIG. 8A and FIG. 8B are a schematic flowchart 1 of a communication method according to an embodiment of this application. The communication method is mainly applicable to communication between remote UE, relay UE, an AMF network element, an AUSF network element, and a UDM network element. The AMF network element may include a relay AMF network element and a remote AMF network element, and the two may be a same AMF network element or different AMF network elements. This is not specifically limited. The AUSF network element may be a remote AUSF network element. For example, the AUSF network element is determined based on an identifier of the remote UE, and is configured to support authentication performed on the remote LTE. Alternatively, the AUSF network element may be an AUSF network element in any other possible form. This is not specifically limited. The UDM network element may be a remote UDM network element. For example, the UDM network element is determined based on the identifier of the remote UE, and is configured to generate an authentication vector for the remote UE. Alternatively, the UDM network element may be a UDM network element in any other possible form. This is not specifically limited. In Scenario 1, the UDM determines, based on a request from the AUSF network element, to establish secure ProSe relay communication (which may also be referred to as a 5G AKA procedure of the ProSe relay communication, briefly referred to as 5G ProSe AKA) based on 5G AKA. In an enhanced 5G AKA authentication procedure, the AMF network element, the AUSF network element, and the UDM network element may interact with each other by using an existing service operation (namely, a service operation).

Specifically, as shown in FIG. 8A and FIG. 8B, a procedure of the communication method is as follows.

S801: The remote UE registers with a network, and obtains ProSe communication policy information from the network.

S802: The relay UE registers with the network, and obtains the ProSe communication policy information from the network.

The ProSe communication policy information is used to support the UE with one or more services of performing ProSe direct discovery, establishing ProSe direct communication, performing ProSe relay UE discovery, and establishing a relay communication connection. S801 is an optional step. To be specific, before performing a relay communication procedure, the remote UE may perform S801 to obtain the ProSe communication policy information, and perform relay discovery and establish a direct communication connection based on the ProSe communication policy information. Alternatively, before performing a relay communication procedure, if the remote UE does not access the network to obtain the ProSe communication policy information, the remote UE performs relay discovery and establishes a direct communication connection based on locally preconfigured ProSe communication policy information.

S803: The remote UE performs a relay discovery procedure.

If the remote UE needs to use the ProSe relay communication, the remote UE may discover the relay UE by performing the relay discovery procedure.

S804: The remote UE sends a direct communication request message to the relay UE. Correspondingly, the relay UE receives the direct communication request message from the remote UE.

The direct communication request message may be used by the remote UE to request to communicate with the relay UE, and includes: an SUCI of the remote UE, an RSC, and Nonce_1.

S805: The relay UE sends a relay key request message to the relay AMF network element. Correspondingly, the relay AMF network element receives the relay key request message from the relay UE.

The relay key request message is mainly used by the relay UE to request a key for relay communication, or to request a key for the ProSe relay communication, and includes: the SUCI of the remote UE, the RSC, and Nonce_1. Optionally, the relay key request message may further include an identifier of the relay UE, for example, a 5G GUTI.

S806: The relay AMF network element verifies the relay UE.

Specifically, the relay AMF network element may determine, based on subscription information of the relay UE from the UDM network element, whether the relay UE is authorized as a relay to provide a service.

A specific implementation principle of S803 to S806 is similar to that of S403 to S406. For details, refer to each other for understanding. Details are not described again.

S807: The relay AMF network element sends a UE authentication request message #1 to the AUSF network element. Correspondingly, the AUSF network element receives the UE authentication request message #1 from the relay AMF network element.

The relay AMF network element may select an AUSF network element based on the SUCI of the remote UE. For example, the relay AMF network element interacts with an NRF network element to determine a serving AUSF network element, or a serving AUSF network element is determined based on locally stored AUSF network element information. In this way, the relay AMF network element may determine, based on the relay key request message from the relay UE, to send the UE authentication request message #1 to the selected AUSF network element. For example, the relay AMF network element may determine, based on a message name, to send the UE authentication request message #1 to the AUSF network element.

The UE authentication request message #1 may be a Kausf_UEAuthentication_UEAuthentication_Authenticate Request message. The UE authentication request message #1 may be used to request to trigger a secure authentication procedure of establishing ProSe relay communication (briefly referred to as triggering ProSe authentication). This ensures that the AUSF derives a key used to protect the relay communication security, and prevents the AUSF from performing an incorrect procedure. The ProSe authentication is used by the remote UE to perform two-way authentication with the network via the relay UE, and to establish the key for secure communication between the remote UE and the relay UE. The UE authentication request message #1 includes the SUCI of the remote UE and a service network name, and may further include at least one of the following: the RSC, Nonce_1, or ProSe relay communication indication information #1 (for example, ProSe ind). The RSC, Nonce_1, the ProSe relay communication indication information #1, or the service network name may all indicate that the ProSe authentication is requested, or indicate that the authentication is performed on the remote UE. In other words, the UE authentication request message #1 may indicate, by using an information element carried in the UE authentication request message #1, to request to trigger the ProSe authentication. The information element may be a new information element or an existing information element. For the existing information element, a new value may be used for indication.

Specifically, in a possible manner, the UE authentication request message #1 may include the SUCI of the remote UE, the service network name, and the ProSe relay communication indication information #1, to request or trigger the ProSe authentication by using the ProSe relay communication indication information #1. On this basis, the relay AMF network element may subsequently send the RSC and Nonce_1 to the AUSF network element when determining that the remote UE is successfully authenticated, so that the AUSF network element derives a relay communication key, for example, a ProSe key.

Alternatively, in another possible manner, the UE authentication request message #1 may include the SUCI of the remote UE, the RSC, Nonce_1, and the service network name, to indicate to request the ProSe authentication by using the RSC and/or Nonce_1.

Alternatively, in still another possible manner, the UE authentication request message #1 may include the SUCI of the remote UE, the service network name, the RSC, Nonce_1, and the ProSe relay communication indication information #1, to request the ProSe authentication by using the displayed ProSe relay communication indication information #1.

In the foregoing three possible manners, the service network name may be SG:SN ID, 5G:ProSe, or 5G:ProSe∥SN ID.

Alternatively, in yet another possible manner, the UE authentication request message #1 may include the SUCI of the remote UE, the service network name, the RSC, and Nonce_1. If the service network name is set to 5G:ProSe5G or ProSe∥SN ID, the AUSF network element may determine, based on the specified service network name, that ProSe authentication is performed.

Alternatively, in another possible manner, the UE authentication request message #1 may include the SUCI of the remote UE and the service network name. If the service network name is set to 5G:ProSe or 5G:ProSe∥SN ID, the AUSF network element may determine, based on the specified service network name, that ProSe authentication is performed. In this manner, after receiving the following ProSe communication authentication response message, the relay AMF network element sends the RSC and Nonce_1 to the AUSF network element, so that the AUSF network element derives the ProSe key.

In addition, if receiving the RSC and Nonce_1 from the AMF network element, the AUSF network element stores the RSC and Nonce_1 for subsequently deriving the ProSe key.

It may be understood that the foregoing authentication manners indicated by setting the SN names are merely some examples, and a specific implementation of the authentication manner is not limited. For the following related descriptions, also refer to each other for understanding. Details are not described again.

S808: The AUSF network element sends a UE authentication get request message to the UDM network element. Correspondingly, the UDM network element receives the UE authentication get request message from the AUSF network element.

The AUSF network element may send the UE authentication get request message to the UDM network element based on the UE authentication request message #1. The UE authentication get request message may be a Nudm_UEAuthentication_Request request message. The UE authentication get request message may be used to request data for the ProSe authentication. The UE authentication get request message may include the SUCI of the remote UE and the service network name.

If the UE authentication request message #1 includes the SUCI of the remote UE, the service network name, and the ProSe relay communication indication information #1, the UE authentication get request message may further include ProSe relay communication indication information #2. The ProSe relay communication indication information #2 is used to request the data for the ProSe authentication, or indicates to obtain authentication data used for authenticating the remote UE. In other words, the UE authentication get request message may indicate, by using a displayed information element such as the ProSe relay communication indication information #2 carried in the UE authentication get request message, that the UE authentication get request message is used to request the data for the ProSe authentication. The AUSF network element may reuse the ProSe relay communication indication information #1, and encapsulate the ProSe relay communication indication information #1 into the UE authentication get request message. In this case, the ProSe relay communication indication information #1 and the ProSe relay communication indication information #2 may be same indication information. Alternatively, the AUSF network element may generate the ProSe relay communication indication information #2 based on the ProSe relay communication indication information #1 in the UE authentication request message #1. In this case, the ProSe relay communication indication information #1 and the ProSe relay communication indication information #2 may be different indication information.

If the UE authentication request message #1 includes the SUCI of the remote UE, the RSC, Nonce_1, and the service network name, the UE authentication get request message may further include the RSC, Nonce_1, or the ProSe relay communication indication information #2. The RSC, Nonce_1, or the ProSe relay communication indication information #2 is used to obtain the data for the ProSe authentication, or is used to obtain the authentication data for authenticating the remote UE.

If the UE authentication request message #1 includes the SUCI of the remote UE, the service network name, the RSC, Nonce_1, and the ProSe relay communication indication information #1, the UE authentication get request message may further include the RSC, Nonce_1, or the ProSe relay communication indication information #2. The RSC, Nonce_1, or the ProSe relay communication indication information #2 is used to obtain the data for the ProSe authentication, or is used to obtain the authentication data for authenticating the remote UE.

If the UE authentication request message #1 includes the SUCI of the remote UE, the service network name, the RSC, and Nonce_1, the service network name is set to 5G:ProSe or 5G:ProSe∥SN ID, and the AUSF network element determines, based on the specified service network name, that ProSe authentication is performed, the UE authentication get request message may further include the RSC and Nonce_1. In this case, the service network name indicates to obtain the data for the ProSe authentication, or indicates to obtain the authentication data for authenticating the remote UE.

If the UE authentication request message #1 includes the SUCI of the remote UE and the service network name, the service network name is set to 5G:ProSe or 5G:ProSe∥SN ID, and the AUSF determines, based on the specified service network name, that ProSe authentication is performed, the service network name indicates to obtain the data for the ProSe authentication, or indicates to obtain the authentication data for authenticating the remote UE.

It may be understood that various parameter combinations included in the UE authentication request message #1 are merely examples, and are not limited. For other combinations, also refer to each other for understanding. Details are not described again.

S809: The UDM network element generates an authentication vector for the ProSe relay communication.

After receiving the UE authentication get request message, the UDM network element may determine, based on the ProSe relay communication indication information #2, the RSC, or the service network name, to obtain the data for the ProSe authentication.

Specifically, the UDM network element may parse an SUCI to obtain an SUPI, or the UDM network element may invoke an SIDF to parse an SUCI to obtain an SUPI. The UDM network element may determine an authentication mechanism for the ProSe relay communication based on subscription data corresponding to the SUPI and the request message, for example, determine to use 5G AKA for the ProSe relay communication, namely, 5G ProSe AKA. In this way, the UDM network element may generate the authentication vector for the ProSe relay communication, for example, an authentication vector #1 for 5G ProSe AKA (5G ProSe AKA HE AV). The authentication vector #1 for 5G ProSe AKA may include a RAND, an AUTN, an XRES*, and K_{AUSF}. The RAND and the AUTN may be determined by the UDM network element, and are used by the remote UE to authenticate the network. The XRES* may be derived by the UDM network element or an ARPF based on an XRES, and is used by the AUSF network element to authenticate the remote UE. The XRES may be derived by the UDM network element or the ARPF based on a root key (K) and the RAND. K_{AUSF} is derived by the UDM network element or the ARPF based on an IK, a CK, and the service network name, and is used to derive the ProSe key.

It may be understood that the foregoing describes some implementations of the authentication vector #1 for 5G ProSe AKA, and any other possible implementation of the authentication vector #1 for 5G ProSe AKA may alternatively be replaced. For example, the authentication vector #1 for 5G ProSe AKA includes a RAND, an AUTN, an XRES, and K_{PROSE}. The XRES may still be derived by the UDM network element or an ARPF based on a root key and the RAND. K_{PROSE} may be derived by the UDM network element or the ARPF based on an IK, a CK, the service network name, and a character string (PROSE), and is used to derive the ProSe key. Alternatively, the UDM network element or the ARPF first derives K_{AUSF}, and then derives K_{PROSE} based on K_{AUSF}. A specific derivation method is not limited. For another example, the authentication vector #1 for 5G ProSe AKAincludes a RAND, an AUTN, an XRES*, and K_{PROSE}.

Optionally, that the UDM network element determines an authentication mechanism for the ProSe relay communication may alternatively include: If the UE authentication get request message carries a new information element (for example, the ProSe relay communication indication information #2 or the RSC), the UDM network element determines to use 5G ProSe AKA. Alternatively, the UDM network element determines to use 5G ProSe AKA by including a new SN name, for example, 5G: PROSE or 5G:ProSe∥SN ID.

Optionally, on a basis of determining to perform ProSe authentication, the UDM network element may determine, based on the subscription data corresponding to the SUPI, whether a user is authorized to use the relay communication. If it is determined that the user is authorized to use the relay communication, authorization check succeeds, and the procedure continues. Otherwise, the UDM network element sends, to the AUSF network element, a response message indicating that the authentication fails, and the procedure ends. It may be understood that a sequence of performing, by the UDM network element, a procedure of determining whether a user is authorized to use the relay communication and performing, by the UDM network element, a procedure of determining an authentication mechanism for the ProSe relay communication may not be limited.

It should be noted that 5G AKA for the ProSe relay communication is merely an example naming manner in this embodiment of this application, and may alternatively be replaced with any other possible naming manner, for example, AKA or 5G ProSe AKA for 5G ProSe relay communication. This is not limited herein. Similarly, a ProSe authentication vector #1 for 5G AKA is merely an example naming manner in this embodiment of this application, and may alternatively be replaced with any other possible naming manner, for example, a 5G AKAProSe authentication vector #1, an authentication vector #1 for 5G ProSe AKA, or an authentication vector #1 for 5G ProSe AKA. This is not limited herein.

S810: The UDM network element sends a UE authentication get response message to the AUSF network element. Correspondingly, the UDM network element receives the UE authentication get response message from the AUSF network element.

The UE authentication get response message may be used to respond to the UE authentication get request message. The UE authentication get response message may include the authentication vector #1 for 5G ProSe AKA, and optionally, may further include the SUPI. The UE authentication get response message may further indicate that the authentication vector #1 for 5G ProSe AKA is an authentication vector used for the ProSe relay communication. For example, on a basis that the UE authentication get response message already has indication information indicating that the authentication vector is used for 5G AKA, the indication information may be added to the UE authentication get response message, to indicate that 5G AKA supports the ProSe relay communication. Alternatively, indication information is added to the UE authentication get response message, to indicate that the authentication vector is used for 5G ProSe authentication and key management. That is, the authentication vector is used to perform two-way authentication between the remote UE and the network, and to establish the key for secure communication between the remote UE and the relay UE.

S811: The AUSF network element stores the XRES*, and derives an HXRES*.

After receiving the UE authentication get response message, the AUSF network element may store the XRES*, and optionally, further store the SUPI.

In a possible implementation, the AUSF network element may derive the HXRES* based on the XRES*, and the HXRES* may be used by the relay AMF network element to authenticate the remote UE. In a ProSe relay communication authentication procedure, the AUSF network element does not derive K_{SEAF}, to avoid generation of redundant information and a waste of resources.

Alternatively, in another possible implementation, the AUSF network element may not derive the HXRES*, and an authentication vector sent to the relay AMF network element in S812 may include the AUTN and the RAND, but does not include the HXRES*, so that the relay AMF network element may not subsequently perform authentication procedure from a perspective of a serving network. Alternatively, if the authentication vector from the UDM network element includes the XRES, an authentication vector sent to the relay AMF network element in S812 may also include the AUTN and the RAND, but does not include an HXRES, so that the relay AMF network element may not subsequently perform authentication procedure from a perspective of a serving network. This is not limited herein.

It may be understood that in the foregoing two implementations, a waste of network element resources can be avoided.

S812: The AUSF network element sends a UE authentication response message #1 to the relay AMF network element. Correspondingly, the relay AMF network element receives the UE authentication response message #1 from the AUSF network element.

The UE authentication response message #1 is a response message of the UE authentication request message #1. The UE authentication response message #1 may include a ProSe authentication vector #2 for 5G AKA (5G ProSe AKA SE AV). The ProSe authentication vector #1 for 5G AKA may include the RAND, the AUTN, and the HXRES*. In other words, the AUSF network element may replace the XRES* in the ProSe authentication vector #1 for 5G AKA with the HXRES*, and remove K_{AUSF} from the ProSe authentication vector #1 for 5G AKA, to obtain the ProSe authentication vector #2 for 5G AKA.

In addition, based on descriptions in S811, in a possible implementation, the ProSe authentication vector #2 for 5G AKA may include the RAND and the AUTN, but does not include the HXRES or the HXRES*.

Optionally, the UE authentication response message #1 may also include indication information, for indicating that the authentication vector is used to authenticate the remote UE.

It should be noted that, the ProSe authentication vector #2 for 5G AKA is merely an example naming manner in this embodiment of this application, and may alternatively be replaced with any other possible naming manner, for example, a 5G AKA ProSe authentication vector #2, a 5G ProSe AKA authentication vector #2, or an authentication vector #2 for 5G ProSe AKA. This is not limited herein.

S813: The relay AMF network element sends a ProSe communication authentication request message to the relay UE. Correspondingly, the relay UE receives the ProSe communication authentication request message from the relay AMF network element.

The ProSe communication authentication request message may indicate to authenticate the remote UE, or indicate the relay UE to send authentication data to the remote UE. This prevents the relay UE from autonomously performing authentication after the relay UE receives the ProSe communication authentication request message, avoids an authentication failure, and a communication connection cannot be established. The ProSe communication authentication request message may be used for indication by using a message type of the ProSe communication authentication request message or indication information carried in the ProSe communication authentication request message. Certainly, the ProSe communication authentication request message may alternatively indicate, by adding indication information to an existing message (for example, the authentication request message), the relay UE to send authentication data to the remote UE, or indicate to authenticate the remote UE. This is not limited herein. The ProSe communication authentication request message may include the RAND and the AUTN (authentication data). To be specific, the relay AMF network element may obtain the RAND and the AUTN from the authentication vector #2 for 5G ProSe AKA, and encapsulate the RAND and the AUTN into the ProSe communication authentication request message. The RAND and the AUTN are used by the remote UE to authenticate the network.

Optionally, before the relay AMF network element sends the ProSe communication authentication request message to the relay UE, the relay AMF skips obtaining an ngKSI and an ABBA parameter. Alternatively, the relay AMF network element skips generating an ngKSI and an ABBA parameter. The relay AMF network element does not send the ngKSI and the ABBA parameter to the relay UE. That is, the ProSe communication authentication request message does not include the ngKSI and the ABBA parameter.

It should be noted that the ProSe communication authentication request message is merely an example naming manner in this embodiment of this application, and may alternatively be replaced with any other possible naming manner, for example, a ProSe authentication request message, a remote UE ProSe authentication request message, or an existing authentication request. In addition, a specific implementation of S813 may alternatively be introducing a new container information element into an existing message, where a container includes the RAND and the AUTN. If receiving the message including the container, the relay UE performs S814.

S814: The relay UE sends a remote UE authentication request message to the remote LTE. Correspondingly, the remote UE receives the remote UE authentication request message from the relay UE.

The remote UE authentication request message may indicate to authenticate the remote UE, or indicate the remote UE to perform ProSe authentication. This ensures that the remote UE and the network perform authentication and derive the ProSe key, the secure communication between the remote UE and the relay UE is established. For example, the remote UE authentication request message may indicate, by using a message type of the remote UE authentication request message or indication information carried in the remote UE authentication request message, the remote UE to perform ProSe authentication. Certainly, the remote UE authentication request message may alternatively indicate, by using indication information carried in an existing message, to authenticate the remote UE, or indicate the remote UE to perform ProSe authentication. This is not limited herein. The remote UE authentication request message may include the RAND and the AUTN. In other words, after receiving the ProSe communication authentication request message, the relay UE may continue to encapsulate the RAND and the AUTN that are carried in the ProSe communication authentication request message into the remote UE authentication request message, for the remote UE to use during the authentication.

It should be noted that the remote UE authentication request message is merely an example naming manner in this embodiment of this application, and may alternatively be replaced with any other possible naming manner, for example, a remote UE ProSe communication authentication request message or a remote UE ProSe authentication request message. In addition, if receiving the container, the relay UE directly forwards the container to the remote UE.

S815: The remote UE derives an RES*.

The RES* may be used to authenticate the remote UE.

The remote UE may include an ME and a USIM. After the remote UE receives the remote UE authentication request message, the USIM may verify the AUTN based on the RAND and a root key of the USIM. If the USIM fails to verify the AUTN, it indicates that the UE fails to authenticate the network, and the procedure ends. If the USIM successfully verifies the AUTN, it indicates that the UE successfully authenticates the network. After the UE successfully authenticates the network, the USIM may derive an RES, the CK, and the IK by using the root key and the RAND, and send the RES, the CK, and the IK to the ME. The ME may derive K_{AUSF} based on the CK and the IK, derive the RES* based on the RES, and then perform S816. In the ProSe authentication, the ME may not derive K_{SEAF}, to improve authentication efficiency.

It should be noted that, it can be learned from related descriptions in S809 and S811 that if a network side uses a new key derivation method or a new authentication parameter derivation method, the remote UE also uses a method that is the same as that on the network side to perform key derivation or authentication parameter derivation and generate other authentication data.

S816: The remote UE sends a remote UE authentication response message to the relay LTE. Correspondingly, the relay UE receives the remote UE authentication response message from the remote UE.

The remote UE authentication response message is a response message of the remote UE authentication request message. Optionally, the ProSe communication authentication response message may indicate that the remote UE authentication response message is an authentication response message of the remote UE, for example, may indicate by using a type of the message or an information element included in the message that the remote UE authentication response message is the authentication response message of the remote LTE. The remote UE authentication response message may include the RES*.

It should be noted that the remote UE authentication response message is merely an example naming manner in this embodiment of this application, and may alternatively be replaced with any other possible naming manner, for example, a remote UE ProSe communication authentication response message or a remote UE ProSe authentication response message.

S817: The relay UE sends a ProSe communication authentication response message to the relay AMF network element. Correspondingly, the relay AMF network element receives the ProSe communication authentication response message from the relay UE.

The ProSe communication authentication response message is a response message of the ProSe communication authentication request message. The ProSe communication authentication response message may include the RES*. In other words, the relay UE may obtain the RES* from the remote UE authentication response message, and continue to encapsulate the RES* into the ProSe communication authentication response message.

It should be noted that the ProSe communication authentication response message is merely an example naming manner in this embodiment of this application, and may alternatively be replaced with any other possible naming manner, for example, a ProSe authentication response message or a remote UE ProSe authentication response message.

S818: The relay AMF network element authenticates the remote UE.

After receiving the ProSe communication authentication response message, the relay AMF network element may derive an HRES* based on the received RES*, to compare the HRES* with the HXRES* obtained in S812. If the HRES* does not match the HXRES*, for example, the HRES* is different from the HXRES*, it indicates that the remote UE fails to be authenticated, and the authentication procedure ends. If the HRES* matches the HXRES*, for example, the HRES* is the same as the HXRES*, it indicates that the UE is successfully authenticated, or it is considered that the authentication succeeds from a perspective of a serving network, and S819 is then performed.

It may be understood that if the HXRES * is not derived in S811, the relay AMF network element does not need to derive the HRES*, and does not need to perform authentication from a perspective of the serving network.

S819: The relay AMF network element sends a UE authentication request message #2 to the AUSF network element. Correspondingly, the AUSF network element receives the UE authentication request message #2 from the relay AMF network element.

The UE authentication request message #2 may be used to request to perform ProSe authentication on the remote UE. For example, the UE authentication request message #2 may indicate, by using new indication information, to authenticate the remote UE. The UE authentication request message #2 may include the RES*. In other words, after successfully authenticating the remote UE, the relay AMF network element may encapsulate the RES* into the UE authentication request message #2, and then send the UE authentication request message #2 to the AUSF network element. Optionally, if the UE authentication request message #1 in S807 does not carry the RSC and Nonce_1, the UE authentication request message #2 may further include the RSC and Nonce_1. That is, the relay AMF network element may further encapsulate the RSC and Nonce_1 into the UE authentication request message #2. Alternatively, when the UE authentication request message #1 in S807 carries the RSC and Nonce_1, the UE authentication request message #2 may still include the RSC and Nonce_1. In this case, the RSC and Nonce_1 may also indicate to authenticate the remote UE.

S820: The AUSF network element authenticates the remote UE.

After receiving the UE authentication request message #2, the AUSF network element may compare the RES* with the previously stored XRES*. If the RES* does not match the XRES*, for example, the RES* is different from the XRES*, it indicates that the remote UE fails to be authenticated, and the procedure ends. If the RES* matches the XRES*, for example, the RES* is the same as the XRES*, it indicates that the remote UE is successfully authenticated, or it is considered that the authentication succeeds from a perspective of a home network. On this basis, the AUSF network element may generate Nonce_2, and derive a ProSe key (K_{NR_ProSe}) based on the previously stored K_{AUSF}, RSC, and Nonce_1, and Nonce_2, to be used for the communication between the remote UE and the relay UE. For example, the AUSF network element may first derive an intermediate key based on K_{AUSF} and the RSC, and then derive the ProSe key based on the intermediate key, Nonce_1, and Nonce_2. Alternatively, the AUSF network element may directly derive the ProSe key based on K_{AUSF}, the RSC, Nonce_1, and Nonce_2. Alternatively, the AUSF network element may derive the ProSe key in any other possible manner. This is not specifically limited.

Optionally, after successfully authenticating the remote UE, the AUSF network element may determine, based on a case in which the authentication is the ProSe authentication, to skip a procedure of sending an authentication result to the UDM network element. That is, the AUSF network element does not send the authentication result to the UDM network element, and perform S821, to send a UE authentication response message #2 to the relay AMF network element. This ensures that only a necessary procedure is performed, and avoids a waste of resources.

Optionally, when determining to authenticate the remote UE, the AUSF network element performs the foregoing process of deriving the ProSe key.

It should be noted that the ProSe key is merely an example naming manner in this embodiment of this application, and may alternatively be replaced with any other possible naming manner, for example, a ProSe communication key. In addition, if the key in the ProSe authentication vector #1 for 5G AKA is K_{PROSE}, the AUSF network element needs to use K_{PROSE} to derive the ProSe key. That is, K_{AUSF} is replaced with K_{PROSE}.

S821: The AUSF network element sends a UE authentication response message #2 to the relay AMF network element. Correspondingly, the relay AMF network element receives the UE authentication response message #2 from the AUSF network element.

The UE authentication response message #2 is a response message of the UE authentication request message #2, and may indicate that the remote UE is successfully authenticated. The UE authentication response message #2 may include the ProSe key and Nonce_2. In other words, after determining that the remote UE is successfully authenticated, the AUSF network element may encapsulate the ProSe key and Nonce_2 into the UE authentication response message #2, and then send the UE authentication response message #2 to the relay AMF network element.

Optionally, the UE authentication response message #2 may further include an SUPI of the remote UE. The SUPI of the remote UE may indicate the relay UE to report, to the network side, information about executing the remote UE.

S822: The relay AMF network element sends a relay key response message to the relay UE. Correspondingly, the relay UE receives the relay key response message from the relay AMF network element.

The relay key response message is a response message of the relay key request message, may include the ProSe key and Nonce_2, and optionally, may further include the SUPI of the remote UE. In other words, after receiving the UE authentication response message #2, the relay AMF network element may obtain the ProSe key and Nonce_2 based on the UE authentication response message #2. Optionally, the relay AMF network element may further obtain the SUPI of the remote UE, and encapsulate the SUPI of the remote UE into the relay key response message, to send the relay key response message to the relay UE. Correspondingly, the relay UE may store the ProSe key, and optionally, may further store the SUPI of the remote UE.

S823: The relay UE sends a direct security mode command message to the remote UE. Correspondingly, the remote UE receives the direct security mode command message from the relay UE.

The direct security mode command message may indicate to establish PC5 security. The direct security mode command message may include Nonce_2. In other words, after receiving the relay key response message, the relay UE may obtain Nonce_2 from the relay key response message, and then encapsulate Nonce_2 into the direct security mode command message, to send the direct security mode command message to the remote UE.

S824: The remote UE derives the ProSe key.

The remote UE may derive the ProSe key in a manner the same as that of the AUSF, to be specific, derive the ProSe key based on the previously derived K_{AUSF}, RSC, Nonce_1, and Nonce_2. In addition, if the key derived by the remote UE is K_{PROSE}, the remote UE needs to use K_{PROSE} to derive the ProSe key. That is, K_{AUSF} is replaced with K_{PROSE}.

S825: The remote UE sends a direct security mode command complete message to the relay UE. Correspondingly, the relay UE receives the direct security mode command complete message from the remote UE.

The direct security mode command complete message is a response message of the direct security mode command message, and indicates that the remote UE has determined the ProSe key.

So far, both the remote UE and the relay UE obtain the same ProSe key, and may derive a session key for a PC5 connection based on the ProSe key, which, for example, includes an encryption key and an integrity protection key, so that ProSe relay communication security is ensured. Because the interaction between the relay AMF network element, the AUSF network element, and the UDM network element may be implemented by reusing the existing service operation, the authentication between the remote UE and the network is implemented without introducing a new service operation, and the key for the secure communication between the relay UE and the remote UE is generated.

It should be noted that the message #1, the message #2, the vector #1, the vector #2, and the like mentioned in the procedure shown in FIG. 8A and FIG. 8B are merely used for distinguishing between names, and are not used as any limitation.

### Scenario 2

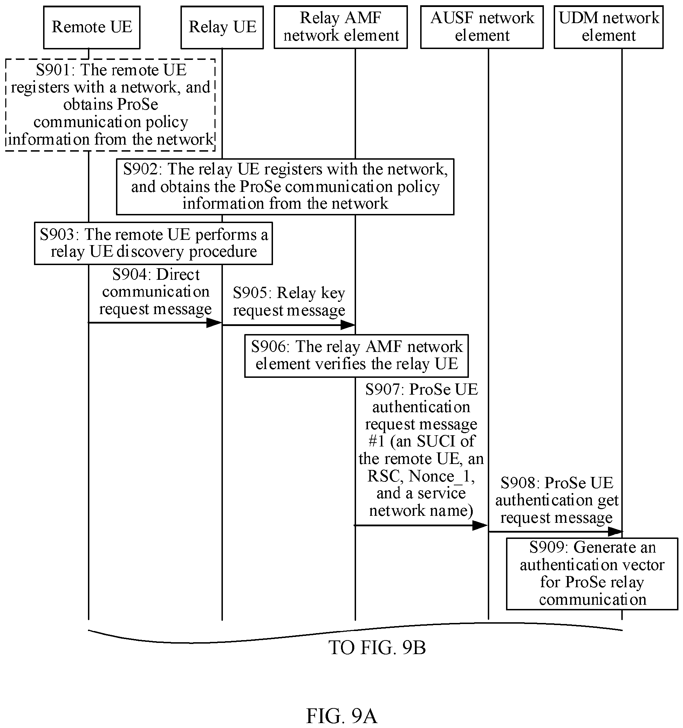

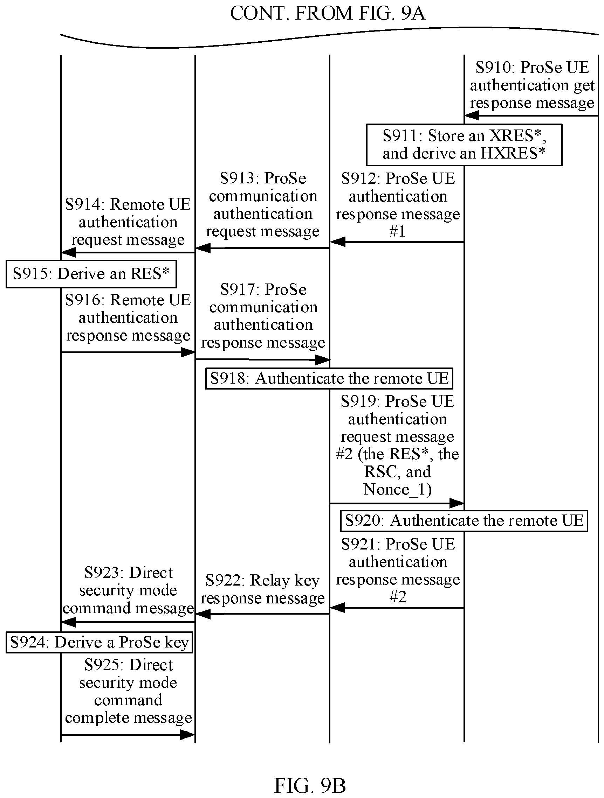

FIG. 9A and FIG. 9B are a schematic flowchart 2 of a communication method according to an embodiment of this application. The communication method is mainly applicable to communication between remote UE, relay UE, an AMF network element, an AUSF network element, and a UDM network element. The AMF network element may include a relay AMF network element and a remote AMF network element, and the two may be a same AMF network element or different AMF network elements. This is not specifically limited. The AUSF network element may be a remote AUSF network element. For example, the AUSF network element is determined based on an identifier of the remote UE, and is configured to support authentication performed on the remote UE. Alternatively, the AUSF network element may be an AUSF network element in any other possible form. This is not specifically limited. The UDM network element may be a remote UDM network element. For example, the UDM network element is determined based on the identifier of the remote UE, and is configured to generate an authentication vector for the remote UE. Alternatively, the UDM network element may be a UDM network element in any other possible form. This is not specifically limited. In Scenario 2, the UDM network element determines, based on a request from the AUSF, to establish secure ProSe relay communication (which may also be referred to as a 5G AKA procedure of the ProSe relay communication, briefly referred to as 5G ProSe AKA) based on enhanced 5G AKA. In the 5G AKA authentication procedure of the ProSe relay communication, the AMF network element, the AUSF network element, and the UDM network element may interact with each other by using a new service operation or a new service name.

Specifically, as shown in FIG. 9A and FIG. 9B, a procedure of the communication method is as follows.

S901: The remote UE registers with a network, and obtains ProSe communication policy information from the network.

S902: The relay UE registers with the network, and obtains the ProSe communication policy information from the network.

A specific implementation principle of S901 and S902 is similar to that of S801 and S802. For details, refer to each other for understanding. Details are not described again.

S903: The remote UE performs a relay discovery procedure.

If the remote UE needs to use the ProSe relay communication, the remote UE may discover the relay UE by performing the relay discovery procedure.

S904: The remote UE sends a direct communication request message to the relay UE. Correspondingly, the relay UE receives the direct communication request message from the remote UE.

The direct communication request message may be used by the remote UE to request to communicate with the relay UE, and includes: an SUCI of the remote UE, an RSC, and Nonce_1.

S905: The relay UE sends a relay key request message to the relay AMF network element. Correspondingly, the relay AMF network element receives the relay key request message from the relay UE.

The relay key request message is mainly used by the relay UE to request relay communication, or to request a key for the ProSe relay communication, and includes: the SUCI of the remote UE, the RSC, and Nonce_1. Optionally, the relay key request message may further include an identifier of the relay UE, for example, a 5G GUTI.

S906: The relay AMF network element verifies the relay UE.

Specifically, the relay AMF network element determines, based on subscription information of the relay UE from the UDM network element, whether the relay UE is authorized as a relay to provide a service.

A specific implementation principle of S903 to S906 is similar to that of S403 to S406. For details, refer to each other for understanding. Details are not described again.

S907: The relay AMF network element sends a ProSe UE authentication request (Nausf_ProSeUEAuthentication_Authenticate Request or Nausf_UEAuthentication_ProSeAuthenticate Request) message #1 to the AUSF network element.

Correspondingly, the AUSF network element receives the ProSe UE authentication request message #1 from the relay AMF network element.

The relay AMF network element may select an AUSF network element based on the SUCI of the remote UE. For example, the relay AMF network element interacts with an NRF network element to determine a serving AUSF network element, or a serving AUSF network element is determined based on locally stored AUSF network element information. In this way, the relay AMF network element may determine, based on the relay key request message from the relay UE, to send the ProSe UE authentication request message #1 to the selected AUSF network element. For example, the relay AMF network element may determine, based on a message name, to send the ProSe UE authentication request message #1 to the AUSF network element.

The ProSe UE authentication request message #1 may be used to request a secure authentication procedure of establishing ProSe relay communication (which may be briefly referred to as triggering ProSe authentication), or to trigger ProSe authentication. This ensures that the AUSF derives the key used to protect the relay communication security, and prevents the AUSF from performing an incorrect procedure. For example, the ProSe UE authentication request message #1 may indicate, by using a service type of the ProSe UE authentication request message #1, a service operation, or a service name, that the ProSe UE authentication request message #1 is used to request the ProSe authentication. The ProSe authentication is used by the remote UE to perform two-way authentication with the network via the relay UE, and to establish the key for secure communication between the remote UE and the relay UE. The ProSe UE authentication request message #1 may include at least one of the following: the SUCI of the remote UE, the RSC, Nonce_1, or a service network name.

Specifically, in a possible manner, the ProSe UE authentication request message #1 may include the SUCI of the remote UE and the service network name. On this basis, the relay AMF network element may subsequently send the RSC and Nonce_1 to the AUSF network element when determining that the remote UE is successfully authenticated, to further provide parameters as required. Alternatively, in another possible manner, the ProSe UE authentication request message #1 may include the SUCI of the remote UE, the RSC, Nonce_1, and a service network name.

The service network name may be SG:SN ID, 5G:ProSe, or 5G:ProSe∥SN ID. If 5G:ProSe or 5G:ProSe∥SN ID is used, it can be ensured that using the AV vector is different from direct authentication, so that the securely isolated key is achieved.

It should be noted that, a name of the ProSe UE authentication request message indicating a new service name or a service operation is merely an example, and may alternatively be replaced with any other possible name, for example, a 5G ProSe UE authentication request message, a ProSe communication UE authentication request message, or a 5G ProSe communication UE authentication request message. This is not limited herein.

S908: The AUSF network element sends a ProSe UE authentication get request (Nudm_ProSeUEAuthentication_Get Request or Nudm_UEAuthentication_GetProSeAV) message to the UDM network element.

Correspondingly, the UDM network element receives the ProSe UE authentication get request message from the AUSF network element.

The AUSF network element may send the ProSe UE authentication get request message to the UDM network element based on the ProSe UE authentication request message #1. The ProSe UE authentication get request message may be used to request ProSe authentication (to trigger ProSe authentication). For example, the ProSe UE authentication get request message may indicate, by using a service type of the ProSe UE authentication get request message, a service operation, or a service name, that the ProSe UE authentication get request message is used to request the ProSe authentication. The ProSe UE authentication get request message may include the SUCI of the remote UE.

It may be understood that the foregoing implementations of the ProSe UE authentication get request message are merely some examples, and are not limited. For example, the ProSe UE authentication get request message may still carry the ProSe relay communication indication information #2, to indicate, by using the ProSe relay communication indication information #2, that the ProSe UE authentication get request message is used to request the ProSe authentication. For a specific implementation principle of the ProSe relay communication indication information #2, refer to related descriptions in S808. Details are not described again.

It should be noted that, a name of the ProSe UE authentication get request message indicating a new service name or a service operation is merely an example, and may alternatively be replaced with any other possible name, for example, a 5G ProSe UE authentication get request message, a ProSe communication UE authentication get request message, or a 5G ProSe communication UE authentication get request message. This is not limited herein.

S909: The UDM network element generates an authentication vector for the ProSe relay communication.

The UDM network element may determine, based on the ProSe UE authentication get request message, to perform ProSe authentication. On this basis, the UDM network element may parse an SUCI to obtain an SUPI, or the UDM network element may invoke an SIDF to parse an SUCI to obtain an SUPI. The UDM network element may determine an authentication mechanism for the ProSe relay communication based on subscription data corresponding to the SUPI, for example, determine to use 5G AKA for ProSe relay communication, namely, 5G ProSe AKA. In this way, the UDM network element may generate the authentication vector for the ProSe relay communication. For a specific implementation principle, refer to related descriptions in S809. Details are not described again.

Optionally, on a basis of determining to perform ProSe authentication, the UDM network element may determine, based on the subscription data corresponding to the SUPI, whether a user is authorized to use the relay communication. For a specific implementation principle, also refer to related descriptions in S809. Details are not described again.

S910: The UDM network element sends a ProSe UE authentication get response (Nudm_ProSeUEAuthentication_Get Response or Nudm_ProSeUEAuthentication_GetProSeAV Response) message to the AUSF network element.

Correspondingly, the UDM network element receives the ProSe UE authentication get response message from the AUSF network element.

The ProSe UE authentication get response message is a response message of the ProSe UE authentication get request message. The ProSe UE authentication get response message may include an authentication vector #1 for 5G ProSe AKA, and optionally, may further include the SUPI. The ProSe UE authentication get response message may further indicate that the authentication vector #1 for 5G ProSe AKA is a 5G AKA authentication vector that supports the ProSe relay communication. For example, the ProSe UE authentication get response message may indicate, by using a message type of the ProSe UE authentication get response message, a service operation, or a service name, that the authentication vector is used for 5G AKA, and 5G AKA supports the ProSe relay communication. Alternatively, the ProSe UE authentication get response message may indicate, by using carried indication information, that the authentication vector is used for 5G AKA, and 5G AKA supports the ProSe relay communication.

It should be noted that a name of the ProSe UE authentication get response message indicating a new service name or a service operation is merely an example, and may alternatively be replaced with any other possible naming manner, for example, a 5G ProSe UE authentication response request message, a ProSe communication UE authentication get response message, or a 5G ProSe communication UE authentication get response message. This is not limited herein.

S911: The AUSF network element stores an XRES*, and derives an HXRES*.

A specific implementation principle of S911 is similar to that of S811. For details, refer to each other for understanding. Details are not described again.

S912: The AUSF network element sends a ProSe UE authentication response (Nausf_ProSeUEAuthentication_Authenticate response or Nausf_UEAuthentication_ProSeAuthenticate response) message #1 to the relay AMF network element.

Correspondingly, the relay AMF network element receives the ProSe UE authentication response message #1 from the AUSF network element.

The ProSe UE authentication response message #1 is a response message of the ProSe UE authentication request message #1. The ProSe UE authentication response message #1 may include an authentication vector #2 for 5G ProSe AKA. For a specific implementation principle, refer to related descriptions in S812. Details are not described again. The ProSe UE authentication response message #1 may further indicate that the authentication vector #2 for 5G ProSe AKA is 5G AKA that supports the ProSe relay communication. For example, the ProSe UE authentication response message #1 may indicate, by using a message type of the ProSe UE authentication response message #1, a service operation, or a service name, that the authentication vector is used for 5G AKA, and 5G AKA supports the ProSe relay communication. Alternatively, the ProSe UE authentication response message #1 may indicate, by using carried indication information, that the authentication vector is used for 5G AKA, and 5G AKA supports the ProSe relay communication.

It should be noted that a name of the ProSe UE authentication response message indicating a new service name or a service operation is merely an example, and may alternatively be replaced with any other possible naming manner, for example, a 5G ProSe UE authentication response message, a ProSe communication UE authentication response message, or a 5G ProSe communication UE authentication response message. This is not limited herein.

S913: The relay AMF network element sends a ProSe communication authentication request message to the relay UE. Correspondingly, the relay UE receives the ProSe communication authentication request message from the relay AMF network element.

S914: The relay UE sends a remote UE authentication request message to the remote UE. Correspondingly, the remote UE receives the remote UE authentication request message from the relay UE.

S915: The remote UE derives an RES*.

S916: The remote UE sends a remote UE authentication response message to the relay UE. Correspondingly, the remote UE receives the remote UE authentication response message from the relay UE.

S917: The relay UE sends a ProSe communication authentication response message to the relay AMF network element. Correspondingly, the relay AMF network element receives the ProSe communication authentication response message from the relay UE.

S918: The relay AMF network element authenticates the remote UE.

A specific implementation principle of S913 to S918 is similar to that of S813 to S818. For details, refer to each other for understanding. Details are not described again.

S919: The relay AMF network element sends a ProSe UE authentication request message #2 to the AUSF network element. Correspondingly, the AUSF network element receives the ProSe UE authentication request message #2 from the relay AMF network element.

The ProSe UE authentication request message #2 may be used to request to perform ProSe authentication on the remote UE, and includes the RES*. In other words, after successfully authenticating the remote UE, the relay AMF network element may encapsulate the RES* into the ProSe UE authentication request message #2, and then send the ProSe UE authentication request message #2 to the AUSF network element. Optionally, if the UE authentication request message #1 in S907 does not carry the RSC and Nonce_1, the ProSe UE authentication request message #2 may further include the RSC and Nonce_1. That is, the relay AMF network element may further encapsulate the RSC and Nonce_1 into the ProSe UE authentication request message #2. Alternatively, when the ProSe UE authentication request message #1 in S907 carries the RSC and Nonce_1, the ProSe UE authentication request message #2 may still include the RSC and Nonce_1.

S920: The AUSF network element authenticates the remote UE.

A specific implementation principle of S920 is similar to that of S820. For details, refer to each other for understanding. Details are not described again.

S921: The AUSF network element sends a ProSe UE authentication response message #2 to the relay AMF network element. Correspondingly, the relay AMF network element receives the ProSe UE authentication response message #2 from the AUSF network element.

The ProSe UE authentication response message #2 is a response message of the ProSe UE authentication request message #2, and may indicate that the remote UE is successfully authenticated. The ProSe UE authentication response message #2 may include a ProSe key and Nonce_2.

S922: The relay AMF network element sends a relay key response message to the relay UE. Correspondingly, the relay UE receives the relay key response message from the relay AMF network element.

S923: The relay UE sends a direct security mode command message to the remote UE. Correspondingly, the remote UE receives the direct security mode command message from the relay UE.

S924: The remote UE derives the ProSe key.

S925: The remote UE sends a direct security mode command complete message to the relay UE. Correspondingly, the relay UE receives the direct security mode command complete message from the remote UE.

A specific implementation principle of S921 to S925 is similar to that of S821 to S825. For details, refer to each other for understanding. Details are not described again.

So far, both the remote UE and the relay UE obtain the same ProSe key, and may derive a session key for a PC5 connection based on the ProSe key, which, for example, includes an encryption key and an integrity protection key, so that ProSe relay communication security is ensured. Because the interaction between the relay AMF network element, the AUSF network element, and the UDM network element may be implemented by using new signaling, decoupling from an existing authentication procedure is implemented, and impact of the authentication procedure on the ProSe authentication is avoided.

It should be noted that the message #1, the message #2, the vector #1, the vector #2, and the like mentioned in the procedure shown in FIG. 9A and FIG. 9B are merely used for distinguishing between names, and are not used as any limitation.

### Scenario 3

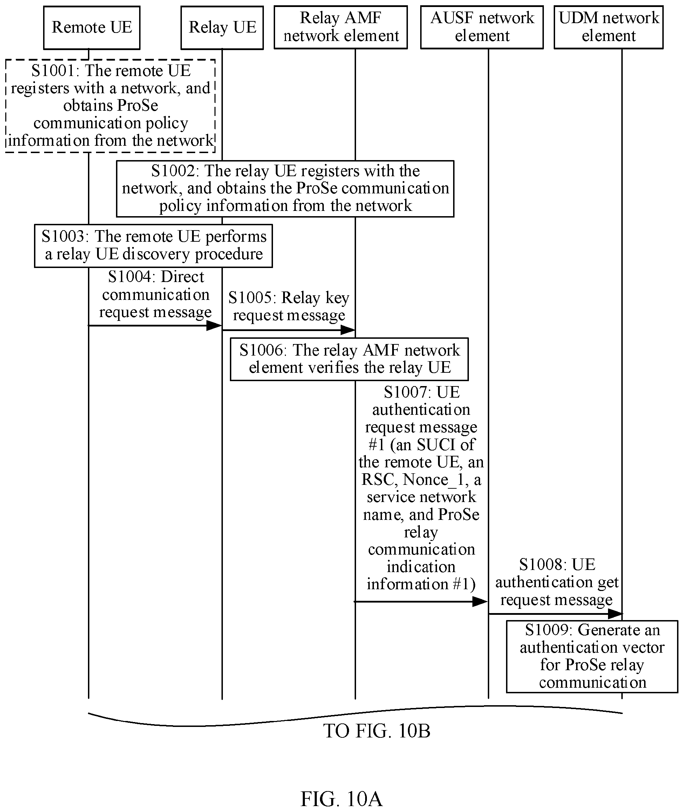

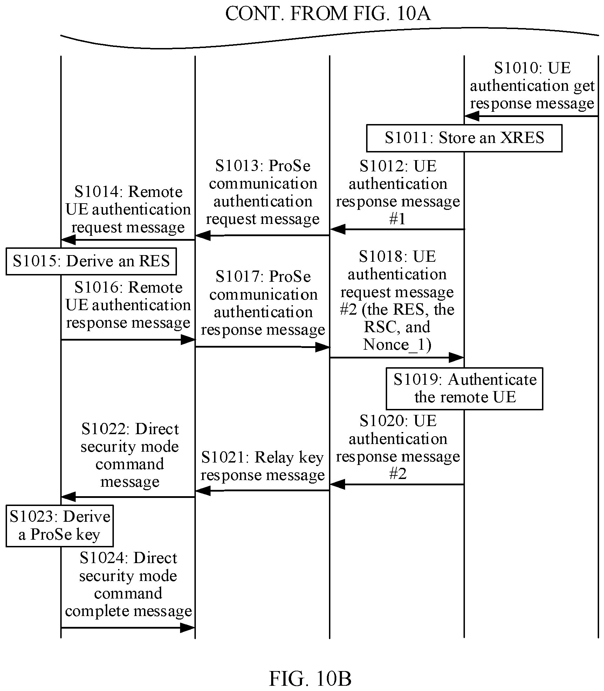

FIG. 10A and FIG. 10B are a schematic flowchart 3 of a communication method according to an embodiment of this application. The communication method is mainly applicable to communication between remote UE, relay UE, an AMF network element, an AUSF network element, and a UDM network element. The AMF network element may include a relay AMF network element and a remote AMF network element, and the two may be a same AMF network element or different AMF network elements. This is not specifically limited. The AUSF network element may be a remote AUSF network element. For example, the AUSF network element is determined based on an identifier of the remote UE, and is configured to support authentication performed on the remote UE. Alternatively, the AUSF network element may be an AUSF network element in any other possible form. This is not specifically limited. The UDM network element may be a remote UDM network element. For example, the UDM network element is determined based on the identifier of the remote UE, and is configured to generate an authentication vector for the remote UE. Alternatively, the UDM network element may be a UDM network element in any other possible form. This is not specifically limited. In Scenario 3, the UDM network element determines, based on a request from the AUSF network element, to establish secure ProSe relay communication (which may also be referred to as an EAP-AKA' procedure of the ProSe relay communication, briefly referred to as ProSe EAP-AKA') based on EAP AKA'. In an EAP-AKA' authentication procedure of the ProSe relay communication, the AMF network element, the AUSF network element, and the UDM network element may interact with each other by using an existing service operation.

Specifically, as shown in FIG. 10A and FIG. 10B, a procedure of the communication method is as follows.

S1001: The remote UE registers with a network, and obtains ProSe communication policy information from the network.

S1002: The relay UE registers with the network, and obtains the ProSe communication policy information from the network.

A specific implementation principle of S1001 and S1002 is similar to that of S801 and S802. For details, refer to each other for understanding. Details are not described again.

S1003: The remote UE performs a relay discovery procedure.

If the remote UE needs to use the ProSe relay communication, the remote UE may discover the relay UE by performing the relay discovery procedure.

S1004: The remote UE sends a direct communication request message to the relay UE. Correspondingly, the relay UE receives the direct communication request message from the remote UE.

The direct communication request message may be used by the remote UE to request to communicate with the relay UE, and includes: an SUCI of the remote UE, an RSC, and Nonce_1.

S1005: The relay UE sends a relay key request message to the relay AMF network element. Correspondingly, the relay AMF network element receives the relay key request message from the relay UE.

The relay key request message is mainly used by the relay UE to request a key for relay communication, or to request a key for the ProSe relay communication, and includes: the SUCI of the remote UE, the RSC, and Nonce_1. Optionally, the relay key request message may further include an identifier of the relay UE, for example, a 5G GUTI.

S1006: The relay AMF network element verifies the relay UE.

Specifically, the relay AMF network element may determine, based on subscription information of the relay UE from the UDM network element, whether the relay UE is authorized as a relay to provide a service.

A specific implementation principle of S1003 to S1006 is similar to that of S403 to S406. For details, refer to each other for understanding. Details are not described again.

S1007: The relay AMF network element sends a UE authentication request message #1 to the AUSF network element. Correspondingly, the AUSF network element receives the UE authentication request message #1 from the relay AMF network element.

S1008: The AUSF network element sends a UE authentication get request message to the UDM network element. Correspondingly, the UDM network element receives the UE authentication get request message from the AUSF network element.

A specific implementation principle of S1007 and S1008 is similar to that of S807 and S808. For details, refer to each other for understanding. Details are not described again.

S1009: The UDM network element generates an authentication vector for the ProSe relay communication.

The UDM network element may determine, based on the UE authentication get request message, to obtain data for the ProSe authentication. Specifically, the UDM network element may parse an SUCI to obtain an SUPI, or the UDM network element may invoke an SIDF to parse an SUCI to obtain an SUPI. The UDM network element may determine an authentication mechanism for the ProSe relay communication based on subscription data corresponding to the SUPI and the request message, for example, determine to use EAP-AKA' for the ProSe relay communication. In this way, the UDM network element may generate the authentication vector for the ProSe relay communication, for example, a ProSe authentication vector for EAP-AKA' (EAP-AKA' ProSe AV). The ProSe authentication vector for EAP-AKA' may include a RAND, an AUTN, an XRES, a CK', and an IK'. For a specific implementation principle of the RAND, the AUTN, and the XRES, refer to related descriptions in S809. Details are not described again. The CK' and the IK' may be derived based on a root key and the RAND, and are used to derive a ProSe key. For example, the UDM network element/ARPF may derive a CK and an IK based on the root key and the RAND, and then derive the CK' and the IK' based on the CK and the IK. It may be understood that the CK' and the IK' are merely used as an example, and the CK' and the IK may alternatively be replaced with any other possible key, for example, K_{PROSE} derived based on the CK, the IK, and a new SN or a new parameter such as a PROSE character.

Optionally, that the UDM network element determines an authentication mechanism for the ProSe relay communication may alternatively include: If the UE authentication get request message carries ProSe relay communication indication information #2, the UDM network element determines to use EAP-AKA' for the ProSe relay communication. In this case, the UDM network element does not need to query the subscription data, so that authentication efficiency can be improved.

Optionally, on a basis of determining to perform ProSe authentication, the UDM network element may determine, based on the subscription data corresponding to the SUPI, whether a user is authorized to use the relay communication. For a specific implementation principle, also refer to related descriptions in S809. Details are not described again.

It should be noted that EAP-AKA' for the ProSe relay communication is merely an example naming manner in this embodiment of this application, and may alternatively be replaced with any other possible naming manner, for example, EAP-AKA' for 5G ProSe relay communication or 5G ProSe EAP-AKA'. This is not limited herein. Similarly, the ProSe authentication vector for EAP-AKA' is also merely an example naming manner in this embodiment of this application, and may alternatively be replaced with any other possible naming manner, for example, an EAP-AKA' ProSe authentication vector, a ProSe EAP-AKA' authentication vector, or an EAP-AKA' authentication vector for the ProSe relay communication. This is not limited herein.

S 10 10: The UDM network element sends a UE authentication get response message to the AUSF network element. Correspondingly, the UDM network element receives the UE authentication get response message from the AUSF network element.

The UE authentication get response message is a response message of the UE authentication get request message. The UE authentication get response message may include a ProSe authentication vector for EAP-AKA', and optionally, may further include the SUPI. The UE authentication get response message may further indicate that the ProSe authentication vector for EAP-AKA' is a 5G AKA authentication vector that supports the ProSe relay communication. For example, on a basis that the UE authentication get response message already has indication information indicating that the authentication vector is used for EAP-AKA', the indication information may be added to the UE authentication get response message, to indicate that EAP-AKA' supports the ProSe relay communication. Alternatively, indication information is added to the UE authentication get response message, to indicate that the authentication vector is used for EAP-AKA', and EAP-AKA' supports the ProSe relay communication.

S1011: The AUSF network element stores the XRES.

After receiving the UE authentication get response message, the AUSF network element may store the XRES, and optionally, further store the SUPI for use in subsequent authentication. In ProSe authentication, the AUSF network element may not derive K_{SEAF}, to avoid generation of redundant information and a waste of resources.

S1012: The AUSF network element sends a UE authentication response message #1 to the relay AMF network element. Correspondingly, the relay AMF network element receives the UE authentication response message #1 from the AUSF network element.

The UE authentication response message #1 is a response message of the UE authentication request message #1. The UE authentication response message #1 may include an EAP-request message/AKA'-challenge message. The EAP-request message/AKA'-challenge message may be a NAS message determined based on the UE authentication get response message #1, and includes the RAND and the AUTN.

S1013: The relay AMF network element sends a ProSe communication authentication request message to the relay UE. Correspondingly, the relay UE receives the ProSe communication authentication request message from the relay AMF network element.

The ProSe communication authentication request message may indicate to authenticate the remote UE, or indicate the relay UE to send authentication data to the remote UE. This prevents the relay UE from autonomously performing authentication after the relay UE receives the ProSe communication authentication request message, avoids an authentication failure, and a communication connection cannot be established. For example, the ProSe communication authentication request message may indicate, by using a message type of the ProSe communication authentication request message or indication information carried in the ProSe communication authentication request message, the relay UE to send the authentication data to the remote UE, or indicate to authenticate the remote UE. Certainly, the ProSe communication authentication request message may alternatively indicate, by adding indication information to an existing message (for example, the authentication request message), the relay UE to send the authentication data to the remote UE. This is not limited herein. The ProSe communication authentication request message may include the EAP-request message/AKA'-challenge message (the authentication data). In other words, after receiving the UE authentication response message #1, the relay AMF network element may continue to encapsulate the EAP-request message/AKA'-challenge message in the UE authentication response message #1 into the ProSe communication authentication request message, to transparently transmit the EAP-request message/AKA'-challenge message to the relay UE.

Optionally, before the relay AMF network element sends the ProSe communication authentication request message to the relay UE, the relay AMF skips obtaining an ngKSI and an ABBA parameter. Alternatively, the relay AMF network element skips generating an ngKSI and an ABBA parameter. The relay AMF network element does not send the ngKSI and the ABBA parameter to the relay UE. That is, the ProSe communication authentication request message does not include the ngKSI and the ABBA parameter.

S1014: The relay UE sends a remote UE authentication request message to the remote UE. Correspondingly, the remote UE receives the remote UE authentication request message from the relay UE.

The remote UE authentication request message may indicate the remote UE to perform ProSe authentication, or indicate to authenticate the remote UE. This ensures that the remote UE and the network perform authentication and derive the ProSe key, and secure communication between the remote UE and the relay UE is established. For example, the ProSe communication authentication request message may indicate, by using the message type of the ProSe communication authentication request message or the indication information carried in the ProSe communication authentication request message, the remote UE to perform ProSe authentication, or indicate to authenticate the remote UE. Certainly, the ProSe communication authentication request message may indicate, by adding the indication information to the existing message, the remote UE to perform ProSe authentication. This is not limited herein. The ProSe communication authentication request message may include the EAP-request message/AKA'-challenge message, so that the remote UE performs ProSe authentication. In other words, after receiving the ProSe communication authentication request message, the relay UE may continue to encapsulate the EAP-request message/AKA'-challenge message in the ProSe communication authentication request message into the remote UE authentication request message, to transparently transmit the EAP-request message/AKA'-challenge message to the remote UE, for the remote UE to use during the authentication.

S1015: The remote UE derives an RES.

The remote UE may include an ME and a USIM. After the remote UE receives the remote UE authentication request message, the USIM may verify the AUTN based on the RAND and a root key of the USIM. If the USIM fails to verify the AUTN, it indicates that the remote UE fails to authenticate the network, and the procedure ends. If the USIM successfully verifies the AUTN, it indicates that the remote UE successfully authenticates the network. On this basis, the USIM may derive the RES, the CK, and the IK by using the root key and the RAND, and send the RES, the CK, and the IK to the ME. The ME may derive the CK' and the IK' based on the CK and the IK, and then perform S 1016.

It should be noted that, it can be learned from related descriptions in S 1009 and S 1111 that if a network side uses a new key derivation method or a new authentication parameter derivation method, the remote UE also uses a method that is the same as that on the network side to perform key derivation or authentication parameter derivation and generate other authentication data.

S1016: The remote UE sends a remote UE authentication response message to the relay UE. Correspondingly, the remote UE receives the remote UE authentication response message from the relay UE.

The remote UE authentication response message is a response message of the remote UE authentication request message. Optionally, the ProSe communication authentication response message may indicate that the remote UE authentication response message is an authentication response message of the remote UE. For example, the ProSe communication authentication response message may indicate, by using a type of the message or an information element included in the message, that the remote UE authentication response message is the authentication response message of the remote UE. The remote UE authentication response message may include an EAP-response message/AKA'-challenge message. The EAP-response message/AKA'-challenge message may include the RES.

S1017: The relay UE sends a ProSe communication authentication response message to the relay AMF network element. Correspondingly, the relay AMF network element receives the ProSe communication authentication response message from the relay UE.

The ProSe communication authentication response message is a response message of the ProSe communication authentication request message. Optionally, the ProSe communication authentication response message indicates that the ProSe communication authentication response message is an authentication response message of the remote UE. For example, the ProSe communication authentication response message may indicate, by using a type of the message or an information element included in the message, that the ProSe communication authentication response message is the authentication response message of the remote UE. The ProSe communication authentication response message may include the EAP-response message/AKA'-challenge message. In other words, the relay UE may obtain the EAP-response message/AKA'-challenge message from the remote UE authentication response message, and continue to encapsulate the EAP-response message/AKA'-challenge message into the ProSe communication authentication response message, to transparently transmit the EAP-response message/AKA'-challenge message to the AUSF network element.

S1018: The relay AMF network element sends a UE authentication request message #2 to the AUSF network element. Correspondingly, the AUSF network element receives the UE authentication request message #2 from the relay AMF network element.

The UE authentication request message #2 may be used to request to authenticate the remote UE. For example, the UE authentication request message #2 may indicate, by using new indication information, to authenticate the remote UE. The UE authentication request message #2 may include the EAP-response message/AKA'-challenge message. In other words, the relay AMF network element may obtain the EAP-response message/AKA'-challenge message from the ProSe communication authentication response message, and encapsulate the EAP-response message/AKA'-challenge message into the UE authentication request message #2, to transparently transmit the EAP-response message/AKA'-challenge message to the AUSF network element. Optionally, if the UE authentication request message #1 in S1007 does not carry the RSC and Nonce_1, the UE authentication request message #2 may further include the RSC and Nonce_1. That is, the relay AMF network element may further encapsulate the RSC and Nonce_1 into the UE authentication request message #2. Alternatively, when the UE authentication request message #1 in S1007 carries the RSC and Nonce_1, the UE authentication request message #2 may still include the RSC and Nonce_1. In this case, the RSC and Nonce_1 may also indicate to authenticate the remote UE.

S1019: The AUSF network element authenticates the remote UE.

After receiving the UE authentication request message #2, the AUSF network element may obtain the EAP-response message/AKA'-challenge message from the UE authentication request message #2, and further obtain the RES. The AUSF network element may compare the RES with the previously stored XRES. If the RES does not match the XRES, for example, the RES is different from the XRES, it indicates that the remote UE fails to be authenticated, and the procedure ends. If the RES matches the XRES, for example, the RES is the same as the XRES*, it indicates that the remote UE is successfully authenticated. On this basis, the AUSF network element may generate Nonce_2, and derive the ProSe key based on the previously stored CK', IK', RSC, and Nonce_1, and Nonce_2, to be used for the communication between the remote UE and the relay UE.

Specifically, the AUSF network element may derive an EMSK based on the CK' and the IK', and determine K_{AUSF} based on the EMSK. For example, the AUSF network element determines first 256 bits of the EMSK as K_{AUSF}, and does not derive K_{SEAF}. The AUSF network element may derive the ProSe key based on K_{AUSF}, the RSC, Nonce_1, and Nonce_2. For example, the AUSF network element may first derive an intermediate key based on K_{AUSF} and the RSC, and then derive the ProSe key based on the intermediate key, Nonce_1, and Nonce_2. Alternatively, the AUSF network element may directly derive the ProSe key based on K_{AUSF}, the RSC, Nonce_1, and Nonce_2. Alternatively, the AUSF network element may derive the ProSe key in any other possible manner. This is not specifically limited.

Optionally, when determining to authenticate the remote UE, the AUSF network element performs the foregoing process of deriving the ProSe key.

S1020: The AUSF network element sends a UE authentication response message #2 to the relay AMF network element. Correspondingly, the relay AMF network element receives the UE authentication response message #2 from the AUSF network element.

The UE authentication response message #2 is a response message of the UE authentication request message #2. The UE authentication response message #2 may include an EAP success message, for indicating that the authentication succeeds, and may further include the ProSe key and Nonce_2. In other words, after determining that the remote UE is successfully authenticated, the AUSF network element may generate the EAP success message, encapsulate the EAP success message, the ProSe key, and Nonce_2 into the UE authentication response message #2, and then send the UE authentication response message #2 to the relay AMF network element.

Optionally, the UE authentication response message #2 may further include an SUPI of the remote UE. The SUPI of the remote UE may indicate the relay UE to report, to the network side, information about executing the remote UE.

S1021: The relay AMF network element sends a relay key response message to the relay UE. Correspondingly, the relay UE receives the relay key response message from the relay AMF network element.

The relay key response message is a response message of the relay key request message, may include the EAP success message, the ProSe key, and Nonce_2, and optionally, may further include the SUPI of the remote UE. In other words, after receiving the UE authentication response message #2, the relay AMF network element may obtain the EAP success message, the ProSe key, and Nonce_2 based on the UE authentication response message #2. Optionally, the relay AMF network element may further obtain the SUPI of the remote UE, and encapsulate the SUPI of the remote UE into the relay key response message, to send the relay key response message to the relay UE. Correspondingly, the relay UE may store the ProSe key, and optionally, may further store the SUPI of the remote UE.

S1022: The relay UE sends a direct security mode command message to the remote UE. Correspondingly, the remote UE receives the direct security mode command message from the relay UE.

The direct security mode command message may be used to establish PCS security. The direct security mode command message may include the EAP success message and Nonce_2. In other words, after receiving the relay key response message, the relay UE may obtain the EAP success message and Nonce_2 from the relay key response message, and then encapsulate the EAP success message and Nonce_2 into the direct security mode command message, to send the direct security mode command message to the remote UE.

S1023: The remote UE derives the ProSe key.

The remote UE may derive the ProSe key in a manner the same as that of the AUSF, to be specific, derive the ProSe key based on the previously derived CK' and IK', the RSC, Nonce_1, and Nonce_2.

S1024: The remote UE sends a direct security mode command complete message to the relay UE. Correspondingly, the relay UE receives the direct security mode command complete message from the remote UE.

The direct security mode command complete message is a response message of the direct security mode command message, and indicates that the remote UE has determined the ProSe key.

So far, both the remote UE and the relay UE obtain the same ProSe key, and may derive a session key for a PCS connection based on the ProSe key, which, for example, includes an encryption key and an integrity protection key, so that ProSe relay communication security is ensured. Because the interaction between the relay AMF network element, the AUSF network element, and the UDM network element may be implemented by reusing the existing service operation, the authentication between the remote UE and the network is implemented without introducing a new service operation, and the key for the secure communication between the relay UE and the remote UE is generated.

It should be noted that, the message #1, the message #2, and the like mentioned in the procedure shown in FIG. 10A and FIG. 10B are merely used for distinguishing between names, and are not used as any limitation.

### Scenario 4

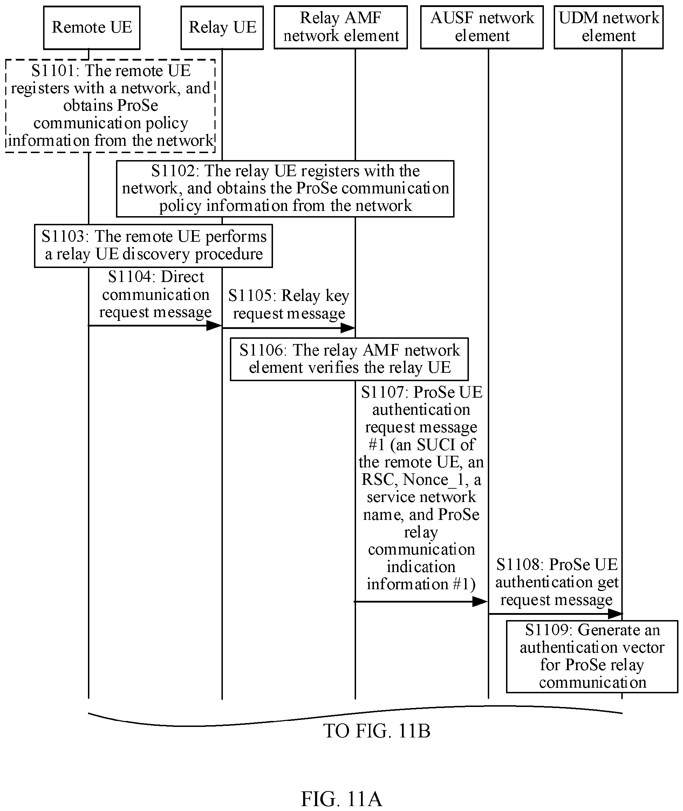

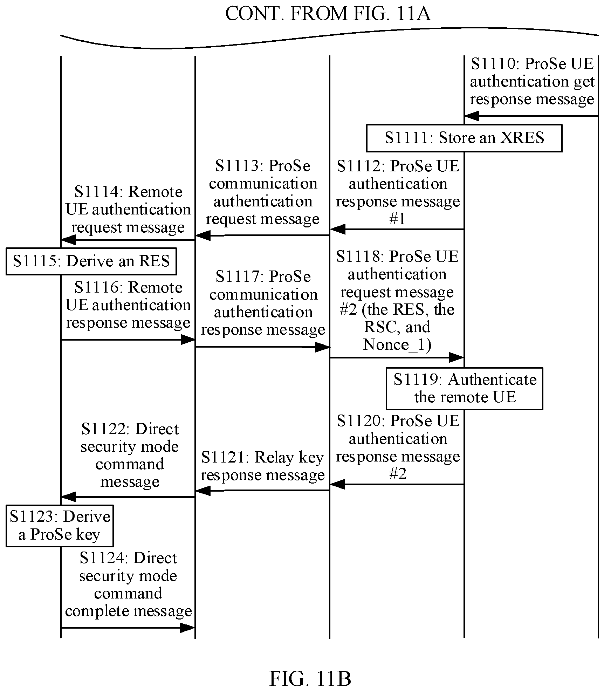

FIG. 11A and FIG. 11B are a schematic flowchart 4 of a communication method according to an embodiment of this application. The communication method is mainly applicable to communication between remote UE, relay UE, an AMF network element, an AUSF network element, and a UDM network element. The AMF network element may include a relay AMF network element and a remote AMF network element, and the two may be a same AMF network element or different AMF network elements. This is not specifically limited. The AUSF network element may be a remote AUSF network element. For example, the AUSF network element is determined based on an identifier of the remote UE, and is configured to support authentication performed on the remote UE. Alternatively, the AUSF network element may be an AUSF network element in any other possible form. This is not specifically limited. The UDM network element may be a remote UDM network element. For example, the UDM network element is determined based on the identifier of the remote UE, and is configured to generate an authentication vector for the remote UE. Alternatively, the UDM network element may be a UDM network element in any other possible form. This is not specifically limited. In Scenario 4, the UDM network element determines, based on a request from the AUSF network element, to establish secure ProSe relay communication (which may also be referred to as an EAP-AKA' procedure of the ProSe relay communication, briefly referred to as ProSe EAP-AKA') or new EAP AKA based on EAP AKA'. In a 5G EAP-AKA' authentication procedure of the ProSe relay communication, the AMF network element, the AUSF network element, and the UDM network element may interact with each other by using a new service operation or a new service name.

Specifically, as shown in FIG. 11A and FIG. 11B, a procedure of the communication method is as follows.

S1101: The remote UE registers with a network, and obtains ProSe communication policy information from the network.

S1102: The relay UE registers with the network, and obtains the ProSe communication policy information from the network.

A specific implementation principle of S1101 and S1102 is similar to that of S801 and S802. For details, refer to each other for understanding. Details are not described again.

S1103: The remote UE performs a relay discovery procedure.

If the remote UE needs to use the ProSe relay communication, the remote UE may discover the relay UE by performing the relay discovery procedure.

S1104: The remote UE sends a direct communication request message to the relay UE. Correspondingly, the relay UE receives the direct communication request message from the remote UE.

The direct communication request message may be used by the remote UE to request to communicate with the relay UE, and includes: an SUCI of the remote UE, an RSC, and Nonce_1.

S1105: The relay UE sends a relay key request message to the relay AMF network element. Correspondingly, the relay AMF network element receives the relay key request message from the relay UE.

The relay key request message is mainly used by the relay UE to request relay communication, or to request a key for the ProSe relay communication, and includes: the SUCI of the remote UE, the RSC, and Nonce_1. Optionally, the relay key request message may further include an identifier of the relay UE, for example, a 5G GUTI.

S1106: The relay AMF network element verifies the relay UE.

Specifically, the relay AMF network element may determine, based on subscription information of the relay UE from the UDM network element, whether the relay UE is authorized as a relay to provide a service.

A specific implementation principle of S1103 to S1106 is similar to that of S403 to S406. For details, refer to each other for understanding. Details are not described again.

S1107: The relay AMF network element sends a ProSe UE authentication request message #1 to the AUSF network element. Correspondingly, the AUSF network element receives the ProSe UE authentication request message #1 from the relay AMF network element.

S1108: The AUSF network element sends a ProSe UE authentication get request message to the UDM network element. Correspondingly, the UDM network element receives the ProSe UE authentication get request message from the AUSF network element.

A specific implementation principle of S1107 and S1108 is similar to that of S907 and S908. For details, refer to each other for understanding. Details are not described again.

S1109: The UDM network element generates an authentication vector for the ProSe relay communication.

The UDM network element may determine, based on the ProSe UE authentication get request message, to perform ProSe authentication. On this basis, the UDM network element may parse an SUCI to obtain an SUPI, or the UDM network element may invoke an SIDF to parse an SUCI to obtain an SUPI. The UDM network element may determine an authentication mechanism for the ProSe relay communication based on subscription data corresponding to the SUPI, for example, determine to use EAP-AKA' for the ProSe relay communication. In this way, the UDM network element may generate the authentication vector for the ProSe relay communication. For a specific implementation principle, refer to related descriptions in S1109. Details are not described again.

Optionally, on a basis of determining to perform ProSe authentication, the UDM network element may determine, based on the subscription data corresponding to the SUPI, whether a user is authorized to use the relay communication. For a specific implementation principle, also refer to related descriptions in S809. Details are not described again.

S1110: The UDM network element sends a ProSe UE authentication get response message to the AUSF network element. Correspondingly, the UDM network element receives the ProSe UE authentication get response message from the AUSF network element.

The ProSe UE authentication get response message is a response message of the ProSe UE authentication get request message. The ProSe UE authentication get response message may include a ProSe authentication vector for EAP-AKA', and optionally, may further include the SUPI. The ProSe UE authentication get response message may further indicate that the ProSe authentication vector for EAP-AKA' is an EAP-AKA' authentication vector that supports the ProSe relay communication. For example, the ProSe UE authentication get response message may indicate, by using a message type of the ProSe UE authentication get response message, that the authentication vector is used for EAP-AKA', and EAP-AKA' supports the ProSe relay communication. Alternatively, the ProSe UE authentication get response message may indicate, by using carried indication information, that the authentication vector is used for EAP-AKA', and EAP-AKA' supports the ProSe relay communication.

S1111: The AUSF network element stores an XRES.

After receiving the ProSe UE authentication get response message, the AUSF network element may store the XRES, and optionally, further store the SUPI for use in subsequent authentication. In ProSe authentication, the AUSF network element may not derive K_{SEAF}, to avoid generation of redundant information and a waste of resources.

S1112: The AUSF network element sends a ProSe UE authentication response message #1 to the relay AMF network element. Correspondingly, the relay AMF network element receives the ProSe UE authentication response message #1 from the AUSF network element.

The ProSe UE authentication response message #1 is a response message of the ProSe UE authentication request message #1. The ProSe UE authentication response message #1 may include an EAP-request message/AKA'-challenge message. The EAP-request message/AKA'-challenge message may be a NAS message determined based on the UE authentication get response message #1, and includes a RAND and an AUTN.

S1113: The relay AMF network element sends a ProSe communication authentication request message to the relay UE. Correspondingly, the relay UE receives the ProSe communication authentication request message from the relay AMF network element.

S1114: The relay UE sends a remote UE authentication request message to the remote UE. Correspondingly, the remote UE receives the remote UE authentication request message from the relay UE.

S1115: The remote UE derives an RES.

S1116: The remote UE sends a remote UE authentication response message to the relay UE. Correspondingly, the remote UE receives the remote UE authentication response message from the relay UE.

S1117: The relay UE sends a ProSe communication authentication response message to the relay AMF network element. Correspondingly, the relay AMF network element receives the ProSe communication authentication response message from the relay UE.

A specific implementation principle of S1113 to S1117 is similar to that of S1013 to S1017. For details, refer to each other for understanding. Details are not described again.

S1118: The relay AMF network element sends a ProSe UE authentication request message #2 to the AUSF network element. Correspondingly, the AUSF network element receives the ProSe UE authentication request message #2 from the relay AMF network element.

The ProSe UE authentication request message #2 may be used to request to perform ProSe authentication on the remote UE, and includes an EAP-response message/AKA'-challenge message. In other words, the relay AMF network element may obtain the EAP-response message/AKA'-challenge message from the ProSe communication authentication response message, and encapsulate the EAP-response message/AKA'-challenge message into the ProSe UE authentication request message #2, to transparently transmit the EAP-response message/AKA'-challenge message to the AUSF network element. Optionally, if the ProSe UE authentication request message #1 in S1107 does not carry the RSC and Nonce_1, the ProSe UE authentication request message #2 may further include the RSC and Nonce_1. That is, the relay AMF network element may further encapsulate the RSC and Nonce_1 into the ProSe UE authentication request message #2. Alternatively, when the ProSe UE authentication request message #1 in S1107 carries the RSC and Nonce_1, the ProSe UE authentication request message #2 may still include the RSC and Nonce_1.

S1119: The AUSF network element authenticates the remote UE.

A specific implementation principle of S1119 is similar to that of S1019. For details, refer to each other for understanding. Details are not described again.

S1120: The AUSF network element sends a ProSe UE authentication response message #2 to the relay AMF network element. Correspondingly, the relay AMF network element receives the ProSe UE authentication response message #2 from the AUSF network element.

The ProSe UE authentication response message #2 is a response message of the ProSe UE authentication request message #2. The ProSe UE authentication response message #2 may include an EAP success message, for indicating that the authentication succeeds, and may further include a ProSe key and Nonce_2. In other words, after determining that the remote UE is successfully authenticated, the AUSF network element may generate the EAP success message, encapsulate the EAP success message, the ProSe key, and Nonce_2 into the ProSe UE authentication response message #2, and then send the ProSe UE authentication response message #2 to the relay AMF network element.

S1121: The relay AMF network element sends a relay key response message to the relay UE. Correspondingly, the relay UE receives the relay key response message from the relay AMF network element.

S1122: The relay UE sends a direct security mode command message to the remote UE. Correspondingly, the remote UE receives the direct security mode command message from the relay UE.

S1123: The remote UE derives the ProSe key.

S1124: The remote UE sends a direct security mode command complete message to the relay UE. Correspondingly, the relay UE receives the direct security mode command complete message from the remote UE.

So far, both the remote UE and the relay UE obtain the same ProSe key, and may derive a session key for a PCS connection based on the ProSe key, which, for example, includes an encryption key and an integrity protection key, so that ProSe relay communication security is ensured. Because the interaction between the relay AMF network element, the AUSF network element, and the UDM network element may be implemented by using new signaling, decoupling from an existing authentication procedure is implemented, and impact of the authentication procedure on the ProSe authentication is avoided.

It should be noted that, the message #1, the message #2, and the like mentioned in the procedure shown in FIG. 11A and FIG. 11B are merely used for distinguishing between names, and are not used as any limitation.

### Scenario 5

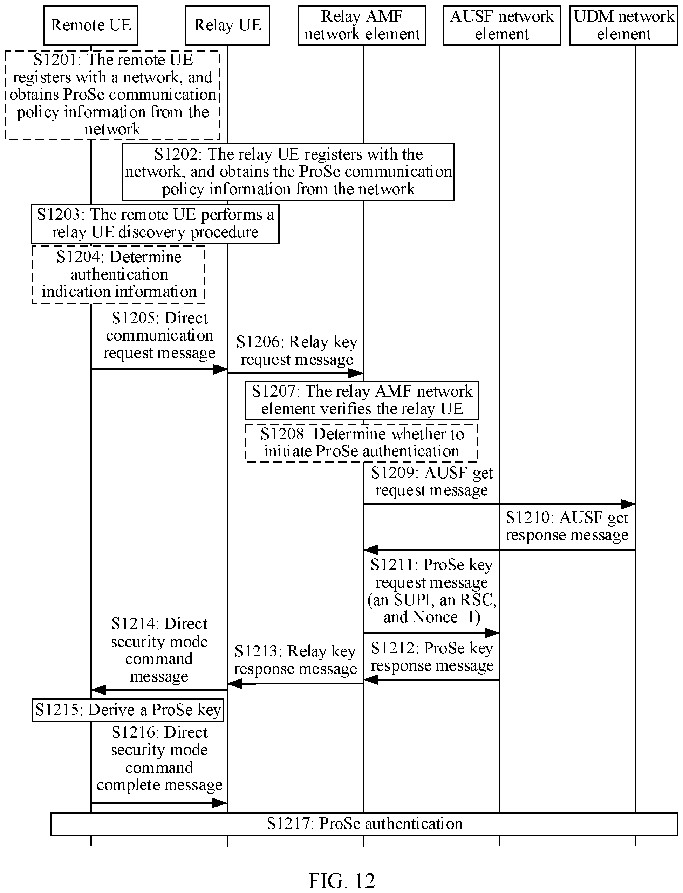

FIG. 12 is a schematic flowchart 5 of a communication method according to an embodiment of this application. The communication method is mainly applicable to communication between remote UE, relay UE, an AMF network element, an AUSF network element, and a UDM network element. The AMF network element may include a relay AMF network element and a remote AMF network element, and the two may be a same AMF network element or different AMF network elements. This is not specifically limited. The AUSF network element may be a relay AUSF network element, or may be an AUSF network element in any other possible form. This is not specifically limited. The UDM network element may be a relay UDM network element, or may be a UDM network element in any other possible form. This is not specifically limited. In Scenario 5, the remote UE or the relay AMF network element may determine whether ProSe authentication has been performed. When the remote UE has been authenticated, a ProSe key may be derived by using an existing key (for example, K_{AUSF}) on the relay AUSF network element, and ProSe authentication does not need to be performed again.

Specifically, as shown in FIG. 12, a procedure of the communication method is as follows.

S1201: The remote UE registers with a network, and obtains ProSe communication policy information from the network.

S1202: The relay UE registers with the network, and obtains the ProSe communication policy information from the network.

A specific implementation principle of S1101 and S1102 is similar to that of S801 and S802. For details, refer to each other for understanding. Details are not described again.

S1203: The remote UE performs a relay discovery procedure.

If the remote UE needs to use ProSe relay communication, the remote UE may discover the relay UE by performing the relay discovery procedure.

A specific implementation principle of S1102 is similar to that of S403. For details, refer to each other for understanding. Details are not described again.

S1204: The remote UE determines authentication indication information.

The authentication indication information may indicate whether the remote UE has performed a primary authentication procedure with the network, or is used to determine whether to perform ProSe authentication. For example, the authentication indication information includes 1 bit (bit). When a value of the 1 bit is 1, it indicates that the remote UE has performed the primary authentication procedure, or it is determined that ProSe authentication does not need to be performed, or it is determined that the existing K_{AUSF} is used. If a value of the 1 bit is 0, it indicates that the remote UE has not performed primary authentication, or it is determined that ProSe authentication is performed. Alternatively, if a value of the 1 bit is 1, it indicates that the remote UE has not performed primary authentication, or it is determined that a ProSe authentication procedure is performed. When a value of the 1 bit is 0, it indicates that the remote UE has performed primary authentication, or it is determined that ProSe authentication does not need to be performed, or it is determined that the existing K_{AUSF} is used.

After discovering the relay UE through the relay discovery procedure, the remote UE may determine whether the key, for example, K_{AUSF} used to derive the ProSe key is locally stored. If K_{AUSF} is stored, it indicates that the remote UE has performed ProSe authentication, and the authentication indication information corresponding to the value is generated. Otherwise, if K_{AUSF} is not stored, it indicates that the remote UE has not performed ProSe authentication, and the authentication indication information corresponding to the value is generated.

Optionally, K_{AUSF} used to derive the ProSe key is merely an example, and K_{AUSF} may be replaced with another key, for example, K_{PROSE}. Alternatively, the key used to derive the ProSe key may be stored in each of the remote UE and the network. For example, after the remote UE performs ProSe authentication with the network, the key may be stored in each of the remote UE and the network. This is not limited herein.

S1204 is an optional step. That is, the remote UE directly indicates by using the authentication indication information whether the remote UE has performed authentication, which is merely an example manner. For example, optionally, the remote UE may alternatively correspondingly indicate, depending on whether the authentication indication information is generated, whether the remote UE has performed authentication. In this case, a subsequent device may determine, depending on whether signaling carries the authentication indication information, whether the remote UE has performed authentication. If the signaling carries the authentication indication information, it explicitly indicates that the remote UE has performed authentication. If the signaling does not carry the authentication indication information, it implicitly indicates that the remote UE has not performed authentication. Alternatively, if the signaling carries the authentication indication information, it explicitly indicates that the remote UE has not performed authentication. If the signaling does not carry the authentication indication information, it implicitly indicates that the remote UE has performed authentication. For another example, optionally, the remote UE may not indicate whether the remote UE has performed ProSe authentication, and this is autonomously determined by the relay AMF network element.

It should be noted that a name of the authentication indication information indicating whether authentication has been performed is merely an example, and may alternatively be replaced with any other possible name, for example, indication information or ProSe indication information. This is not limited herein.

S1205: The remote UE sends a direct communication request message to the relay UE. Correspondingly, the relay UE receives the direct communication request message from the remote UE.

The direct communication request message may be used by the remote UE to request to communicate with the relay UE, and includes: an SUCI of the remote UE, an RSC, and Nonce_1. Optionally, the direct communication request message may further include the authentication indication information.

S1206: The relay UE sends a relay key request message to the relay AMF network element. Correspondingly, the relay AMF network element receives the relay key request message from the relay UE.

The relay key request message is mainly used by the relay UE to request relay communication, or to request a key for the ProSe relay communication, and includes: the SUCI of the remote UE, the RSC, and Nonce_1. Optionally, the relay key request message may further include an identifier of the relay UE, for example, a 5G GUTI. For the SUCI of the remote UE, the RSC, and Nonce_1, refer to related descriptions in S405. Details are not described again. Optionally, when the direct communication request message carries the authentication indication information, the relay key request message may further include the authentication indication information. In other words, after receiving the direct communication request message and obtaining the authentication indication information from the direct communication request message, the relay UE may continue to encapsulate the authentication indication information into the relay key request message, and then send the relay key request message to the relay AMF network element.

S1207: The relay AMF network element verifies the relay UE.

A specific implementation principle of S1207 is similar to that of S406. For details, refer to each other for understanding. Details are not described again.

S1208: The relay AMF network element determines whether to initiate ProSe authentication.

The relay AMF network element may determine, based on the authentication indication information in the relay key request message or depending on whether the relay key request message carries the authentication indication information, whether to initiate the ProSe authentication. In this case, if determining not to initiate the ProSe authentication, the relay AMF network element obtains an identifier of the AUSF network element from the UDM network element, to obtain the ProSe key from the AUSF network element. That is, S1209 to S1216 are performed. Otherwise, if determining to initiate the ProSe authentication, the relay AMF network element performs ProSe authentication. That is, S1217 is performed.

It may be understood that S1208 is an optional step. When the remote UE does not indicate whether the remote UE has performed authentication, the relay AMF network element may skip S1208 and perform S1209, to determine, depending on whether the identifier of the AUSF network element can be obtained from the UDM network element, whether the remote UE has performed authentication or whether there is an available key (for example, K_{AUSF}) in the network, that is, to determine whether to initiate the ProSe communication authentication. If the relay AMF network element determines not to initiate the ProSe authentication, S1211 to S1216 are performed. Otherwise, if the relay AMF network element determines to initiate the ProSe authentication, S1217 is performed.

S1209: The relay AMF network element sends an AUSF get request (Nudm AUSFIdGet Request) message to the UDM network element. Correspondingly, the UDM network element receives the AUSF get request message from the relay AMF network element.

The AUSF get request message is used to request the UDM network element to feed back the identifier of the AUSF network element, for example, an ID (instance Id) of the AUSF network element, or an IP address (for example, an IPv4 address, an IPv6 address, or a prefix) of the AUSF network element. The AUSF get request message may include the SUCI of the remote UE. In this way, the UDM network element may obtain the SUCI of the remote UE from the AUSF get request message, to search for the identifier of the AUSF network element based on the SUCI. For example, the UDM network element may parse the SUCI to obtain an SUPI, or the UDM network element may invoke an SIDF to parse the SUCI to obtain an SUPI, to obtain, based on the SUPI, a context of the remote UE stored in the UDM network element, to determine whether the identifier of the AUSF network element can be obtained from the context.

Optionally, the UDM network element may alternatively determine, based on subscription data corresponding to the SUPI, whether a user is authorized to use the relay communication. For a specific implementation principle, also refer to related descriptions in S809. Details are not described again.

It should be noted that the AUSF get request message is merely an example naming manner in this embodiment of this application, and may alternatively be replaced with any other possible naming manner, for example, an AUSF identifier get request message or an AUSF address get request message. This is not limited herein.

S1210: The UDM network element sends an AUSF get response (Nudm AUSFIdGet Response) message to the relay AMF network element. Correspondingly, the UDM network element receives the AUSF get response message from the relay AMF network element.

The AUSF get response message is a response message of the AUSF get request message. The AUSF get response message may include the identifier of the AUSF network element, and optionally, may further include the SUPI.

If the remote UE has performed authentication, or the remote UE locally stores K_{AUSF}, the context of the remote UE needs to store the identifier that is of the AUSF network element and that is originally for authenticating the remote UE. In this case, the UDM network element can obtain the identifier of the AUSF network element from the context of the remote UE, encapsulate the identifier into the AUSF get response message, and then send the AUSF get response message to the relay AMF network element. Otherwise, if the remote UE has not performed ProSe authentication, the context of the remote UE does not include the identifier of the AUSF network element. In this case, the UDM network element cannot obtain the identifier of the AUSF network element from the context of the remote UE, but directly sends the AUSF get response message to the relay AMF network element.

It may be understood that when the remote UE indicates that the remote UE has performed primary authentication, the relay AMF network element needs to be able to obtain the identifier of the AUSF network element after S1209 and S1210 are performed.

It should be noted that the AUSF get response message is merely an example naming manner in this embodiment of this application, and may alternatively be replaced with any other possible naming manner, for example, an AUSF identifier get response message or an AUSF address get response message. This is not limited herein.

S1211: The relay AMF network element sends a ProSe key request (Nausf_ProSe_Key Request) message to the AUSF network element. Correspondingly, the AUSF network element receives the ProSe key request message from the relay AMF network element.

The relay AMF network element may send the ProSe key request message to the AUSF network element based on the identifier of the AUSF network element. The ProSe key request message is mainly used to request the ProSe key, and includes the SUPI, the RSC, and Nonce_1. After receiving the ProSe key request message, the AUSF network element may obtain the RSC and Nonce_1 from the ProSe key request message. In this way, the AUSF network element may derive the ProSe key based on K_{AUSF} previously determined when the remote UE is authenticated, Nonce_2 generated this time, the RSC, and Nonce_1. For a specific implementation principle of deriving the ProSe key, refer to related descriptions in S820. Details are not described again.

It should be noted that the ProSe key request message is merely an example naming manner in this embodiment of this application, and may alternatively be replaced with any other possible naming manner, for example, a ProSe communication key request message. This is not limited herein.

S1212: The AUSF network element sends a ProSe key response (Nausf_ProSe_Key Response) message to the relay AMF network element. Correspondingly, the relay AMF network element receives the ProSe key response message from the AUSF network element.

The ProSe key response message is a response message of the ProSe key request message, and includes the ProSe key and Nonce_2. In addition, the ProSe key response message is merely an example naming manner in this embodiment of this application, and may alternatively be replaced with any other possible naming manner, for example, a ProSe communication key response message. This is not limited herein.

S1213: The relay AMF network element sends a relay key response message to the relay UE. Correspondingly, the relay UE receives the relay key response message from the relay AMF network element.

S1214: The relay UE sends a direct security mode command message to the remote UE. Correspondingly, the remote UE receives the direct security mode command message from the relay UE.

S1215: The remote UE derives the ProSe key.

S1216: The remote UE sends a direct security mode command complete message to the relay UE. Correspondingly, the relay UE receives the direct security mode command complete message from the remote UE.

A specific implementation principle of S1213 to S1216 is similar to that of S822 to S825. For details, refer to each other for understanding. Details are not described again.

So far, both the remote UE and the relay UE obtain the same ProSe key, and may derive a session key for a PCS connection based on the ProSe key, which, for example, includes an encryption key and an integrity protection key, so that ProSe relay communication security is ensured. In addition, when the remote UE has performed ProSe authentication, the AUSF network element can derive the ProSe key without authentication, to effectively improve device running efficiency.

S1217: Perform ProSe authentication.

Secure communication between the relay UE and the remote UE may be established by performing ProSe authentication.

S1217 may be S807 to S822 in Scenario 1, or S907 to S922 in Scenario 2, or S1007 to S1021 in Scenario 3, or S1107 to S1121 in Scenario 4. A specific implementation principle is similar to that in Scenario 1 to Scenario 4. For details, refer to each other for understanding. Details are not described again.

### Scenario 6

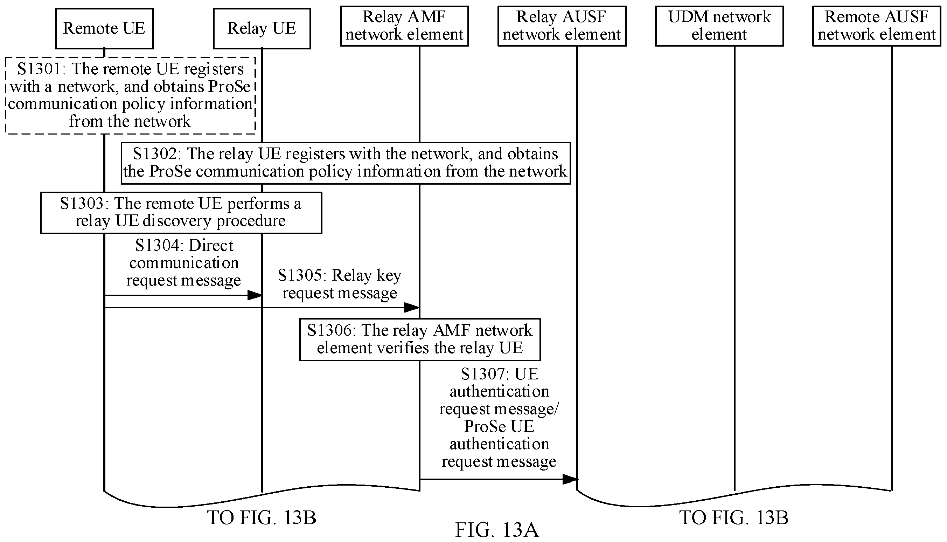

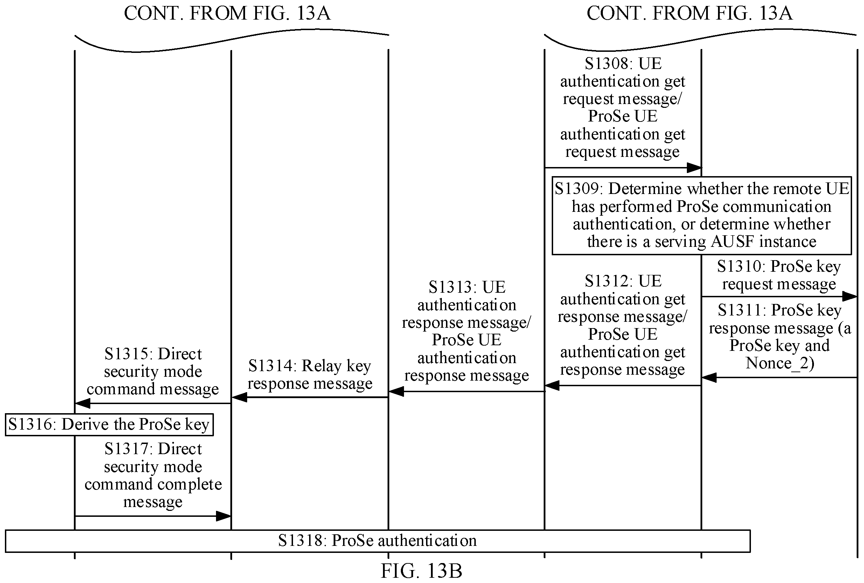

FIG. 13A and FIG. 13B are a schematic flowchart 6 of a communication method according to an embodiment of this application. The communication method is mainly applicable to communication between remote UE, relay UE, an AMF network element, an AUSF network element, and a UDM network element. The AMF network element may include a relay AMF network element and a remote AMF network element, and the two may be a same AMF network element or different AMF network elements. This is not specifically limited. The AUSF network element may include a relay AUSF network element and a remote AUSF network element, and the two may be different AUSF network elements. The UDM network element may be a remote UDM network element, or may be a UDM network element in any other possible form. This is not specifically limited. In Scenario 6, the UDM network element may determine whether the remote UE has performed authentication. When authentication has been performed, a ProSe key may be directly derived, and authentication does not need to be performed again.

Specifically, as shown in FIG. 13A and FIG. 13B, a procedure of the communication method is as follows.

S1301: The remote UE registers with a network, and obtains ProSe communication policy information from the network.

S1302: The relay UE registers with the network, and obtains the ProSe communication policy information from the network.

A specific implementation principle of S1301 and S1302 is similar to that of S801 and S802. For details, refer to each other for understanding. Details are not described again.

S1303: The remote UE performs a relay discovery procedure.

If the remote UE needs to use ProSe relay communication, the remote UE may discover the relay UE by performing the relay discovery procedure.

S1304: The remote UE sends a direct communication request message to the relay UE. Correspondingly, the relay UE receives the direct communication request message from the remote UE.

The direct communication request message may be used by the remote UE to request to communicate with the relay UE, and includes: an SUCI of the remote UE, an RSC, and Nonce_1.

S1305: The relay UE sends a relay key request message to the relay AMF network element. Correspondingly, the relay AMF network element receives the relay key request message from the relay UE.

The relay key request message is mainly used by the relay UE to request relay communication, or to request a key for the ProSe relay communication, and includes: an SUCI of the relay UE, the SUCI of the remote UE, the RSC, and Nonce_1.

S1306: The relay AMF network element verifies the relay UE.

A specific implementation principle of S1303 to S1306 is similar to that of S403 to S406. For details, refer to each other for understanding. Details are not described again.

S1307: The relay AMF network element sends a UE authentication request message/ProSe UE authentication request message to the relay AUSF network element. Correspondingly, the relay AUSF network element receives the UE authentication request message #1/ProSe UE authentication request message #1 from the relay AMF network element.

For a specific implementation principle of the UE authentication request message, refer to related descriptions in S807. For a specific implementation principle of the ProSe UE authentication request message, refer to related descriptions in S1007. Details are not described again.

S1308: The relay AUSF network element sends a UE authentication get request message/ProSe UE authentication get request message to the UDM network element. Correspondingly, the UDM network element receives the UE authentication get request message/ProSe UE authentication get request message from the relay AUSF network element.

For a specific implementation principle of the UE authentication get request message, refer to related descriptions in S808. For a specific implementation principle of the ProSe UE authentication get request message, refer to related descriptions in S1008. Details are not described again.

S1309: The UDM network element determines whether the remote UE has performed authentication, or determines whether there is a serving AUSF instance.

The UDM network element may obtain the SUCI of the remote UE from the received UE authentication get request message/ProSe UE authentication get request message, to search for an identifier of the remote AUSF network element based on the SUCI. For example, the UDM network element may parse the SUCI to obtain an SUPI, or the UDM network element may invoke an SIDF to parse the SUCI to obtain an SUPI, to obtain, based on the SUPI, a context of the remote UE stored in the UDM network element, to determine whether the identifier of the remote AUSF network element can be obtained from the context. In this case, if the UDM network element can obtain the identifier of the remote AUSF network element, it indicates that the remote UE has performed authentication, there is the serving AUSF instance, and the ProSe key may be directly obtained from the remote AUSF network element. That is, S1310 to S1317 are performed, and authentication does not need to be performed again. Otherwise, if the UDM network element cannot obtain the identifier of the remote AUSF network element, it indicates that the remote UE has not performed primary authentication, there is no serving AUSF instance, and ProSe authentication needs to be performed. That is, S1318 is performed.

S1310: The UDM network element sends a ProSe key request message to the remote AUSF network element. Correspondingly, the remote AUSF network element receives the ProSe key request message from the UDM network element.

The UDM network element may send the ProSe key request message to the remote AUSF network element based on the identifier of the remote AUSF network element. The ProSe key request message is mainly used to request the ProSe key, and includes the SUPI, the RSC, and Nonce_1. After receiving the ProSe key request message, the remote AUSF network element may obtain the RSC and Nonce_1 from the ProSe key request message. In this way, the remote AUSF network element may derive the ProSe key based on K_{AUSF} previously determined when the remote UE is authenticated, Nonce_2 generated this time, the RSC, and Nonce_1. For a specific implementation principle of deriving the ProSe key, refer to related descriptions in S820. Details are not described again.

S1311: The remote AUSF network element sends a ProSe key response message to the UDM network element. Correspondingly, the UDM network element receives the ProSe key response message from the remote AUSF network element.

The ProSe key response message is a response message of the ProSe key request message, and may include the ProSe key and Nonce_2.

S1312: The UDM network element sends a UE authentication get response message/ProSe UE authentication get response message to the relay AUSF network element. Correspondingly, the relay AUSF network element receives the UE authentication get response message/ProSe UE authentication get response message from the UDM network element.

The UE authentication get response message/ProSe UE authentication get response message may include the ProSe key and Nonce_2. For a specific implementation principle of the UE authentication get response message, also refer to related descriptions in S810. For a specific implementation principle of the ProSe UE authentication get response message, refer to related descriptions in S1010. Details are not described again.

S1313: The relay AUSF network element sends a UE authentication response message/ProSe UE authentication response message to the relay AMF network element. Correspondingly, the relay AMF network element receives the UE authentication response message/ProSe UE authentication response message from the relay AUSF network element.

The UE authentication response message/ProSe UE authentication response message may include the ProSe key and Nonce_2. For a specific implementation principle of the UE authentication response message, also refer to related descriptions in S812. For a specific implementation principle of the ProSe UE authentication response message, also refer to related descriptions in S1012. Details are not described again.

S1314: The relay AMF network element sends a relay key response message to the relay UE. Correspondingly, the relay UE receives the relay key response message from the relay AMF network element.

S1315: The relay UE sends a direct security mode command message to the remote UE. Correspondingly, the remote UE receives the direct security mode command message from the relay UE.

S1316: The remote UE derives the ProSe key.

S1317: The remote UE sends a direct security mode command complete message to the relay UE. Correspondingly, the relay UE receives the direct security mode command complete message from the remote UE.

A specific implementation principle of S1314 to S1317 is similar to that of S822 to S825. For details, refer to each other for understanding. Details are not described again.

So far, both the remote UE and the relay UE obtain the same ProSe key, and may derive a session key for a PCS connection based on the ProSe key, which, for example, includes an encryption key and an integrity protection key, so that ProSe relay communication security is ensured. In addition, when the remote UE has performed ProSe authentication, the remote AUSF network element can derive the ProSe key without authentication, to effectively improve device running efficiency.

S1318: Perform ProSe authentication.

Secure communication between the relay UE and the remote UE may be established by performing ProSe authentication.

S1318 may be S809 to S822 in Scenario 1, or S909 to S922 in Scenario 2, or S1009 to S1021 in Scenario 3, or S1109 to S1121 in Scenario 4. A specific implementation principle is similar to that in Scenario 1 to Scenario 4. For details, refer to each other for understanding. Details are not described again.

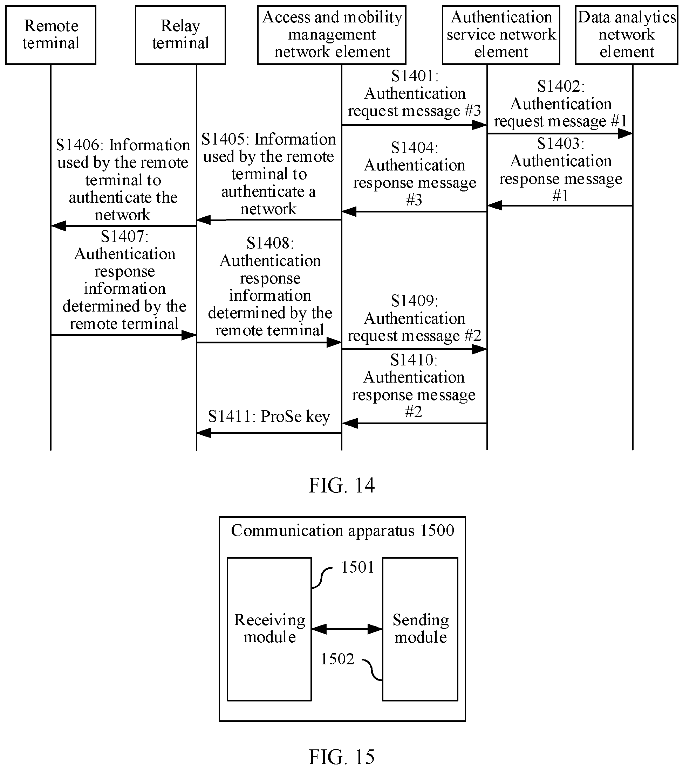

With reference to Scenario 1 to Scenario 6, the foregoing describes specific procedures of the communication methods according to embodiments of this application in the scenarios. With reference to FIG. 14, the following describes an overall procedure of a communication method according to an embodiment of this application in each scenario.

FIG. 14 is a schematic flowchart 7 of a communication method according to an embodiment of this application. The communication method is applicable to communication between a remote terminal, a relay terminal, an access and mobility management network element, an authentication service network element, and a data management network element. The remote terminal may be the remote UE in the foregoing Scenario 1 to Scenario 6. The relay terminal may be the relay UE in the foregoing Scenario 1 to Scenario 6. The access and mobility management network element may be the relay AMF network element in the foregoing Scenario 1 to Scenario 6. The authentication service network element may be the AUSF network element in the foregoing Scenario 1 to Scenario 6. The data management network element may be the UDM network element in the foregoing Scenario 1 to Scenario 6.

As shown in FIG. 14, a procedure of the communication method is as follows.

S1401: The access and mobility management network element sends an authentication request message #3 to the authentication service network element. Correspondingly, the authentication service network element receives the authentication request message #3 from the access and mobility management network element.

The authentication request message #3 may be used to request to authenticate the remote terminal. For example, the authentication service network element is requested to authenticate the remote terminal, to trigger the authentication service network element to perform a ProSe communication authentication procedure, so that authentication correctness and reliability are ensured. The authentication request message #3 includes an SUCI of the remote terminal, and may further include at least one of the following: a service network name, an RSC, a random value #1 (for example, Nonce_1), or ProSe relay communication indication information (for example, the foregoing ProSe relay communication indication information #1). Any one of the service network name, the RSC, or the ProSe relay communication indication information may indicate that the authentication is authentication performed on ProSe relay communication, to trigger the authentication service network element to perform an authentication procedure of the ProSe communication, thereby ensuring correctness and reliability of authentication and avoiding impact on an existing procedure. Any one of the service network name, the RSC, or the random value #1 may be used to determine a ProSe key, so that when determining that the authentication succeeds, the AUSF network element may directly derive the ProSe key based on these parameters without additional obtaining, thereby improving key derivation efficiency. The authentication request message #3 may be specifically the foregoing UE authentication request message #1 or ProSe UE authentication request message #1. For a specific implementation principle, refer to related descriptions in S807, S907, S1007, or S1107. Details are not described again.

Optionally, if the authentication request message #3 includes the RSC and the random value #1, the authentication service network element may further store the RSC and the random value #1, so that the RSC and the random value #1 can be directly used during subsequent key derivation, and do not need to be obtained again, thereby further improving key derivation efficiency.

S1402: The authentication service network element sends an authentication request message #1 to the data management network element. Correspondingly, the data management network element receives the authentication request message #1 from the authentication service network element.

The authentication request message #1 may be used to request to authenticate the remote terminal. For example, the authentication request message #1 includes at least one of the following: the SUCI of the remote terminal, the service network name, the RSC, or the ProSe relay communication indication information. For example, the ProSe relay communication indication information is the foregoing ProSe relay communication indication information #2, and the ProSe relay communication indication information indicates that the authentication is authentication performed on the ProSe relay communication. In this way, the authentication request message #1 is for triggering the data management network element to obtain an authentication vector corresponding to the ProSe relay communication, to ensure correctness and reliability of authentication on the ProSe relay communication. The authentication request message #1 may be the foregoing UE authentication get request message or the foregoing ProSe UE authentication get request message. For a specific implementation principle, refer to related descriptions in S808, S908, S1008, or S1108. Details are not described again.

Optionally, that the authentication service network element sends an authentication request message #1 to the data management network element may further include: The authentication service network element generates the authentication request message #1 based on the authentication request message #3 from the mobility and access management network element, and then sends the authentication request message #1 to the data management network element.

S1403: The data management network element sends an authentication response message #1 to the authentication service network element. Correspondingly, the authentication service network element receives the authentication response message #1 from the data management network element.

The authentication response message #1 may be the foregoing UE authentication get response message or the foregoing ProSe UE authentication get response message. The authentication response message #1 includes ProSe authentication information #1. The ProSe authentication information #1 may include at least one of the following: information used by the remote terminal to authenticate a network, or information used to authenticate the remote terminal.

Specifically, the ProSe authentication information #1 may be at least one of the following: a ProSe authentication vector #1 for AKA (for example, a ProSe authentication vector #1 for 5G AKA) or a ProSe authentication vector for EAP-AKA'. In other words, the authentication between the remote UE and the network may be implemented based on an existing authentication method, for example, enhanced 5G AKA or EAP-AKA', to ensure ProSe relay communication security without introducing a new authentication method.

When being the ProSe authentication vector #1 for AKA, the ProSe authentication information #1 may include at least one of the following: the information used by the remote terminal to authenticate the network, for example, the foregoing RAND and the foregoing AUTN, the information used by the authentication service network element to authenticate the remote terminal, for example, the foregoing XRES*, or information used to determine the ProSe key, for example, the foregoing KAUSF.

Alternatively, when being the ProSe authentication vector for EAP-AKA', the ProSe authentication information #1 may include at least one of the following: the information used by the remote terminal to authenticate the network, for example, the foregoing RAND and the foregoing AUTN, the information used by the authentication service network element to authenticate the remote terminal, for example, the foregoing XRES, or information used to determine the ProSe key, for example, the foregoing CK and the foregoing IK.

Optionally, the authentication response message #1 may further include indication information, for indicating that the ProSe authentication information #1 is authentication information corresponding to the authentication method, for example, for indicating that the authentication information is authentication information of an EAP-AKA' mechanism or authentication information of a 5G AKA mechanism. Optionally, the indication information further indicates that the authentication information is authentication information used for the ProSe communication, or authentication that supports the ProSe communication. In other words, the indication information may indicate that the authentication information is authentication information that supports EAP-AKA' or 5G AKA for the ProSe relay communication, that is, authentication information for enhanced EAP-AKA' or AKA. The enhanced EAP-AKA' mechanism or the 5G AKA mechanism may be understood as follows: In an authentication procedure, if any network element participating in authentication uses a new authentication vector generation method to determine an authentication vector, uses a new message, uses a new service operation, or adds a new information element, it may be considered that the enhanced EAP-AKA' mechanism or the 5G AKA mechanism is used.

Optionally, before S1403, the data management network element may further determine that the remote terminal is authorized to obtain a relay service. In other words, ProSe relay communication authentication is performed on the remote terminal only when it is determined that the remote terminal has a permission to use the relay communication. This avoids invalid authentication. In addition, before S1403, the data management network element may determine the ProSe authentication information #1 based on the authentication request message #1.

Optionally, before S1403, if the ProSe relay communication authentication is triggered, or a procedure of authenticating the remote terminal is triggered, the data management network element may select the EAP-AKA' mechanism or the 5G AKA mechanism that supports the ProSe relay communication, that is, the enhanced EAP-AKA' mechanism or the AKA mechanism. Alternatively, the data management network element may select an existing EAP-AKA' mechanism or 5G AKA mechanism, to ensure that in a ProSe relay communication scenario, a related network element needs to support only enhanced logic of a procedure, so that complexity is reduced. That the data management network element selects an existing EAP-AKA' mechanism or 5G AKA mechanism may be understood as follows: The data management network element uses an existing method to derive an authentication vector, uses an existing service operation, and the like.

In addition, for a specific implementation principle of S1403, refer to related descriptions in S809 and S810, S909 and S910, S1009 and S1010, or S1109 and S1110. Details are not described again.

S1404: The authentication service network element sends an authentication response message #3 to the access and mobility management network element. Correspondingly, the access and mobility management network element receives the authentication response message #3 from the authentication service network element.

The authentication response message #3 may be the foregoing UE authentication response message #1 or the foregoing ProSe UE authentication response message #1. The authentication response message #3 includes ProSe authentication information #2. The ProSe authentication information #2 includes the information used by the remote terminal to authenticate the network. Optionally, the ProSe authentication information #2 may further include information used by the network to authenticate the remote terminal. In other words, ProSe relay communication authentication may be triggered by the access and mobility management network element, for example, may be triggered when a service has a requirement, so that the authentication service network element can targetedly perform authentication, to ensure authentication validity.

Specifically, the ProSe authentication information #2 may be determined based on the ProSe authentication information #1. The ProSe authentication information #2 may be at least one of the following: a ProSe authentication vector #2 for AKA (for example, a ProSe authentication vector #2 for 5G AKA), or an EAP-request message or an AKA'-challenge message. For example, if an existing AKA authentication mechanism is used, the ProSe authentication vector #2 for AKA may be determined based on the ProSe authentication vector #1 for AKA, and no new function needs to be introduced, so that complexity of the network element is reduced. If an enhanced EAP-AKA' authentication mechanism is used, the EAP-request message or the AKA'-challenge message may be determined based on the ProSe authentication vector for EAP-AKA', and no new function needs to be introduced, so that complexity of the network element is reduced.

When the ProSe authentication information #2 is the ProSe authentication vector #2 for AKA, the ProSe authentication information #2 may include at least one of the following: the information used by the remote terminal to authenticate the network, for example, the RAND and the AUTN, or information used by the access and mobility management network element to authenticate the remote terminal, for example, the HXRES*. In this way, the ProSe authentication vector #2 for AKA may not only be used by the remote terminal to authenticate the network, but also be used by the access and mobility management network element to authenticate the remote terminal from a perspective of a serving network, so that authentication comprehensiveness can be improved, and ProSe relay communication security can be further ensured.

Alternatively, when the ProSe authentication information #2 is the EAP-request message or the AKA'-challenge message, the ProSe authentication information #2 may include the information used by the remote terminal to authenticate the network, for example, the RAND and the AUTN. In other words, the authentication service network element encapsulates, into the EAP-request message or the AKA'-challenge message, the information that is in the ProSe authentication information #1 and that is used by the remote terminal to authenticate the network, to send the message as a container to the access and mobility management network element, so that the access and mobility management network element directly transparently transmits the message, thereby improving processing efficiency and reducing overheads.

Optionally, the authentication service network element skips deriving a key used for communication between the remote terminal and the network, for example, K_{SEAF}, to avoid generation of redundant information and a waste of resources or impact on the existing mechanism. For example, the authentication service network element may determine, based on locally stored information (for example, the RSC or Nonce_1) or the received authentication response message #1, to skip deriving the key used for the communication between the remote terminal and the network.

In addition, for a specific implementation principle of S1404, refer to related descriptions in S811 and S812, S911 and S912, S1011 and S1012, or S1111 and S1112. Details are not described again.

S1405: The access and mobility management network element sends, to the relay terminal, the information used by the remote terminal to authenticate the network. Correspondingly, the relay terminal receives, from the access and mobility management network element, the information used by the remote terminal to authenticate the network.

The information used by the remote terminal to authenticate the network may include the EAP-request message/AKA'-challenge message that carries the RAND and the AUTN, or directly include the RAND and the AUTN, or include a container, where the container includes the RAND and the AUTN. The information used by the remote terminal to authenticate the network may be carried in a message, for example, a ProSe communication authentication request message or any other possible message. This is not specifically limited. A name of the message or carried indication information may indicate that the remote terminal needs to perform a ProSe relay communication authentication procedure. In this way, the relay terminal may send, to the remote terminal based on the message, the information used by the remote terminal to authenticate the network. This prevents the relay terminal from performing another operation, for example, autonomous authentication, and ensures ProSe relay communication authentication reliability. In addition, the message is a message protected by using a communication key. In other words, the information used by the remote terminal to authenticate the network is information protected by using the communication key. The communication key is used for the communication between the relay terminal and the network, to ensure communication security between the relay terminal and the network.

Optionally, before sending, to the relay terminal, the information used by the remote terminal to authenticate the network, the access and mobility management network element skips obtaining an ngKSI and an ABBA parameter, or the access and mobility management network element skips generating a key set identifier and an anti-degradation parameter. The access and mobility management network element does not send the ngKSI and the ABBA parameter to the relay terminal.

In addition, for a specific implementation principle of S1405, refer to related descriptions in S813, S913, S1013, or S1113. Details are not described again.

S1406: The relay terminal sends, to the remote terminal, the information used by the remote terminal to authenticate the network. Correspondingly, the remote terminal receives, from the relay terminal, the information used by the remote terminal to authenticate the network.

The information used by the remote terminal to authenticate the network may include: the EAP-request message/AKA'-challenge message that carries the RAND and the AUTN, or directly include the RAND and the AUTN, or include the container, where the container includes the RAND and the AUTN. The information used by the remote terminal to authenticate the network may be carried in a message, for example, a remote terminal authentication request message, or any other possible message. This is not specifically limited. Optionally, a name of the message or carried indication information may indicate that the remote terminal needs to perform a ProSe relay communication authentication procedure or indicate to request to authenticate the remote UE. In this way, that the relay terminal sends, to the remote terminal, the information used by the remote terminal to authenticate the network may include: The relay terminal sends, to the remote terminal based on the message, the information used by the remote terminal to authenticate the network, to ensure ProSe relay communication authentication reliability. For example, the relay terminal sends, to the remote terminal based on the name of the message or the indication information included in the message, the information used by the remote terminal to authenticate the network. In addition, the message may be the remote UE authentication request message. For a specific implementation principle, refer to related descriptions in S814, S914, S 1014, or S1114. Details are not described again.

S1407: The remote terminal sends, to the relay terminal, authentication response information determined by the remote terminal. Correspondingly, the relay terminal receives the authentication response information from the remote terminal.

The authentication response information determined by the remote terminal is used to authenticate the remote terminal, for example, is the RES or the RES*. In other words, the relay terminal may actively interact with the remote terminal, to ensure that the remote terminal can authenticate the network, and feed back the authentication response message from the remote terminal to the network, to ensure that the network can also authenticate the remote terminal. The authentication response information determined by the remote terminal may be carried in a remote terminal authentication response message or any other possible message. This is not specifically limited. The remote terminal authentication response message may be the remote UE authentication response message. For a specific implementation principle, refer to related descriptions in S815 and S816, S915 and S916, S1015 and S1016, or S1115 and S1116. Details are not described again.

Optionally, the remote terminal skips deriving a key used for communication between the remote terminal and the network, for example, K_{SEAF}.

S1408: The relay terminal sends, to the access and mobility management network element, the authentication response information determined by the remote terminal. Correspondingly, the access and mobility management network element receives, from the relay terminal, the authentication response information determined by the remote terminal.

The authentication response information determined by the remote terminal is used to authenticate the remote terminal, for example, is the RES or the RES*. The authentication response information determined by the remote terminal may be carried in a ProSe communication authentication response message or any other possible message. This is not specifically limited. The ProSe communication authentication response message is a message protected by using a communication key. In other words, the authentication response information determined by the remote terminal is information protected by using the communication key, so that communication security between the relay terminal and the network is ensured. For example, the communication key is a non-access stratum security key established between the relay terminal and the access and mobility management network element, and the non-access stratum security key may include an encryption key and an integrity protection key. In addition, for a specific implementation principle of S1408, refer to related descriptions in S817, S917, S1017, or S1117. Details are not described again.

S1409: The access and mobility management network element sends an authentication request message #2 to the authentication service network element. Correspondingly, the authentication service network element receives the authentication request message #2 from the access and mobility management network element.

The authentication request message #2 is used to request to authenticate the remote terminal. The authentication request message #2 may include at least one of the following: the authentication response information determined by the remote terminal, the RSC used to determine the ProSe key, or the random value #1 used to determine the ProSe key, and the authentication response message is used to authenticate the remote terminal. In other words, only when determining that the remote terminal is successfully authenticated, the access and mobility management network element may send, to the authentication service network element, a parameter used to derive the ProSe key, for example, the RSC and/or the random value #1, so that the necessary parameter is provided as required, and information does not need to be prestored, thereby avoiding a waste of resources. The authentication request message #2 may be the UE authentication request message #2 or the ProSe UE authentication request message #2. For a specific implementation principle, refer to related descriptions in S819, S919, S1018, or S1118. Details are not described again.

Optionally, before S1409, the authentication service network element may further store the RSC and the random value #1, so that the RSC and the random value #1 can be directly used during subsequent key derivation, and do not need to be obtained again, thereby further improving key derivation efficiency. For example, the information used to determine the ProSe key includes an intermediate key, for example, K_{AUSF}, or CK' and IK', or K_{PROSE}. When the remote terminal is successfully authenticated, the authentication service network element determines the ProSe key based on at least one of the following: the service network name, the RSC, the random value #1, a random value #2, and the intermediate key. In other words, the authentication service network element may select an appropriate parameter based on requirements such as a service scenario and key isolation, to determine the ProSe key, so that more service scenarios are applicable. For example, the ProSe key is determined based on the RSC, the random value #1, the random value #2, and the intermediate key. For example, the ProSe key is determined based on the service network name, the random value #1, the random value #2, and the intermediate key. For example, a proximity based service intermediate key is derived based on the intermediate key, the RSC, and the SUPI of the remote terminal, and the ProSe key is then determined based on the proximity based service intermediate key, the random value #1, and the random value #2. Alternatively, the ProSe key may be determined in another combination manner. This is not listed herein one by one.

S1410: The authentication service network element sends an authentication response message #2 to the access and mobility management network element. Correspondingly, the access and mobility management network element receives the authentication response message #2 sent from the authentication service network element.

The authentication response message #2 includes the ProSe key. The ProSe key is used for the communication between the relay terminal and the remote terminal. Optionally, the authentication response message #2 may further include the random value #2. The random value #2 is used to determine the ProSe key, so that when determining that the authentication succeeds, the remote terminal may directly derive the ProSe key based on the random value #2, to ensure that different keys are derived for different ProSe communication of the remote UE, and implement key isolation. The authentication request message #2 may be the foregoing UE authentication response message #2 or the foregoing ProSe UE authentication response message #2. For a specific implementation principle, refer to related descriptions in S820 and S821, S920 and S921, S1019 and S1020, or S1119 and S1120. Details are not described again.

Optionally, the authentication response message #2 may further include at least one of the following: the subscription concealed identifier SUPI of the remote terminal or an EAP success message. The EAP success message may indicate that the network successfully authenticates the remote terminal. The SUPI of the remote terminal indicates that the relay terminal needs to report information about the remote UE to the network.

S1411: The access and mobility management network element sends the ProSe key to the relay terminal. Correspondingly, the relay terminal receives the ProSe key from the access and mobility management network element.

Optionally, the access and mobility management network element may further send the SUPI of the remote terminal to the relay terminal, to indicate that the relay terminal needs to report the information about the remote UE to the network.

Optionally, the access and mobility management network element may further send the EAP success message to the relay terminal, to indicate that the network successfully authenticates the remote terminal.

For a specific implementation principle of S1411, refer to related descriptions in S822, S922, S 1021, or S1121. Details are not described again.

Then, optionally, the remote terminal and the relay terminal may derive a communication protection key for a PCS connection based on the ProSe key. For example, the remote terminal and the relay terminal may derive a session key based on the ProSe key, and the remote terminal and the relay terminal then further derive the communication protection key (for example, including the encryption key and the integrity protection key) based on the session key. This is not limited in this application.

Optionally, in a first possible application scenario, if ProSe authentication for AKA is performed, after S1408 and before S1409, the access and mobility management network element may determine, based on the authentication response information determined by the remote terminal (the XRES* derived based on the RES*) and the information used by the access and mobility management network element to authenticate the remote terminal (the HXRES*), that the remote terminal is successfully authenticated. That is, the access and mobility management network element authenticates the remote terminal from the perspective of the serving network, so that authentication comprehensiveness can be improved, and ProSe relay communication security can be further ensured. For a specific implementation principle of the first possible application scenario, also refer to related descriptions in S818 or S918. Details are not described again.

Optionally, in a second possible application scenario, after S1410, the access and mobility management network element may send the random value #2 to the relay terminal. Correspondingly, the relay terminal may receive the random value #2 from the access and mobility management network element. In this way, the relay terminal may send the random value #2 to the remote terminal, so that the remote terminal receives the random value #2 from the relay terminal, to determine the ProSe key based on at least one of the following: the service network name, the RSC, the random value #1, the random value #2, and the intermediate key. It can be learned that only after the network successfully authenticates the remote terminal, the access and mobility management network element may send, to the remote terminal, the parameter used to derive the ProSe key, namely, the random value #2. This prevents these parameters from being exposed before the authentication succeeds, and ensures communication security before the authentication succeeds. In addition, for a specific implementation principle of the second possible application scenario, also refer to related descriptions in S822 to S825, S922 to S925, S1021 to S1023, or 1121 to S1124. Details are not described again.

Optionally, in a third possible application scenario, before S1401, the access and mobility management network element determines that the remote terminal has not been authenticated or there is no key (for example, K_{AUSF}) used to derive the ProSe key. In other words, a ProSe relay communication authentication procedure is performed only when the remote terminal has not performed authentication or there is no key used to derive the ProSe key, so that a waste of resources caused by repeatedly performing the authentication procedure is avoided. Certainly, when the remote terminal has not been authenticated, the ProSe key may be derived by using an existing key (for example, K_{AUSF}) on the authentication service network element, and ProSe relay communication authentication does not need to be performed again.

Specifically, that the access and mobility management network element determines that the remote terminal has not been authenticated or there is no key used to derive the ProSe key may include: The access and mobility management network element receives remote terminal indication information from the relay terminal, where the remote terminal indication information indicates that the remote terminal has not performed authentication or there is no key used to derive the ProSe key. The access and mobility management network element determines, based on the remote terminal indication information, that ProSe relay communication authentication has not been performed on the remote terminal.

Alternatively, that the access and mobility management network element determines that the remote terminal has not been authenticated or there is no key used to derive the ProSe key may include: The access and mobility management network element sends an authentication service network element get request message to the data management network element, and receives an authentication service network element get response message from the data management network element. The authentication service network element get request message is used to request an identifier of the authentication service network element, and the authentication service network element is used for ProSe relay communication authentication performed on the remote terminal. If the authentication service network element get response message does not carry the identifier of the authentication service network element, it indicates that the remote terminal has not been authenticated or there is no key used to derive the ProSe key. The access and mobility management network element determines, based on the authentication service network element get response message, that the remote terminal has not been authenticated or there is no key used to derive the ProSe key.

It can be learned that when the remote terminal indicates whether the remote terminal has performed authentication or there is no key used to derive the ProSe key, the access and mobility management network element may determine, based on the remote terminal indication information without interacting with another network element, whether ProSe relay communication authentication is performed. Alternatively, the remote terminal may not indicate whether the remote terminal has performed ProSe relay communication authentication, and this is determined by the access and mobility management network element based on the information fed back by the data management network element. In this way, communication overheads between the remote terminal and the access and mobility management network element can be reduced, and communication efficiency can be improved.

In addition, for a specific implementation principle of the third possible application scenario, also refer to related descriptions in the foregoing Scenario 5. Details are not described again.

Optionally, in a fourth possible application scenario, before S 1403, the data management network element determines that the remote terminal has not been authenticated, or determines that there is no key used to derive the ProSe key, or determines that there is no AUSF network element serving the remote terminal. In other words, a ProSe relay communication authentication procedure is performed only when the remote terminal has not performed authentication, or there is no key used to derive the ProSe key, or there is no AUSF network element serving the remote terminal. This avoids a waste of resources caused by repeatedly performing the authentication procedure. Certainly, when the remote terminal has been authenticated, the data management network element may request the authentication service network element to use an existing key (for example, K_{AUSF}) to derive the ProSe key, and ProSe relay communication authentication does not need to be performed again.

In addition, for a specific implementation principle of the fourth possible application scenario, also refer to related descriptions in the foregoing Scenario 6. Details are not described again.

In conclusion, based on the communication method shown in any one of FIG. 8A and FIG. 8B to FIG. 14, the remote terminal and the network may authenticate each other by using the ProSe authentication information #1 provided by the data management network element. When successfully authenticating each other, the two may generate the ProSe key used for the communication between the remote UE and the relay UE, to derive the communication protection key for the PCS connection (namely, a connection between the remote UE and the relay UE) based on the ProSe key, which, for example, includes the encryption key and the integrity protection key, so that ProSe relay communication security is ensured, and a case such as user information leakage caused by an attack is avoided.

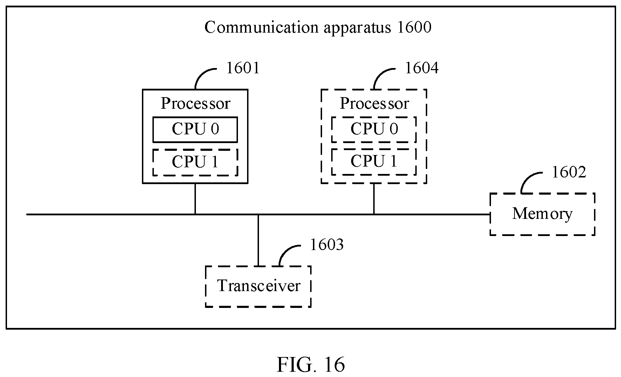

The communication methods provided in embodiments of this application are described above in detail with reference to FIG. 8A and FIG. 8B to FIG. 14. Communication apparatuses configured to perform the communication methods provided in embodiments of this application are described below in detail with reference to FIG. 15 and FIG. 16.

For example, FIG. 15 is a schematic diagram 1 of a structure of a communication apparatus according to an embodiment of this application. As shown in FIG. 15, the communication apparatus 1500 includes a receiving module 1501 and a sending module 1502. For ease of description, FIG. 15 shows only main components of the communication apparatus.

In some embodiments, the communication apparatus 1500 may be used in the communication system shown in FIG. 7, and perform functions of the AUSF network element in the communication methods shown in FIG. 8A and FIG. 8B to FIG. 13A and FIG. 13B; or is used in the communication system shown in FIG. 7, and perform functions of the authentication service network element in the communication method shown in FIG. 14.

The sending module 1502 is configured to send an authentication request message #1 to a data management network element. The receiving module 1501 is configured to receive an authentication response message #1 from the data management network element. The authentication request message #1 is used to request to authenticate a remote terminal, the authentication response message #1 includes proximity based service ProSe authentication information #1, and the ProSe authentication information #1 includes at least one of the following: information used by the remote terminal to authenticate a network or information used to authenticate the remote terminal. In this way, when the remote terminal successfully authenticates the network, the receiving module 1501 is further configured to receive an authentication request message #2 from an access and mobility management network element, and when the remote terminal is successfully authenticated, the sending module 1502 is further configured to send an authentication response message #2 to the access and mobility management network element. The authentication request message #2 is used to request to authenticate the remote terminal; and the authentication response message #2 includes a ProSe key, and the ProSe key is used for communication between the relay terminal and the remote terminal.

In a possible design solution, the ProSe authentication information #1 may be at least one of the following: a ProSe authentication vector #1 for 5th generation communication system authentication and key agreement AKA, or a ProSe authentication vector for extensible authentication protocol EAP-AKA'.

Optionally, the ProSe authentication vector #1 for AKA or the ProSe authentication vector for EAP-AKA' may include at least one of the following: the information used by the remote terminal to authenticate the network, information used by the authentication service network element to authenticate the remote terminal, or information used to determine the ProSe key.

Optionally, the receiving module 1501 is further configured to receive an authentication request message #3 from the access and mobility management network element before the sending module 1502 sends the authentication request message #1 to the data management network element. Correspondingly, after the authentication service network element receives the authentication response message #1 from the data management network element, the sending module 1502 is further configured to send an authentication response message #3 to the access and mobility management network element before the receiving module 1501 receives the authentication request message #2 from the access and mobility management network element. The authentication response message #3 may include ProSe authentication information #2, and the ProSe authentication information #2 includes the information used by the remote terminal to authenticate the network.

Further, the ProSe authentication information #2 may be determined based on the ProSe authentication information #1. The ProSe authentication information #2 may be at least one of the following: a ProSe authentication vector #2 for AKA, or an EAP-request message or an AKA'-challenge message. The ProSe authentication vector #2 for AKA may be determined based on the ProSe authentication vector #1 for AKA. The EAP-request message or the AKA'-challenge message may be determined based on the ProSe authentication vector for EAP-AKA'.

Further, the ProSe authentication vector #2 for AKA may include at least one of the following: the information used by the remote terminal to authenticate the network, or information used by the access and mobility management network element to authenticate the remote terminal.

Further, the EAP-request message or the AKA'-challenge message may include the information used by the remote terminal to authenticate the network.

Optionally, the authentication request message #3 may be used to request to authenticate the remote terminal.

Further, the authentication request message #3 may include at least one of the following: a subscription concealed identifier SUCI of the remote terminal, a service network name, a relay service code RSC, a random value #1, or ProSe relay communication indication information. Any one of the service network name, the RSC, or the ProSe relay communication indication information may indicate that the authentication is ProSe relay communication authentication. Any one of the service network name, the RSC, or the random value #1 may be used to determine the ProSe key.

Further, the communication apparatus 1500 may further include a processing module (not shown in FIG. 15). Before the sending module 1502 sends the authentication response message #2 to the access and mobility management network element, if the authentication request message #3 includes the RSC and the random value #1, the processing module is configured to store the RSC and the random value #1.

Further, the information used to determine the ProSe key includes an intermediate key. Before the sending module 1502 sends the authentication response message #2 to the access and mobility management network element, when the remote terminal is successfully authenticated, the processing module is further configured to determine the ProSe key based on at least one of the following: the service network name, the RSC, the random value #1, a random value #2, and the intermediate key.

In a possible design solution, the authentication request message #2 may include at least one of the following: authentication response information determined by the remote terminal, an RSC used to determine a ProSe key, or a random value #1 used to determine a ProSe key, and the authentication response message is used to authenticate the remote terminal.

Optionally, the authentication response message #2 may include a random value #2. The random value #2 is used to determine the ProSe key.

Further, the authentication response message #2 may further include at least one of the following: an SUPI of the remote terminal or an EAP success message.

In a possible design solution, the authentication service network element skips deriving a key used for communication between the remote terminal and the network.

Optionally, the receiving module 1501 and the sending module 1502 may alternatively be integrated into one module, for example, a transceiver module (not shown in FIG. 15). The transceiver module is configured to implement a sending function and a receiving function of the communication apparatus 1500.

Optionally, the communication apparatus 1500 may further include a storage module (not shown in FIG. 15). The storage module stores a program or instructions. When the processing module executes the program or the instructions, the communication apparatus 1500 is enabled to perform functions of the AUSF network element in the communication method shown in any one of FIG. 8A and FIG. 8B to FIG. 13A and FIG. 13B or functions of the authentication service network element in the communication method shown in FIG. 14.

It should be understood that the processing module in the communication apparatus 1500 may be implemented by a processor or a processor-related circuit component, and may be a processor or a processing unit; and the transceiver module may be implemented by a transceiver or a transceiver-related circuit component, and may be a transceiver or a transceiver unit.

It should be noted that the communication apparatus 1500 may be a network device, for example, the AUSF network element or the authentication service network element, or may be a chip (system) or another component or assembly that may be disposed in a network device, or may be an apparatus including a network device. This is not limited in this application.

In addition, for technical effects of the communication apparatus 1500, refer to technical effects of the communication method shown in any one of FIG. 8A and FIG. 8B to FIG. 14. Details are not described herein again.

In some other embodiments, the communication apparatus 1500 may be used in the communication system shown in FIG. 7, and perform functions of the relay AMF network element in the communication methods shown in FIG. 8A and FIG. 8B to FIG. 13A and FIG. 13B; or is used in the communication system shown in FIG. 7, and perform functions of the access and mobility management network element in the communication method shown in FIG. 14.

The sending module 1502 is configured to send an authentication request message #3 to an authentication service network element, and the receiving module 1501 is configured to receive an authentication response message #3 from the authentication service network element. The authentication response message #3 includes ProSe authentication information #2, and the ProSe authentication information #2 includes information used by a remote terminal to authenticate a network. In this way, when the remote terminal successfully authenticates the network, the sending module 1502 is further configured to send an authentication request message #2 to the authentication service network element, and when the remote terminal is successfully authenticated, the receiving module 1501 is further configured to receive an authentication response message #2 from the authentication service network element, so that the sending module 1502 sends a ProSe key to a relay terminal. The authentication request message #2 is used to request to authenticate the remote terminal. The authentication response message #2 includes a ProSe key, and the ProSe key is used for communication between the relay terminal and the remote terminal.

In a possible design solution, the ProSe authentication information #2 may be at least one of the following: a ProSe authentication vector #2 for AKA, or an EAP-request message or an AKA'-challenge message.

Optionally, the ProSe authentication vector #2 for AKA may include at least one of the following: the information used by the remote terminal to authenticate the network, or information used by the access and mobility management network element to authenticate the remote terminal.

Optionally, the EAP-request message or the AKA'-challenge message may include the information used by the remote terminal to authenticate the network.

In a possible design solution, after that the receiving module 1501 receives an authentication response message #3 from the authentication service network element, and before that the sending module 1502 sends an authentication request message #2 to the authentication service network element, the sending module 1502 is further configured to send, to the relay terminal, the information used by the remote terminal to authenticate the network, and the receiving module 1501 is further configured to receive, from the relay terminal, authentication response information determined by the remote terminal. The authentication response information is used to authenticate the remote terminal.

Optionally, when the ProSe authentication information #2 may include the information used by the access and mobility management network element to authenticate the remote terminal, the communication apparatus 1500 may further include a processing module (not shown in FIG. 15). After that the receiving module 1501 receives a remote terminal authentication response message from the relay terminal, and before that the sending module 1502 sends an authentication request message #2 to the authentication service network element, the processing module is further configured to determine, based on the authentication response message information by the remote terminal and the information used by the access and mobility management network element to authenticate the remote terminal, that the remote terminal is successfully authenticated.

Optionally, the information used by the remote terminal to authenticate the network and the authentication response information determined by the remote terminal are information protected by using a communication key, and the communication key is used for communication between the relay terminal and the network.

Optionally, the authentication request message #2 may include at least one of the following: the authentication response information determined by the remote terminal, an RSC used to determine a ProSe key, or a random value #1 used to determine the ProSe key, and the authentication response message is used to authenticate the remote terminal.

Optionally, the authentication response message #2 may include a random value #2, and the random value #2 is used to determine the ProSe key.

Further, the authentication response message #2 may further include at least one of the following: an SUPI of the remote terminal or an EAP success message.

Further, after that the receiving module 1501 receives an authentication response message #2 from the authentication service network element, the sending module 1502 is further configured to send the random value #2 to the relay terminal.

In a possible design solution, before that the sending module 1502 sends an authentication request message #3 to an authentication service network element, the processing module is further configured to determine that ProSe relay communication authentication has not been performed on the remote terminal.

Optionally, the receiving module 1501 is further configured to receive remote terminal indication information from the relay terminal, where the remote terminal indication information indicates that the remote terminal has not performed ProSe relay communication authentication. The processing module is further configured to determine, based on the remote terminal indication information, that ProSe relay communication authentication has not been performed on the remote terminal.

Optionally, the sending module 1502 is further configured to send an authentication service network element get request message to the data management network element, and the receiving module 1501 is further configured to receive an authentication service network element get response message from the data management network element. The authentication service network element get request message is used to request an identifier of the authentication service network element, and the authentication service network element is used for ProSe relay communication authentication performed on the remote terminal. If the authentication service network element get response message does not carry the identifier of the authentication service network element, it indicates that ProSe relay communication authentication has not been performed on the remote terminal. In this way, the processing module is further configured to determine, based on the authentication service network element get response message, that ProSe relay communication authentication has not been performed on the remote terminal.

Optionally, the receiving module 1501 and the sending module 1502 may alternatively be integrated into one module, for example, a transceiver module (not shown in FIG. 15). The transceiver module is configured to implement a sending function and a receiving function of the communication apparatus 1500.

Optionally, the communication apparatus 1500 may further include a storage module (not shown in FIG. 15). The storage module stores a program or instructions. When the processing module executes the program or the instructions, the communication apparatus 1500 is enabled to perform functions of the relay AMF network element in the communication method shown in any one of FIG. 8A and FIG. 8B to FIG. 13A and FIG. 13B or functions of the access and mobility management network element in the communication method shown in FIG. 14.

It should be understood that the processing module in the communication apparatus 1500 may be implemented by a processor or a processor-related circuit component, and may be a processor or a processing unit; and the transceiver module may be implemented by a transceiver or a transceiver-related circuit component, and may be a transceiver or a transceiver unit.

It should be noted that the communication apparatus 1500 may be a network device, for example, the relay AMF network element or the access and mobility management network element, or may be a chip (system) or another component or assembly that may be disposed in a network device, or may be an apparatus including a network device. This is not limited in this application.

In addition, for technical effects of the communication apparatus 1500, refer to technical effects of the communication method shown in any one of FIG. 8A and FIG. 8B to FIG. 14. Details are not described herein again.

In still some embodiments, the communication apparatus 1500 may be used in the communication system shown in FIG. 7, and perform functions of the UDM network element in the communication methods shown in FIG. 8A and FIG. 8B to FIG. 13A and FIG. 13B; or is used in the communication system shown in FIG. 7, and perform functions of the data management network element in the communication method shown in FIG. 14.

The receiving module 1501 is configured to receive an authentication request message #1 from an authentication service network element, and the sending module 1502 is configured to send an authentication response message #1 to the authentication service network element. The authentication response message #1 includes ProSe authentication information #1. The ProSe authentication information #1 includes at least one of the following: information used by a remote terminal to authenticate a network, or information used to authenticate the remote terminal.

In a possible design solution, the ProSe authentication information #1 may be at least one of the following: a ProSe authentication vector #1 for AKA or a ProSe authentication vector for EAP-AKA'.

Optionally, the ProSe authentication vector #1 for AKA or the ProSe authentication vector for EAP-AKA' may include at least one of the following: the information used by the remote terminal to authenticate the network, information used by the authentication service network element to authenticate the remote terminal, or information used to determine a ProSe key.

Optionally, before that the receiving module 1501 receives an authentication request message #1 from an authentication service network element, the method according to the third aspect may further include: The receiving module 1501 is further configured to receive an authentication service network element get request message from an access and mobility management network element, and the sending module 1502 is further configured to send an authentication service network element get response message to the access and mobility management network element. The authentication service network element get request message is used to request an identifier of the authentication service network element, and the authentication service network element is used for ProSe relay communication authentication performed on the remote terminal. If the authentication service network element get response message does not carry the identifier of the authentication service network element, it indicates that ProSe relay communication authentication has not been performed on the remote terminal.

In a possible design solution, the communication apparatus 1500 may further include a processing module (not shown in FIG. 15). Before that the sending module 1502 sends an authentication response message #1 to the authentication service network element, the processing module is further configured to determine that the remote terminal is authorized to obtain a relay service.

In a possible design solution, before that the sending module 1502 sends an authentication response message #1 to the authentication service network element, the processing module is further configured to determine the ProSe authentication information #1 based on the authentication request message #1.

In a possible design solution, before that the sending module 1502 sends an authentication response message #1 to the authentication service network element, the processing module is further configured to determine that ProSe relay communication authentication has not been performed on the remote terminal.

Optionally, the receiving module 1501 and the sending module 1502 may alternatively be integrated into one module, for example, a transceiver module (not shown in FIG. 15). The transceiver module is configured to implement a sending function and a receiving function of the communication apparatus 1500.

Optionally, the communication apparatus 1500 may further include a storage module (not shown in FIG. 15). The storage module stores a program or instructions. When the processing module executes the program or the instructions, the communication apparatus 1500 is enabled to perform functions of the UDM network element in the communication method shown in any one of FIG. 8A and FIG. 8B to FIG. 13A and FIG. 13B or functions of the data management network element in the communication method shown in FIG. 14.

It should be understood that the processing module in the communication apparatus 1500 may be implemented by a processor or a processor-related circuit component, and may be a processor or a processing unit; and the transceiver module may be implemented by a transceiver or a transceiver-related circuit component, and may be a transceiver or a transceiver unit.

It should be noted that the communication apparatus 1500 may be a network device, for example, the UDM network element or the data management network element, or may be a chip (system) or another component or assembly that may be disposed in a network device, or may be an apparatus including a network device. This is not limited in this application.

In addition, for technical effects of the communication apparatus 1500, refer to technical effects of the communication method shown in any one of FIG. 8A and FIG. 8B to FIG. 14. Details are not described herein again.

In yet some embodiments, the communication apparatus 1500 may be used in the communication system shown in FIG. 7, and perform functions of the relay UE in the communication methods shown in FIG. 8A and FIG. 8B to FIG. 13A and FIG. 13B; or is used in the communication system shown in FIG. 7, and perform functions of the relay terminal in the communication method shown in FIG. 14.

The receiving module 1501 is configured to receive, from an access and mobility management network element, information used by a remote terminal to authenticate a network, and the sending module 1502 is configured to send, to the access and mobility management network element, authentication response information determined by the remote terminal. The authentication response information is used to authenticate the remote terminal. In this way, the receiving module 1501 is further configured to receive a ProSe key from the access and mobility management network element, where the ProSe key is used for communication between the relay terminal and the remote terminal.

In a possible design solution, the information used by the remote terminal to authenticate the network and the authentication response information determined by the remote terminal are information protected by using a communication key, and the communication key is used for communication between the relay terminal and the network.

In a possible design solution, after that the receiving module 1501 receives, from an access and mobility management network element, information used by a remote terminal to authenticate a network, and before that the sending module 1502 sends, to the access and mobility management network element, authentication response information determined by the remote terminal, the sending module 1502 is further configured to send, to the remote terminal, the information used by the remote terminal to authenticate the network, and the receiving module 1501 is further configured to receive, from the remote terminal, the authentication response information determined by the remote terminal.

Optionally, the information used by the remote terminal to authenticate the network may be carried in a message, and a name of the message or carried indication information may indicate that the remote terminal needs to perform a ProSe relay communication authentication procedure. In this way, the processing module is further configured to control, based on the message, the sending module 1502 to send, to the remote terminal, the information used by the remote terminal to authenticate the network.

In a possible design solution, after the sending module 1502 sends a ProSe communication authentication response message to the access and mobility management network element, the receiving module 1501 is further configured to receive a random value #2 from the access and mobility management network element, and the sending module is further configured to send the random value #2 to the remote terminal. The random value #2 is used to determine the ProSe key, and the ProSe key is used for the communication between the relay terminal and the remote terminal.

Optionally, the receiving module 1501 and the sending module 1502 may alternatively be integrated into one module, for example, a transceiver module (not shown in FIG. 15). The transceiver module is configured to implement a sending function and a receiving function of the communication apparatus 1500.

Optionally, the communication apparatus 1500 may further include a processing module (not shown in FIG. 15). The processing module is configured to implement a processing function of the communication apparatus 1500.

Optionally, the communication apparatus 1500 may further include a storage module (not shown in FIG. 15). The storage module stores a program or instructions. When the processing module executes the program or the instructions, the communication apparatus 1500 is enabled to perform functions of the relay UE in the communication method shown in any one of FIG. 8A and FIG. 8B to FIG. 13A and FIG. 13B or functions of the relay terminal in the communication method shown in FIG. 14.

It should be understood that the processing module in the communication apparatus 1500 may be implemented by a processor or a processor-related circuit component, and may be a processor or a processing unit; and the transceiver module may be implemented by a transceiver or a transceiver-related circuit component, and may be a transceiver or a transceiver unit.

It should be noted that the communication apparatus 1500 may be a terminal, for example, the relay UE or the relay terminal, or may be a chip (system) or another component or assembly that may be disposed in a terminal, or may be an apparatus including a terminal. This is not limited in this application.

In addition, for technical effects of the communication apparatus 1500, refer to technical effects of the communication method shown in any one of FIG. 8A and FIG. 8B to FIG. 14. Details are not described herein again.

In further some embodiments, the communication apparatus 1500 may be used in the communication system shown in FIG. 7, and perform functions of the remote UE in the communication methods shown in FIG. 8A and FIG. 8B to FIG. 13A and FIG. 13B; or is used in the communication system shown in FIG. 7, and perform functions of the remote terminal in the communication method shown in FIG. 14.

The receiving module 1501 is configured to receive, from a relay terminal, information used by a remote terminal to authenticate a network. In this way, when it is determined that the network is successfully authenticated, the sending module 1502 is configured to send, to the relay terminal, authentication response information determined by the remote terminal, where the authentication response information is used to authenticate the remote terminal.

In a possible design solution, the communication apparatus 1500 may further include a processing module (not shown in FIG. 15). After that the sending module 1502 sends, to the relay terminal, authentication response information determined by the remote terminal, the receiving module 1501 is further configured to receive a random value #2 from the relay terminal, and the processing module is further configured to determine a ProSe key based on at least one of the following: a service network name, an RSC, a random value #1, the random value #2, and an intermediate key.

Optionally, the receiving module 1501 and the sending module 1502 may alternatively be integrated into one module, for example, a transceiver module (not shown in FIG. 15). The transceiver module is configured to implement a sending function and a receiving function of the communication apparatus 1500.

Optionally, the communication apparatus 1500 may further include a storage module (not shown in FIG. 15). The storage module stores a program or instructions. When the processing module executes the program or the instructions, the communication apparatus 1500 is enabled to perform functions of the remote UE in the communication method shown in any one of FIG. 8A and FIG. 8B to FIG. 13A and FIG. 13B or functions of the remote terminal in the communication method shown in FIG. 14.

It should be understood that the processing module in the communication apparatus 1500 may be implemented by a processor or a processor-related circuit component, and may be a processor or a processing unit; and the transceiver module may be implemented by a transceiver or a transceiver-related circuit component, and may be a transceiver or a transceiver unit.

It should be noted that the communication apparatus 1500 may be a terminal, for example, the remote UE or the remote terminal, or may be a chip (system) or another component or assembly that may be disposed in a terminal, or may be an apparatus including a terminal. This is not limited in this application.

In addition, for technical effects of the communication apparatus 1500, refer to technical effects of the communication method shown in any one of FIG. 8A and FIG. 8B to FIG. 14. Details are not described herein again.

For example, FIG. 16 is a schematic diagram 2 of a structure of a communication apparatus according to an embodiment of this application. The communication apparatus may be a terminal or a network device, or may be a chip (system) or another component or assembly that may be disposed in the terminal or the network device. As shown in FIG. 16, the communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected to the memory 1602 and the transceiver 1603 through a communication bus.

Each component of the communication apparatus 1600 is described below in detail with reference to FIG. 16.

The processor 1601 is a control center of the communication apparatus 1600, and may be one processor, or may be a collective term of a plurality of processing elements. For example, the processor 1601 is one or more central processing units (central processing units, CPUs), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

Optionally, the processor 1601 may run or execute a software program stored in the memory 1602, and invoke data stored in the memory 1602, to perform various functions of the communication apparatus 1600, for example, to perform the communication methods shown in FIG. 8A and FIG. 8B to FIG. 14.

During specific implementation, in an embodiment, the processor 1601 may include one or more CPUs, such as a CPU 0 and a CPU 1 shown in FIG. 16.

During specific implementation, in an embodiment, the communication apparatus 1600 may alternatively include a plurality of processors, such as the processor 1601 and the processor 1604 shown in FIG. 16. Each of the processors may be a single-core processor (single-CPU), or may be a multi-core processor (multi-CPU). The processor herein may be one or more devices, circuits, and/or processing cores configured to process data (for example, computer program instructions).

The memory 1602 is configured to store the software program for executing the solutions in this application, and the processor 1601 controls execution. For a specific implementation, refer to the foregoing method embodiments. Details are not described herein again.

Optionally, the memory 1602 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that is accessible by a computer, but is not limited thereto. The memory 1602 may be integrated with the processor 1601, or may exist independently, and is coupled to the processor 1601 through an interface circuit (not shown in FIG. 16) of the communication apparatus 1600. This is not specifically limited in this embodiment of this application.

The transceiver 1603 is configured to communicate with another communication apparatus. For example, the communication apparatus 1600 is a terminal, and the transceiver 1603 may be configured to communicate with a network device or communicate with another terminal device. For another example, the communication apparatus 1600 is a network device, and the transceiver 1603 may be configured to communicate with a terminal or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in this embodiment of this application.

It should be noted that, the structure of the communication apparatus 1600 shown in FIG. 16 does not constitute a limitation on the communication apparatus. An actual communication apparatus may include more or fewer components than those shown in the figure, combine some components, or have different component arrangement.

In addition, for technical effects of the communication apparatus 1600, refer to the technical effects of the communication methods in the foregoing method embodiments. Details are not described herein again.

An embodiment of this application provides a communication system. The communication system includes one or more terminals in the foregoing method embodiments and one or more network devices in the foregoing method embodiments.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof refers to any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one place, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by an authentication service network element, an authentication request message #1 to a data management network element, wherein the authentication request message #1 is used to request to authenticate a remote terminal;
receiving, by the authentication service network element, an authentication response message #1 from the data management network element, wherein the authentication response message #1 comprises proximity based service ProSe authentication information #1, and the ProSe authentication information #1 comprises at least one of the following: information used by the remote terminal to authenticate a network or information used to authenticate the remote terminal;
receiving, by the authentication service network element, an authentication request message #2 from an access and mobility management network element when the remote terminal successfully authenticates the network, wherein the authentication request message #2 is used to request to authenticate the remote terminal; and
sending, by the authentication service network element, an authentication response message #2 to the access and mobility management network element when the remote terminal is successfully authenticated, wherein the authentication response message #2 comprises a ProSe key, and the ProSe key is used for communication between a relay terminal and the remote terminal.

2. The method according to claim 1, wherein the ProSe authentication information #1 is at least one of the following: a ProSe authentication vector #1 for authentication and key agreement AKA or a ProSe authentication vector for extensible authentication protocol EAP-AKA'.

3. The method according to claim 2, wherein the ProSe authentication vector #1 for AKA or the ProSe authentication vector for EAP-AKA' comprises at least one of the following: the information used by the remote terminal to authenticate the network, information used by the authentication service network element to authenticate the remote terminal, or information used to determine the ProSe key.

4. The method according to claim 2 or 3, wherein before the sending, by an authentication service network element, an authentication request message #1 to a data management network element, the method further comprises:
receiving, by the authentication service network element, an authentication request message #3 from the access and mobility management network element; and
correspondingly, after the receiving, by the authentication service network element, an authentication response message #1 from the data management network element, and before the receiving, by the authentication service network element, an authentication request message #2 from an access and mobility management network element, the method further comprises:
sending, by the authentication service network element, an authentication response message #3 to the access and mobility management network element, wherein the authentication response message #3 comprises ProSe authentication information #2, and the ProSe authentication information #2 comprises the information used by the remote terminal to authenticate the network.

5. The method according to claim 4, wherein the ProSe authentication information #2 is determined based on the ProSe authentication information #1, wherein the ProSe authentication information #2 is at least one of the following: a ProSe authentication vector #2 for AKA, or an EAP-request message or an AKA'-challenge message; and the ProSe authentication vector #2 for AKA is determined based on the ProSe authentication vector #1 for AKA, and the EAP-request message or the AKA'-challenge message is determined based on the ProSe authentication vector for EAP-AKA'.

6. The method according to claim 5, wherein the ProSe authentication vector #2 for AKA comprises information used by the access and mobility management network element to authenticate the remote terminal.

7. The method according to any one of claims 4 to 6, wherein the authentication request message #3 is used to request to authenticate the remote terminal.

8. The method according to claim 7, wherein the authentication request message #3 comprises at least one of the following: a subscription concealed identifier SUCI of the remote terminal, a service network name, a relay service code RSC, a random value #1, or ProSe relay communication indication information; any one of the service network name, the RSC, or the ProSe relay communication indication information indicates that the authentication is ProSe relay communication authentication; and any one of the service network name, the RSC, or the random value #1 is used to determine the ProSe key.

9. The method according to claim 8, wherein before the sending, by the authentication service network element, an authentication response message #2 to the access and mobility management network element, the method further comprises:
if the authentication request message #3 comprises the RSC and the random value #1, storing, by the authentication service network element, the RSC and the random value #1.

10. The method according to claim 9, wherein the information used to determine the ProSe key comprises an intermediate key, and before the sending, by the authentication service network element, an authentication response message #2 to the access and mobility management network element, the method further comprises:
when the remote terminal is successfully authenticated, determining, by the authentication service network element, the ProSe key based on at least one of the following: the service network name, the RSC, the random value #1, a random value #2, and the intermediate key.

11. The method according to any one of claims 1 to 7, wherein the authentication request message #2 comprises at least one of the following: an authentication response information determined by the remote terminal, an RSC used to determine the ProSe key, or a random value #1 used to determine the ProSe key, and the authentication response message is used to authenticate the remote terminal.

12. The method according to any one of claims 1 to 9 and 11, wherein the authentication response message #2 comprises a random value #2, and the random value #2 is used to determine the ProSe key.

13. The method according to claim 12, wherein the authentication response message #2 further comprises at least one of the following: a subscription concealed identifier SUPI of the remote terminal or an EAP success message.

14. The method according to any one of claims 1 to 7, wherein the authentication request message #1 comprises at least one of the following: an SUCI of the remote terminal or ProSe relay communication indication information, and the ProSe relay communication indication information indicates that the authentication is ProSe relay communication authentication.

15. The method according to any one of claims 1 to 14, comprising: skipping, by the authentication service network element, deriving a key used for communication between the remote terminal and the network.

16. A communication method, wherein the method comprises:
receiving, by a relay terminal from an access and mobility management network element, information used by a remote terminal to authenticate a network;
sending, by the relay terminal to the access and mobility management network element, authentication response information determined by the remote terminal, wherein the authentication response information is used to authenticate the remote terminal; and
receiving, by the relay terminal, a ProSe key from the access and mobility management network element, wherein the ProSe key is used for communication between the relay terminal and the remote terminal.

17. The method according to claim 16, wherein the information used by the remote terminal to authenticate the network and the authentication response information determined by the remote terminal are information protected by using a communication key, and the communication key is used for communication between the relay terminal and the network.

18. The method according to claim 16 or 17, wherein after the receiving, by a relay terminal from an access and mobility management network element, information used by a remote terminal to authenticate a network, and before the sending, by the relay terminal to the access and mobility management network element, authentication response information determined by the remote terminal, the method further comprises:
sending, by the relay terminal to the remote terminal, the information used by the remote terminal to authenticate the network; and
receiving, by the relay terminal, the authentication response information from the remote terminal.

19. The method according to claim 18, wherein the information used by the remote terminal to authenticate the network is carried in a message, and the sending, by the relay terminal to the remote terminal, the information used by the remote terminal to authenticate the network comprises:
sending, by the relay terminal to the remote terminal based on the message, the information used by the remote terminal to authenticate the network.

20. The method according to any one of claims 16 to 19, wherein after the sending, by the relay terminal to the access and mobility management network element, authentication response information determined by the remote terminal, the method further comprises:
receiving, by the relay terminal, a random value #2 from the access and mobility management network element; and
sending, by the relay terminal, the random value #2 to the remote terminal, wherein the random value #2 is used to determine the ProSe key.

21. A communication method, wherein the method comprises:
receiving, by a remote terminal from a relay terminal, information used by the remote terminal to authenticate a network; and
when determining that the network is successfully authenticated, sending, by the remote terminal to the relay terminal, authentication response information determined by the remote terminal, wherein the authentication response information is used to authenticate the remote terminal.

22. The method according to claim 21, wherein after the sending, by the remote terminal to the relay terminal, authentication response information determined by the remote terminal, the method further comprises:
receiving, by the remote terminal, a random value #2 from the relay terminal; and
determining, by the remote terminal, a ProSe key based on at least one of the following: a service network name, an RSC, a random value #1, the random value #2, and an intermediate key, wherein the ProSe key is used for communication between the relay terminal and the remote terminal.

23. A communication method, wherein the method comprises:
receiving, by a data management network element, an authentication request message #1 from an authentication service network element, wherein the authentication request message #1 is used to request to authenticate the remote terminal; and
sending, by the data management network element, an authentication response message #1 to the authentication service network element, wherein the authentication response message #1 comprises proximity based service ProSe authentication information #1; and the ProSe authentication information #1 comprises at least one of the following: information used by the remote terminal to authenticate a network or information used to authenticate the remote terminal.

24. The method according to claim 23, wherein the ProSe authentication information #1 is at least one of the following: a ProSe authentication vector #1 for authentication and key agreement AKA or a ProSe authentication vector for extensible authentication protocol EAP-AKA'.

25. The method according to claim 24, wherein the ProSe authentication vector #1 for AKA or the ProSe authentication vector for EAP-AKA' comprises at least one of the following: the information used by the remote terminal to authenticate the network, information used by the authentication service network element to authenticate the remote terminal, or information used to determine a ProSe key.

26. The method according to any one of claims 23 to 25, wherein before the sending, by the data management network element, an authentication response message #1 to the authentication service network element, the method further comprises:
determining, by the data management network element, that the remote terminal is authorized to obtain a relay service.

27. A communication method, wherein the method comprises:
sending, by an authentication service network element, an authentication request message #1 to a data management network element, wherein the authentication request message #1 is used to request to authenticate a remote terminal;
receiving, by the data management network element, the authentication request message #1 from the authentication service network element, and sending an authentication response message #1 to the authentication service network element, wherein the authentication response message #1 comprises proximity based service ProSe authentication information #1, and the ProSe authentication information #1 comprises at least one of the following: information used by the remote terminal to authenticate a network or information used to authenticate the remote terminal;
receiving, by the authentication service network element, the authentication response message #1 from the data management network element;
sending, by the access and mobility management network element, an authentication request message #2 to the authentication service network element when the remote terminal successfully authenticates the network, wherein the authentication request message #2 is used to request to authenticate the remote terminal;
receiving, by the authentication service network element, the authentication request message #2 from the access and mobility management network element;
sending, by the authentication service network element, an authentication response message #2 to the access and mobility management network element when the remote terminal is successfully authenticated, wherein the authentication response message #2 comprises a ProSe key, and the ProSe key is used for communication between a relay terminal and the remote terminal; and
receiving, by the access and mobility management network element, the authentication response message #2 from the authentication service network element.

28. The method according to claim 27, wherein the ProSe authentication information #1 is at least one of the following: a ProSe authentication vector #1 for authentication and key agreement AKA or a ProSe authentication vector for extensible authentication protocol EAP-AKA'.

29. The method according to claim 28, wherein the ProSe authentication vector #1 for AKA or the ProSe authentication vector for EAP-AKA' comprises at least one of the following: the information used by the remote terminal to authenticate the network, information used by the authentication service network element to authenticate the remote terminal, or information used to determine the ProSe key.

30. A communication method, wherein the method comprises:
receiving, by a relay terminal from an access and mobility management network element, information used by a remote terminal to authenticate a network;
receiving, by the remote terminal from the relay terminal, the information used by the remote terminal to authenticate the network;
when determining that the network is successfully authenticated, sending, by the remote terminal to the relay terminal, authentication response information determined by the remote terminal, wherein the authentication response information is used to authenticate the remote terminal; and
sending, by the relay terminal to the access and mobility management network element, the authentication response information determined by the remote terminal, and receiving a proximity based service ProSe key from the access and mobility management network element, wherein the ProSe key is used for communication between the relay terminal and the remote terminal.

31. The method according to claim 30, wherein the information used by the remote terminal to authenticate the network and the authentication response information determined by the remote terminal are information protected by using a communication key, and the communication key is used for communication between the relay terminal and the network.

32. A communication apparatus, wherein the communication apparatus comprises modules configured to perform the communication method according to any one of claims 1 to 15.

33. A communication apparatus, wherein the communication apparatus comprises modules configured to perform the communication method according to any one of claims 16 to 20.

34. A communication apparatus, wherein the communication apparatus comprises modules configured to perform the communication method according to claim 21 or 22.

35. A communication apparatus, wherein the communication apparatus comprises modules configured to perform the communication method according to claim 23 or 26.

36. A communication apparatus, wherein the communication apparatus comprises a processor; and
the processor is configured to perform the communication method according to any one of claims 1 to 26.

37. A communication apparatus, wherein the communication apparatus comprises a processor and a memory; and the memory is configured to store computer instructions, and when the processor executes the instructions, the communication apparatus is enabled to perform the communication method according to any one of claims 1 to 26.

38. A communication system, wherein the communication system comprises the authentication service network element according to any one of claims 1 to 13, the relay terminal according to any one of claims 13 to 18, and the remote terminal according to claim 21 or 22.

39. A computer-readable storage medium, wherein the computer-readable storage medium comprises a computer program or instructions, and when the computer program or the instructions are run on a computer, the computer is enabled to perform the communication method according to any one of claims 1 to 26.

40. A computer program product, wherein the computer program product comprises a computer program or instructions, and when the computer program or the instructions are run on a computer, the computer is enabled to perform the communication method according to any one of claims 1 to 26.
